(19) **Europäisches Patentamt / European Patent Office / Office européen des brevets**

(11) **EP 4 220 145 A1**

(12) # EUROPEAN PATENT APPLICATION

(43) Date of publication:
**02.08.2023 Bulletin 2023/31**

(21) Application number: **23162235.8**

(22) Date of filing: **13.04.2021**

(51) International Patent Classification (IPC):
**G01N 27/414** *(2006.01)*   **G01N 21/552** *(2014.01)*

(52) Cooperative Patent Classification (CPC):
**G01N 27/4145; G01N 21/553; G01N 27/4146;**
G01N 21/554

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.05.2020 AT 503962020**

(62) Document number(s) of the earlier application(s) in
accordance with Art. 76 EPC:
**21720387.6 / 4 147 036**

(71) Applicant: **AIT Austrian Institute of Technology
GmbH
1210 Wien (AT)**

(72) Inventors:
• **Bintinger, Johannes
  1100 Wien (AT)**
• **Aspermair, Patrik
  1090 Wien (AT)**
• **Fossati, Stefan
  1030 Wien (AT)**

• **Hasler, Roger
  3400 Klosterneuburg (AT)**
• **Ramach, Ulrich
  1090 Wien (AT)**
• **Reiner-Rozman, Ciril
  3430 Tulln (AT)**
• **Dostalek, Jakub
  1190 Wien (AT)**
• **Knoll, Wolfgang
  1220 Wien (AT)**

(74) Representative: **Wildhack & Jellinek
Patentanwälte OG
Landstraßer Hauptstraße 50
1030 Wien (AT)**

Remarks:
This application was filed on 16-03-2023 as a
divisional application to the application mentioned
under INID code 62.

(54) **SENSOR ARRANGEMENT FOR SIMULTANEOUS MEASUREMENT OF OPTICAL AND ELECTRICAL PROPERTIES**

(57)    The invention relates to a sensor arrangement (100) for simultaneous measurement of optical and electrical properties of a dielectric medium to be investigated, as well as the analytes contained therein, comprising a field-effect transistor (1) and a surface plasmon resonance sensor (2),
- wherein the sensor arrangement comprises a sample chamber (3) for receiving the dielectric medium, which sample chamber (3) is arranged such that the optical and electrical properties of the dielectric medium (4) can be recorded simultaneously, and
- wherein the gate electrode (5) of the field-effect transistor (1) forms the active surface and/or is connected to the active surface of the surface plasmon resonance sensor (2), and comprises charge carriers which can be caused to oscillate by means of electromagnetic radiation.

Fig. 1

EP 4 220 145 A1

**Description**

The invention relates to a sensor arrangement for simultaneous measurement of optical and electrical properties of a dielectric medium to be investigated, as well as the analytes contained therein, according to claim 1, and a measuring arrangement comprising such a sensor arrangement according to claim 11.

Electronic sensing devices including those based on electrolyte gated field-effect transistors (EG-FETs) have attracted increasing attention in recent years due to their potential for the use in compact and cost-efficient analytical devices (see references [1]-[7] of first embodiment). Despite the progress in understanding the underlying principles and even demonstrating label-free single molecule detection (see [8] of first embodiment), no commercial EG-FET biosensor has yet entered the market. Specifically, low reproducibility, unspecific binding, sensor drift, and batch to batch variations have hindered large scale deployment of this emerging class of biosensors (see [9] of first embodiment). In the early 1980s and 1990s, similar challenges were faced in field of optical biosensor technologies and in particular in surface plasmon resonance (SPR) biosensor systems (see [10], [11] of first embodiment). Research carried out over the last decades has paved the way for establishing this method in the market of biomolecular interaction analysis (see [12] of first embodiment). and we have witnessed the gradual advancement of this technology for rapid detection of chemical and biological species (see [10], [13] of first embodiment). SPR biosensors allow direct label-free monitoring of molecular affinity binding events on the sensor surface associated with changes in surface mass density (see [14], [15] of first embodiment). They are probed by the confined optical field of surface plasmons and monitored through variations in the local refractive index.

Over the last years, progress in the instrumentation of SPR biosensor technology has allowed for the detection of minute changes in surface mass density enabling the analysis of molecules with low molecular weight and species that are present in trace amounts in analyzed liquid samples. However, they typically rely on complex optical systems that are deployed in specialized laboratories, particularly when combined with other techniques for the measurement of additional parameters beyond the affinity binding rates. These parameters include identification of bio-molecular interactions by coupling SPR biosensors with mass spectrometry (see [16] of first embodiment), surface-enhanced Raman spectrometry (see [17] of first embodiment), fluorescence spectroscopy (see [18] of first embodiment), or monitoring of conformational changes of biomolecules with plasmonically enhanced IR spectroscopy (see [19] of first embodiment).

In comparison with these methods, EG-FET systems offer the advantage of simpler device architecture relying on an electronic readout principle, scalable cost-efficient production, low power consumption, and facile integration into point-of-care platforms that do not require specialists for operation (see [7] of first embodiment). The measurement principle is based on sensing of changes inducing electric field effects (see [2], [20]-[25] of first embodiment), associated with changes in charge distribution upon capture of a target species. This approach allows probing at closer proximity to the sensor surface (see [26] of first embodiment) than SPR and thus has the potential to monitor complementary effects that are not associated with refractive index changes detectable with the optical SPR technique, for instance conformational changes of biomolecule surface reactions (see [27] of first embodiment).

As many biologically relevant biomolecular interaction processes are inherently linked to the interlinked mass and charge variations, merging of different sensing techniques into one multifunctional instrument could offer intriguing possibilities to accurately investigate phenomena from different perspectives. Only a few reports in this context attempt to separate mass and charge effects (see [28]-[30] of first embodiment) and either did not allow for real-time *in situ* monitoring, did not perform proper spatial coupling of the system, or did not provide a satisfying theoretical framework.

For this reason, one objective of the invention is to provide a single multifunctional instrument combining different sensing techniques for simultaneous real-time monitoring of biomolecular interactions through the parallel measurement of variations in associated optical and electrical properties of a dielectric medium comprising the interacting biomolecules.

The invention solves this problem with a sensor arrangement for simultaneous measurement of optical and electrical properties of a dielectric medium to be investigated, as well as the analytes contained therein, according to claim 1.

The sensor arrangement according to the invention comprises the following components: a field-effect transistor (FET) and a surface plasmon resonance (SPR) sensor,

-   wherein the sensor arrangement comprises a sample chamber for receiving the dielectric medium, which sample chamber is arranged such that the optical and electrical properties of the dielectric medium can be recorded simultaneously, and
-   wherein the gate electrode of the field-effect transistor forms and/or is connected to the active surface of the surface plasmon resonance sensor. The gate electrode of the field-effect transistor comprises charge carriers which can be caused to oscillate by means of electromagnetic radiation, i.e. the gate electrode of the field-effect transistor supports collective oscillations of charge carriers coupled with the respective electromagnetic field.

A sensor arrangement according to the invention combining SPR and FET advantageously allows direct and simultaneous measurements (at the same sensing surface) of the analytes surface charge density and mass, which in turn allows to calculate/obtain the following data

- Adsorbed mass of biorecognition units
- Orientation of biorecognition units
- Conformational changes of biorecognition units upon binding
- Activity of the biorecognition units on the sensor surface

   ◦ This activity might be different compared to the activity in solution (less degrees of freedom)

- Transduction efficiency
- Binding affinity
- Capacitance and pseudocapacitance
- Density of states (entropy)
- Stochiometric ratio of biorecognition units
- Surface charge and charge state of biorecognition units

These above-mentioned parameters thus far could only be obtained via sperate tools and measurements and never at the same time. Moreover, these parameters determine the overall sensor performance and hold the key to improve/optimize sensors and gain insights into previously hidden biological processes.

These simultaneous label-free and real-time measurements allow new insights into complex processes at the solid-liquid interface (like non-Fickian ion diffusion), which are beyond the scope of each individual tool and enable direct measurement of surface charge density and mass obtained from electro/plasmonic signal transductions. Advantageously surface events can be monitored by simultaneously analyzing both the adsorbed mass and the intrinsic molecular charges at the same surface and under dynamic conditions. The sensor arrangement according to the invention also allows real-time monitoring under dynamic flow conditions, deconvoluting mass and charge contributions.

Due to the complementary sensing principles, the solid-liquid interface can be investigated from different perspectives, which is crucial as certain processes are beyond the scope of each individual tool. For instance, sole observation of the layer formation via SPR would suggest a completed material deposition within 60 s, whereas the subsequent slower charge diffusion takes more than 15 min as observed by EG-FET.

In an advantageous embodiment the invention may further be improved in that the sample chamber is arranged

- between the gate electrode and the semiconducting material of the field-effect transistor, which means in the form of an electrolyte-gated field-effect transistor with a top gate or
- between the source and drain electrode and the gate electrode of the field-effect transistor, or
- between the semiconducting material, the gate electrode and the substrate of the field-effect transistor, which means in the form of an electrolyte-gated field-effect transistor with a side gate or
- on top of the gate electrode and connected to the semiconducting material of the field-effect transistor via the gate electrode, which means in the form of a field-effect transistor with a floating gate or
- the sample chamber is arranged spatially separate from the field-effect transistor, wherein the gate electrode of the field-effect transistor is connected to the active surface of the surface plasmon resonance sensor contacting the dielectric medium in the sample chamber, which means in the form of a field-effect transistor with an extended gate configuration.

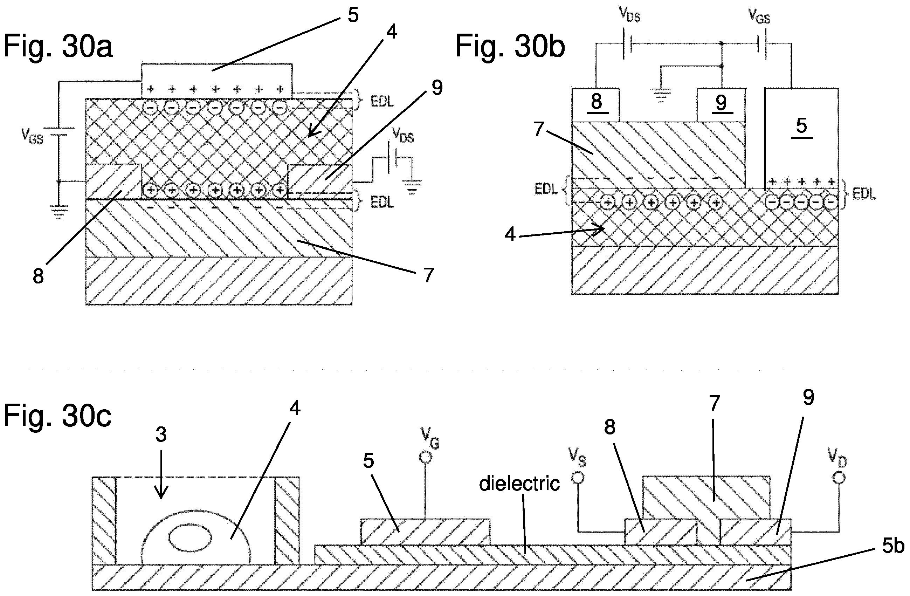

An electrolyte-gated field-effect transistor with a top gate (see Fig. 30a) allows exposure of gate and channel to the analyte solution and allows to study effects on both, the gate/electrolyte and the electrolyte/channel interface; facilitates adaptation for optical fiber (FO) combination (and all the advantages regarding the usage of FO-SPR.

An electrolyte-gated field-effect transistor with a side gate (see Fig. 30b) allows implementation of optical transmission measurements (e.g. LSPR) and grating coupling with the corresponding optical advantages (see below); facilitates manufacturing process of SPR/FET substrates (especially for large scale production).

A field-effect transistor with a floating gate (see Fig. 30c) exposes only the gate electrode to the sample/analyte solution and therefore allows to restrict the platform to interactions only on the gate/electrolyte interface; allows as well for improvements of the optical system (LSPR and grating coupling); semiconducting channel material not exposed to electrolyte solution (allows for more flexibility in material choice/no passivation strategy for channel material needed).

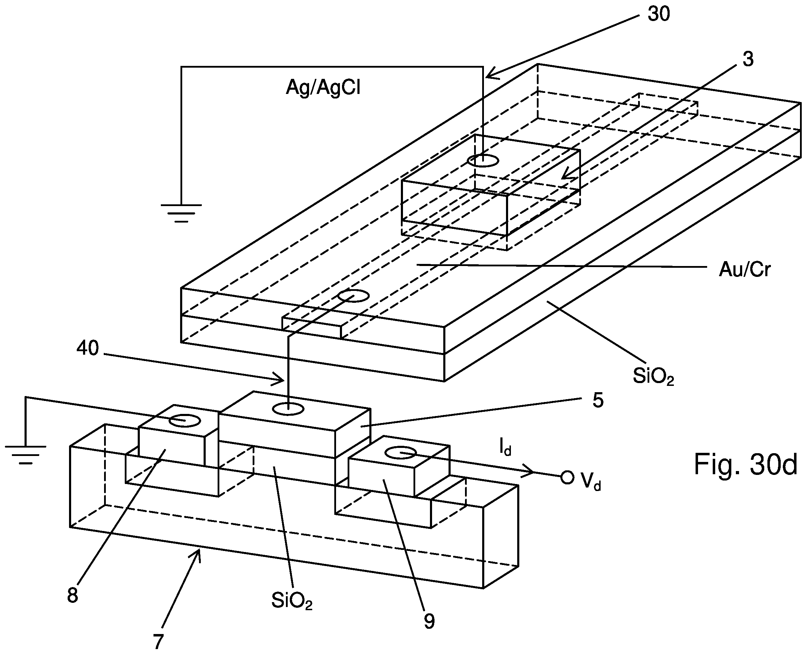

An extended gate field-effect transistor (see Fig. 30d) facilitates implementation of the FET-SPR concept into existing commercial SPR solutions; high flexibility (allows all above mentioned optical improvements); allows to implement the dual-mode sensing in already existing/commercially available optical sensing platforms; allows for all the above mentioned optical improvements; allows commercial available FET to be implemented (high flexibility with regards to FET devices); facilitates adaptation for multiplexing.

As in some fields of application it is desirable to analyse small volumes of liquid samples. Then, the sensor arrangement according to the invention may be implemented to the surface plasmon resonance sensor with an optical fiber having an optically reflective and electrically conductive surface. This means that the optical fiber may carry, e.g. conductive and surface plasmon resonance-active layers.

The optical fiber comprises an electrical contact and forms, i.e. acts as, the gate electrode of the sensor arrangement, and the reflective surface of the optical fiber is guided into the sample chamber, such that the dielectric medium can be contacted with the reflective surface.

This means that the optically and surface plasmon-active layers on the surface of the optical fiber are introduced into the sample chamber, such that it is brought into contact with the dielectric medium.

Advantages of this embodiment of the invention are that fiber optic SPR allows cheaper/simplified/less bulky optical components (for usage outside lab environment) and an easy adaptation of the system for multiplexing (e.g. for high throughput screening of biological samples), is suitable for measurements in static conditions (smaller sample volumes needed) and allows the following three modifications (LSPR, LR-SPR and multiple metal layers):

- Localized surface plasmons (LSPR): decreasing the volume optically probed (e.g. useful for detecting of low molecular weight analytes). Offers the advantage of direct excitation of surface plasmons without the need of optical couplers.
- Long-range surface plasmons (LR-SPR): increasing the volume optically probed (e.g. useful for probing larger species such as bacterial or viral pathogens). Offers the advantage of decreased damping translating to more accurate measurements of refractive index changes.
- Combination of multiple metal layers: increases the sensitivity of optical signal.

Apart from that this embodiment of the invention offers means to probe small sample volumes and deploy the SPR measurement to established analytical platforms relying on microtiter well plates, without the need of using microfluidics. Potential for highly miniaturized probes.

In order to generate a surface plasmon resonance-active layers on an optical fiber, in a preferred embodiment of the invention, the core of the optical fiber may be coated.

In order to prepare the surface plasmon resonance-active layers that also serve as a gate electrode an advantageous embodiment of the invention may comprise a number, preferably a plurality, of metal layers, in particular having a thickness of from 10 nm to 200 nm, consisting of gold, silver, aluminium, copper, or alloys thereof, are arranged on the gate electrode. Such metal layers may be metallic nanostructures or continuous or perforated metal layers, in particular having a thickness of from 10 nm to 200 nm,

In an advantageous embodiment the invention may further be improved in that selected, preferably all, metal layers and/or metal nanostructures are attached to the gate electrode - in a planar manner, in particular in the manner of a prism coupled, e.g. Kretschmann, configuration. In this case, the metal layers serving as gate electrode may be optically matched to a prism surface in form of a conductive continuous layer that allows coupling to surface plasmons which are used for optical probing on the metal-dielectric interface.

Prism-coupled, e.g. Kretschmann SPR is a commonly used optical system relying on glass optics with optically matched sensor chips. Sample is typically delivered by using a (permanent) microfluidic device integrated to a dedicated reader.

In an advantageous embodiment the invention may further be improved in that selected, preferably all, metal layers are attached to the gate electrode in the form of periodic nanostructures, in particular in the form of a periodic grating, preferably having a periodicity of between 1 to 1000 nm. In this case, the metal layers may be attached to the gate electrode in the form of continuous metallic film with flat or periodically corrugated or perforated profile, in particular in the form of a grating, preferably having a periodicity of between 1 to 1000 nm. Grating-coupled SPR advantageously allows for simplified direct coupling to surface plasmons on sensor chips that do not need to be optically matched to bulky optical prisms. The sensor chips can be prepared by scaled up means from plastic materials and integrated with plastic microfluidic device, which is advantageous for disposable sensor chips.

In a further advantageous embodiment of the invention, these nanostructures have a spherical, ellipsoid, tetrahedral, pyramid, cuboidal, cylindrical, tetrapod, or stellate shape, or combinations thereof, in particular the size of the nanostructures being from 1 nm to 1000 nm.

In a further advantageous embodiment of the invention, the conductive transparent layer is indium tin oxide, fluorine-doped tin oxide, aluminium zinc oxide, antimony tin oxide, molybdenum(IV) sulfide, or graphene and the transparent spectral window comprises wavelengths, where the localized surface plasmon resonance on metallic nanostructures occurs.

In order to generate an SPR active surface on an optical fiber, in a preferred embodiment of the invention, the core of the optical fiber used as the gate electrode is coated with the number, preferably the plurality, of metal layers.

In an advantageous embodiment the invention may further be improved in that a, preferably 1 nm - 300 nm thick, dielectric intermediate layer, in particular arranged below the, preferably continuous, metal layer or continuous transparent conductive layer, is arranged on the gate electrode, in particular on the core of the optical fiber used as the gate electrode and serving in surface plasmon resonance-active layers.

To further improve the sensitivity of the sensor arrangement, in a further advantageous embodiment of the invention the dielectric intermediate layer consists of low refractive index fluoropolymers, Teflon AF, Cytop, a self-assembled monolayer of organic molecules, a polymer layer, or a metal oxide layer for the tuning of characteristics of surface plasmons by their cross-coupling at inner and out metal layer interface.

Another way to further improve the sensitivity of the sensor arrangement, may be provided in that an, in particular transparent, conductive layer is arranged on the gate electrode, in particular on the core of the optical fiber used as the gate electrode,

in particular wherein periodic nanostructures are arranged on the conductive layer.

In an advantageous embodiment the invention may further be improved in that the conductive layer consists of indium tin oxide, fluorine-doped tin oxide, aluminium zinc oxide, antimony tin oxide, molybdenum(IV) sulfide, or graphene.

The invention further solves the above-mentioned problem with a measuring arrangement according to claim 12 comprising a sensor arrangement according to the invention,

- wherein the source electrode and the drain electrode are connected to the semiconducting material of the field-effect transistor,
- wherein the gate electrode of the field-effect transistor is designed to vary the conductivity and/or electronic properties such as charge carrier mobility or threshold voltage of the semiconducting material depending on an electric field between the gate electrode and the semiconducting material, and
- an electromagnetic radiation source which is arranged and designed such that a portion of the energy of the electromagnetic radiation incident on the surface of the gate electrode is absorbed by the gate electrode, i.e. by surface plasmons associated with the gate electrode.

In an advantageous embodiment the invention may further be improved in that the electromagnetic radiation source is designed to output light having a wavelength of from 270 nm to 1000 nm, in particular the radiation source being designed to couple light into an optical fiber.

In a further advantageous embodiment, the invention may further be improved in that the measuring arrangement comprises a detector for measuring the intensity of the electromagnetic radiation reflected from the surface of the gate electrode.

In order to further improve measurement efficiency and reduce measurement time, the invention may further be improved in that the measuring arrangement comprises a control and processing unit which

- is connected to the source electrode, the drain electrode, and the gate electrode of the field-effect transistor, and is designed to specify the voltage at the gate electrode and to determine, and in particular chart, the conductivity of the semiconducting material, and/or
- is connected to the detector and is designed to chart, in particular display, the intensity of the reflected electromagnetic radiation.

In order to provide for simultaneous investigation of large sample numbers in an advantageous embodiment of the invention the measuring arrangement may comprise

- a plurality of sample chambers for receiving a dielectric medium, and
- a plurality of gate electrodes, wherein each of the gate electrodes is allocated to one of the sample chambers and forms the active surface and/or is connected to the active surface of the surface plasmon resonance sensor of the respective sample chamber.

A measuring arrangement for simultaneous investigation of large sample numbers may further be improved in that the measuring arrangement comprises a plurality of electrically conductive optical fibers each having an optically reflective surface,

wherein the reflective surface of each optical fiber is guided into the respective sample chamber, such that the dielectric medium can be contacted with the reflective surface and wherein each optical fiber comprises an electrical contact and forms the gate electrode of the respective sample chamber.

The following detailed description of preferred embodiments of the invention is merely exemplary in nature and is not intended to limit the invention or the application and uses of the invention. The invention will be described with reference to the following figures which are provided by way of explanation only.

Fig. 1 shows an example of a sensor arrangement according to the invention,

Fig. 2a-Fig. 2b show sequential LbL-assembly monitored by a SPR system using a planar gold surface, Fig. 2c, Fig. 2d: LbL-assembly monitored in situ by an EG-FET system based on rGO,

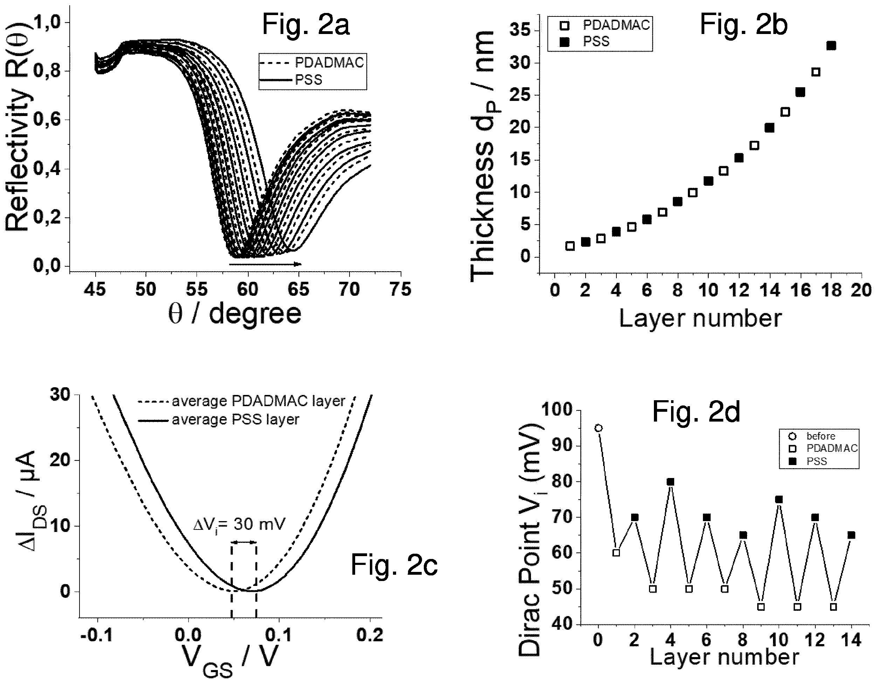

Fig.2a depicts the shift of the resonance angle as result of layer deposition,

Fig. 2b shows the total thickness of the adsorbed films as a function of deposited layers,

Fig. 2c shows transfer curves of EG-FET for PDADMAC/PSS assemblies,

Fig. 2d depicts the change of the Dirac points $V_i$ as a function of the number of adsorbed layers and their respective charges,

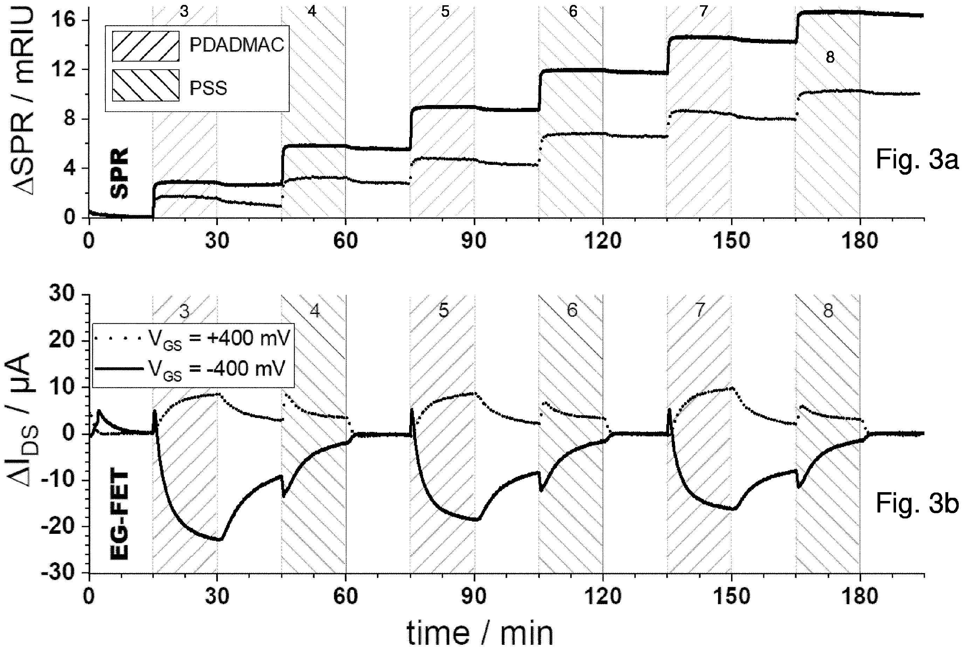

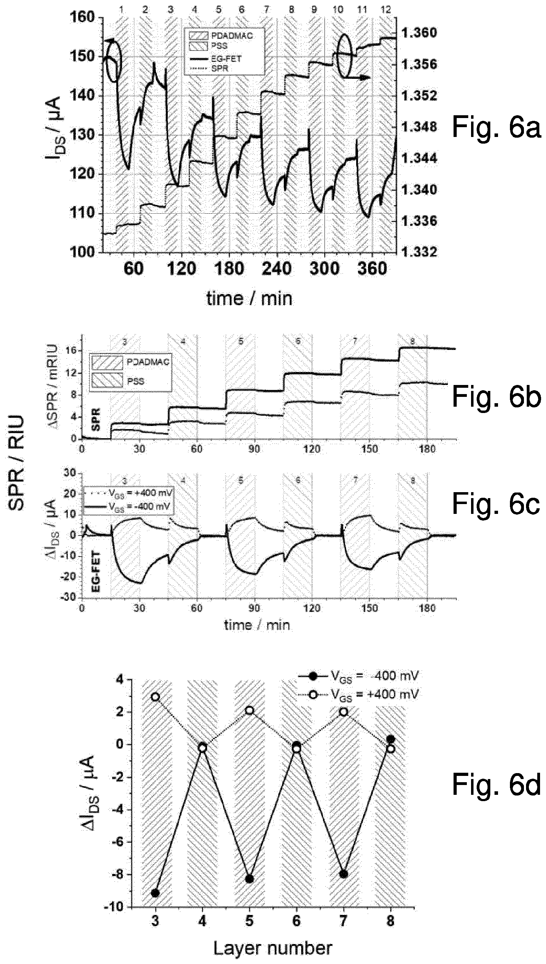

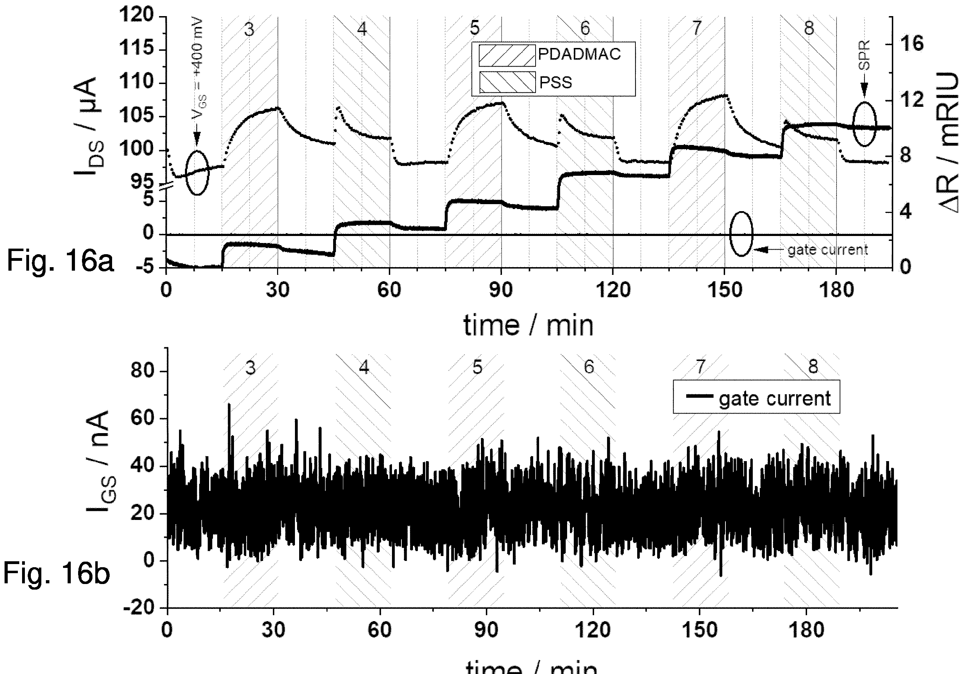

Fig. 3a, Fig. 3b show an in situ readout of the sequential growth of alternating PDADMAC (bars N = 3, 5, 7) and PSS (bars N = 4, 6, 8) layers by the use of SPR (Fig. 3a) and EG-FET (Fig. 3b). The device was operated with applied negative (solid curve) and positive (dotted curve) $V_{GS}$ voltages. Baseline correction was applied to level post-PSS $I_{DS}$ current values to zero. See Fig. 6a-6d, Fig. 16a, Fig. 16b for raw data and gate leakage current values,

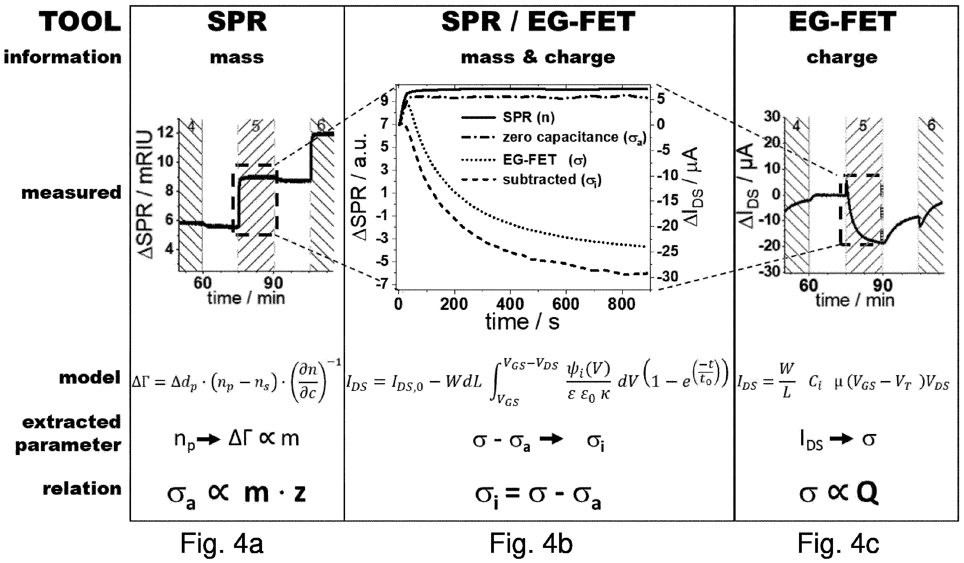

Fig. 4a, Fig. 4c show the detailed signal response of layer 5 from Fig. 3.

Fig. 4b shows the obtained capacitance contribution by subtracting the zero-capacitance measurement from the EG-FET response upon layer formation,

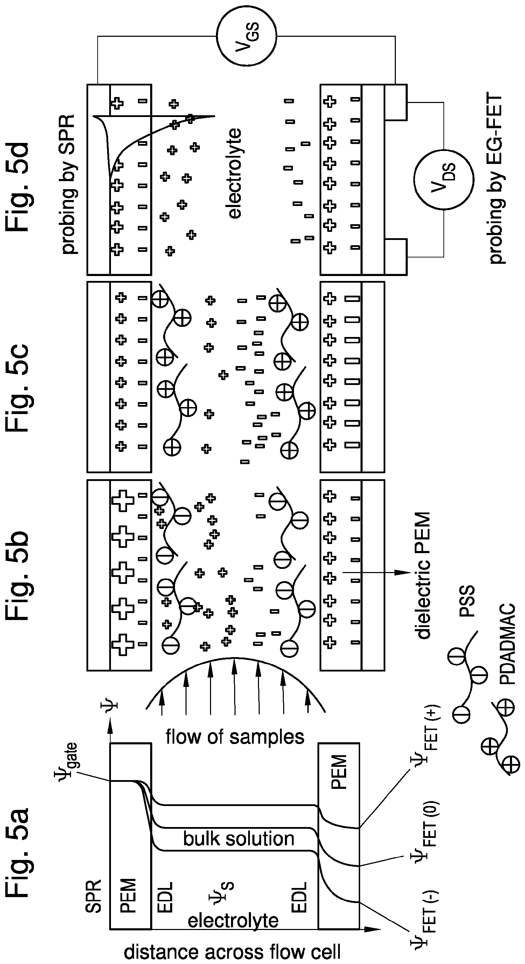

Fig. 5a-Fig. 5d shows schematics of the simultaneous readout of surface mass and charge density at the two interfaces of the combined SPR/EG-FET platform. Fig. 5d demonstrates initial conditions, followed by subsequent PDADMAC and PSS depositions under constant flow of polyelectrolyte solutions. The left side of Fig. 5b-Fig. 5d illustrates the SPR-Au-PEM surface and the right side of Fig. 5b-Fig. 5d represents the PEM-rGO-EG-FET. Surface charge density variations upon layer formation lead to the gate potential ($\Psi$) drop across the fluidic channel which is shown in Fig. 5a.

Fig. 6a: raw data for -400 mV $V_{GS}$,

Fig. 6b, 6c: baseline corrected data of selected layers as shown in Fig. 3;

Fig. 6d: $\Delta I_{DS}$ after rinsing of each corresponding PEM extracted from data shown in Fig. 3,

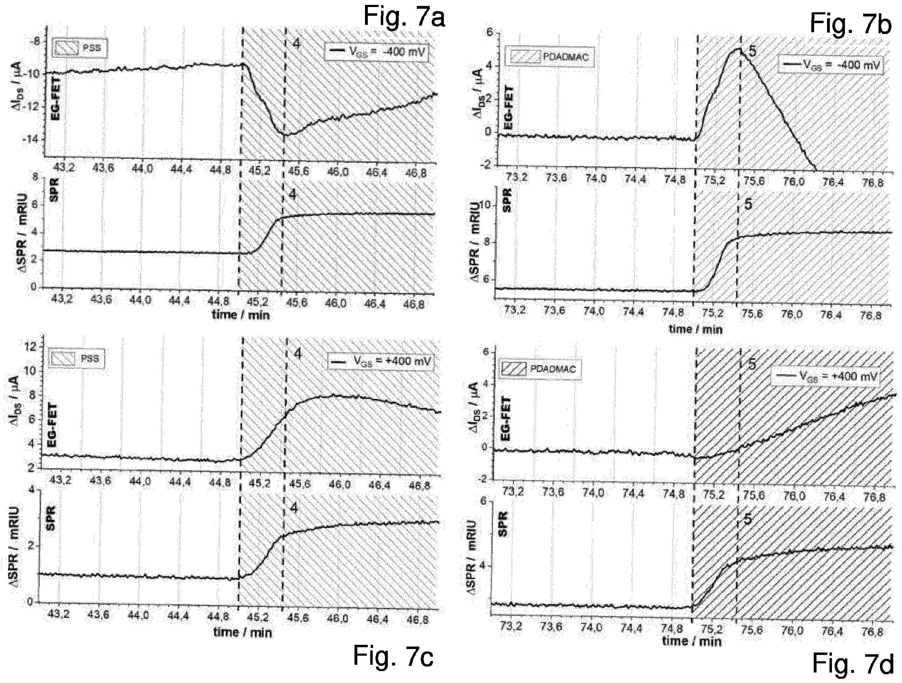

Fig. 7a-7d: Magnification for the first minutes of each layer deposition from Fig. 6b, showing the overlap of two effects both exhibiting exponential behavior with different time constants,

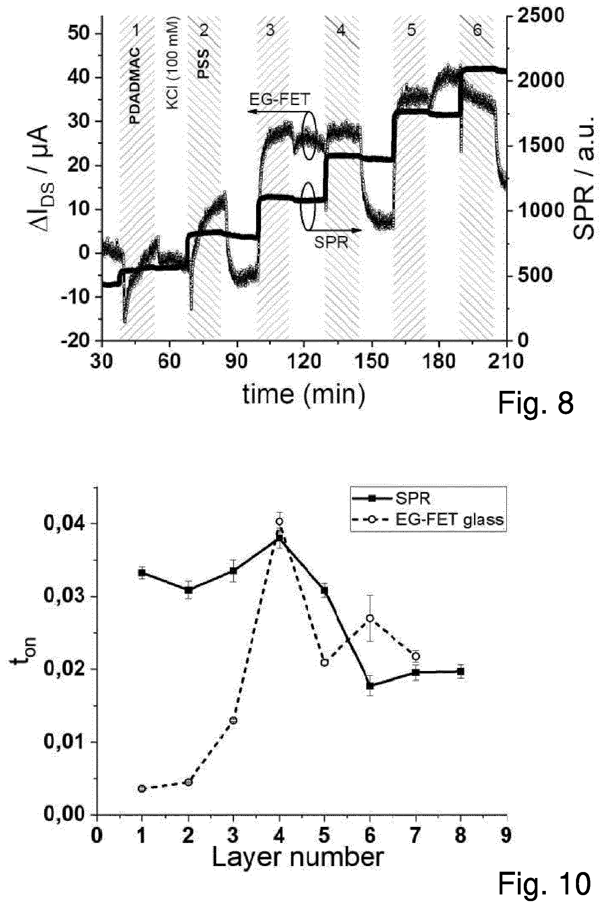

Fig. 8. zero-capacitance EG-FET response realized by replacing the gate-electrode with a non-conductive substrate, thus leading to $\sigma = \sigma_a$, comparable with the SPR response from Fig. 6a-6c,

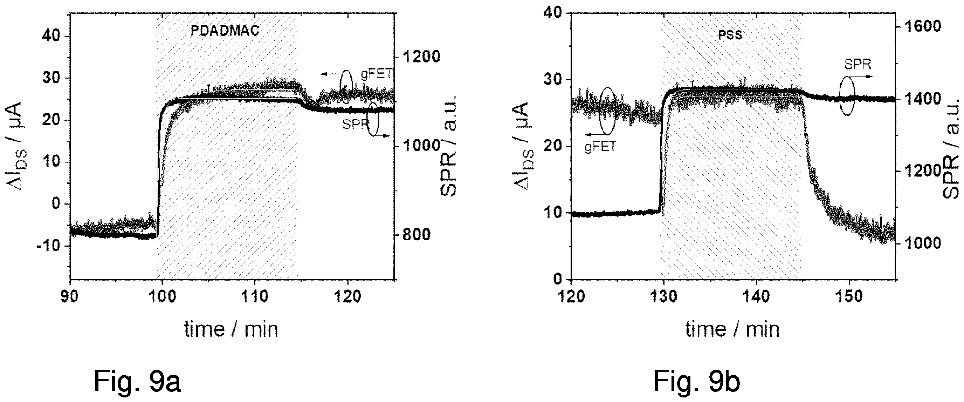

Fig. 9a, 9b: Comparison of the EG-FET responses (open dots) in a non-capacitive setup with the responses from the SPR signal (black line). Fig. 9a shows the third layer, PDADMAC and Fig. 9b shows the fourth layer, PSS

Fig. 10 shows obtained time constants $t_{on}$ from the exp. fits of the zero-capacitance measurement,

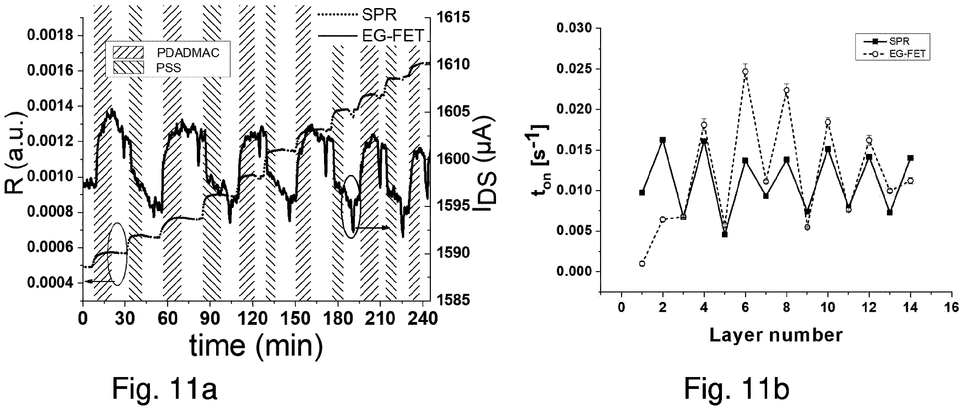

Fig. 11a shows an LbL measurement of SPR/gFET with a gasket of 3mm thickness. Fig. 11b shows time-constants of the exponential fits evaluated form SPR and EG-FET measurements in Fig. 11a,

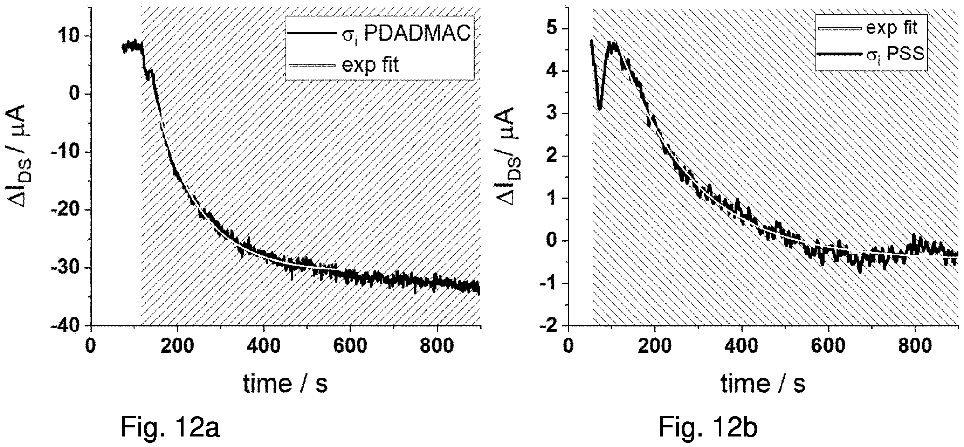

Fig. 12a: Subtracted EG-FET response curve for PDADMAC layer deposition, and

Fig. 12b: subtracted response curve for PSS layer deposition,

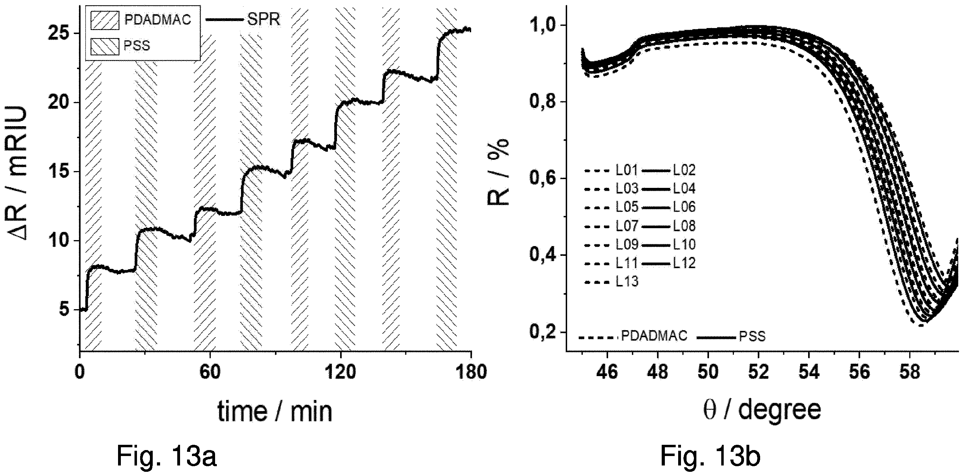

Fig. 13a, 13b: LBL SPR investigations Fig. 13a shows kinetic measurement in SPR flow cell using 20 mM KCl and a concentration of 1 mg/ml of PDADMAC and PSS solutions, and Fig. 13b shows the corresponding angular scans and the shift of the resonance angle after the completed layer deposition,

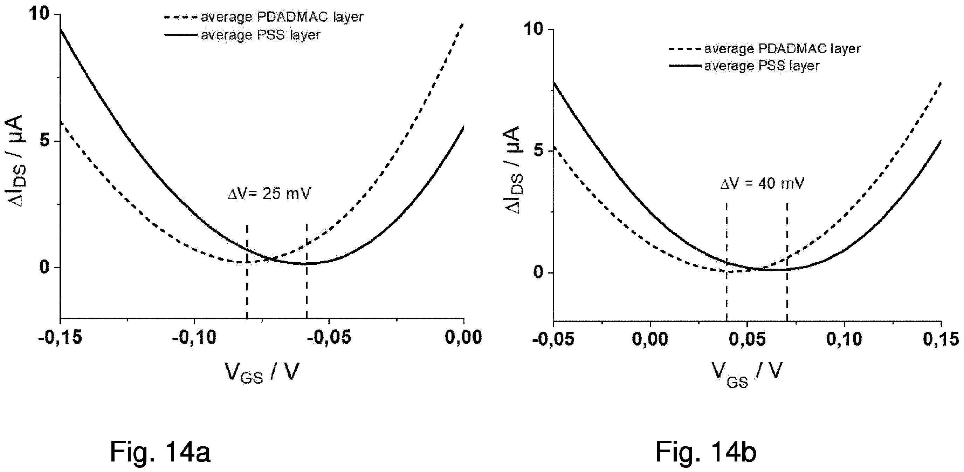

Fig. 14a, Fig. 14b: Influence of different ionic strength solutions on the IDSVGS output curves.

Fig. 14a: IDSVGS measurement in 20 mM KCl using a 1 mg/ml PDADMAC/PSS solution

Fig. 14b: IDSVGS measurements in 500 mM KCl electrolyte solution using a 1 mg/ml PDADMAC/PSS solution. The Dirac point shift Vi corresponds to the ionic strength of the electrolyte solution,

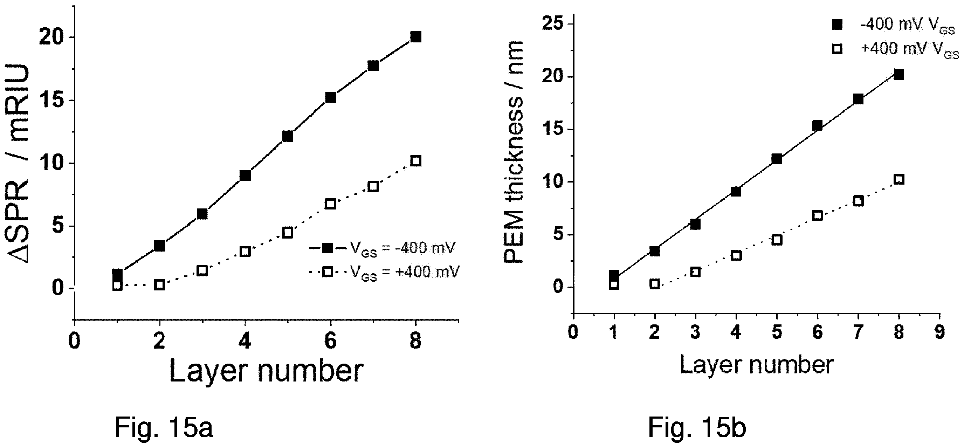

Fig. 15a. left: SPR response to the LbL growth at different applied gate voltages,

Fig. 15b: PEM layer growth at different applied gate voltages VGS, including a linier fit,

Fig. 16a: Raw data of the SPR/EG-FET measurement including leakage current (gate current)

Fig. 16b: Zoom in of the leakage current. EG-FET chips have a leakage current in the order of -0.02% of the total measured current thus making leakage current irrelevant for measurements,

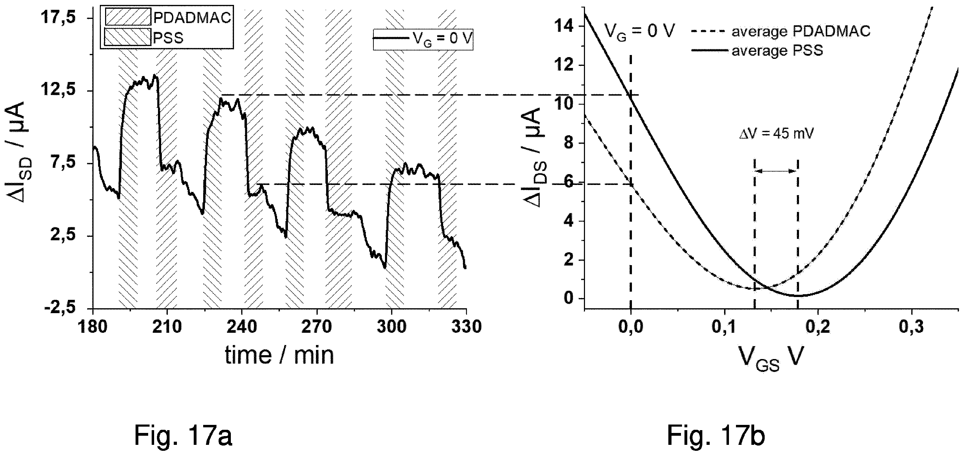

Fig. 17a: time resolved IDS(t) measurement of the LbL process and the corresponding,

Fig. 17b: IDSVGS curves after a layer deposition. The working point for IDS(t) measurements is determined by the adjusted gate voltage VGS prior to the measurement,

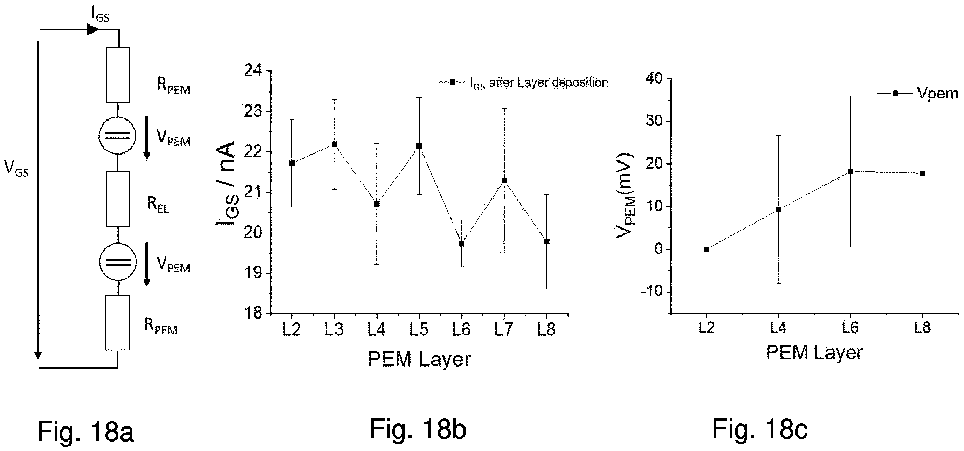

Figure 18a: Electrical equivalent circuit to represent the resistance between the gate electrode and the rGO EG-FET.

Fig. 18b: The resulting gate source current IGS(t) after each layer deposition exemplary demonstrated at VGS = + 400 mV. The total current IGS variation upon layer formation is very low, but still indicates the different voltage drops across the PSS or PDADMAC layer.

Fig. 18c: Voltage drop across every polyelectrolyte double layer,

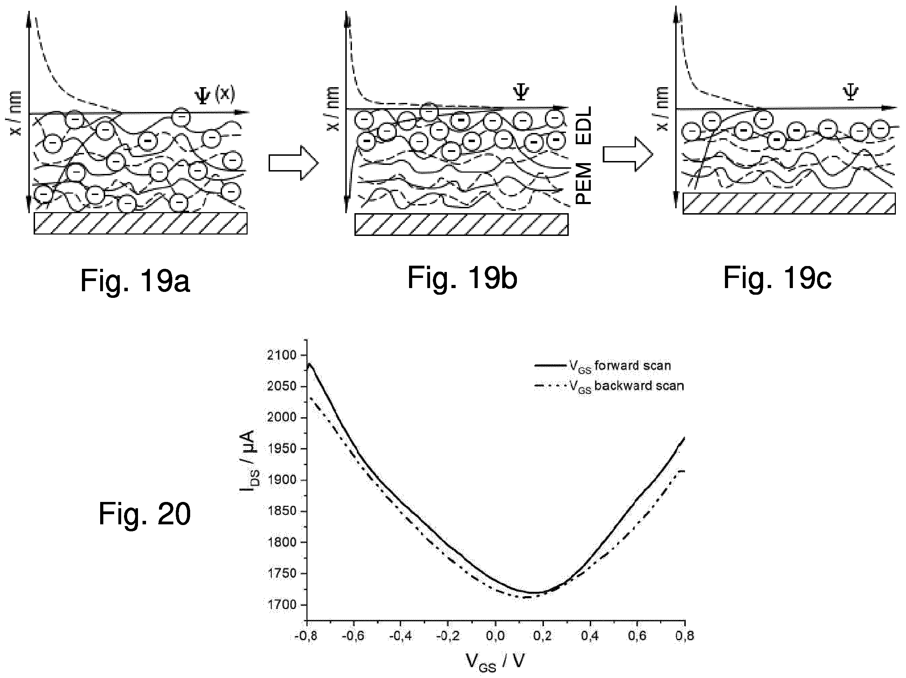

Fig. 19a-Fig. 19c: Surface potential Ψ as a function of the distance to the sensing surface.

Upon Layer formation, surface charge density increases, hence the surface potential is modulated. Fig. 19a: PEM formation. The initial state after the first precursor layer are shown.

Fig. 19b: Intralayer ion diffusion. The adsorption of a new layer is shown; Fig. 19c: Rinsing. The polyelectrolyte washing off is shown.

Fig. 20: The transfer characteristics of the rGO EG-FET is used to characterize the sensor electrically. The drain source current IDS is modulated upon applying an electric field by the gate electrode. The hysteresis upon different gate voltage $V_{GS}$ scanning directions can be observed,

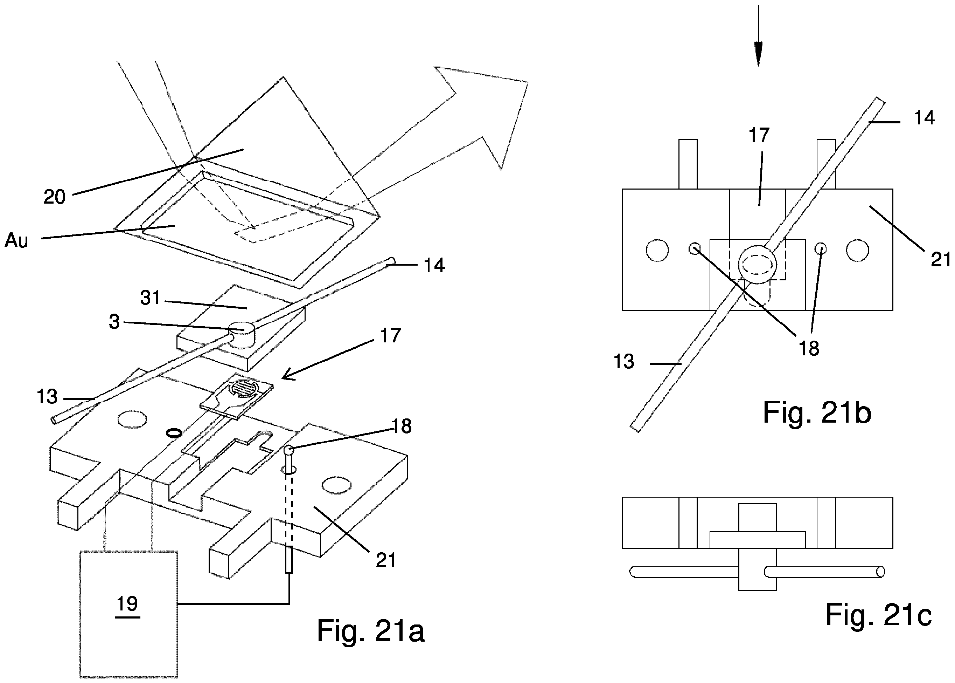

Fig. 21a: Schematic drawing of the experimental setup consisting of the optical SPR part, with a gold slide which also acts as the gate electrode for the electronic and the EG-FET part with in- and outlet, PDMS flow cell, an interdigitated electrode chip, contact pins for the gate electrode and a 3D printed holder, Fig. 21b-Fig. 21d: closeup of the EG-FET/SPR holder Fig. 21b, Fig. 21c: assembled microfluidic cell consisting of a PDMS-gasket, 3D-printed holder, inlet and outlet, a commercial Micrux chip (IDE1) and the gate pins.

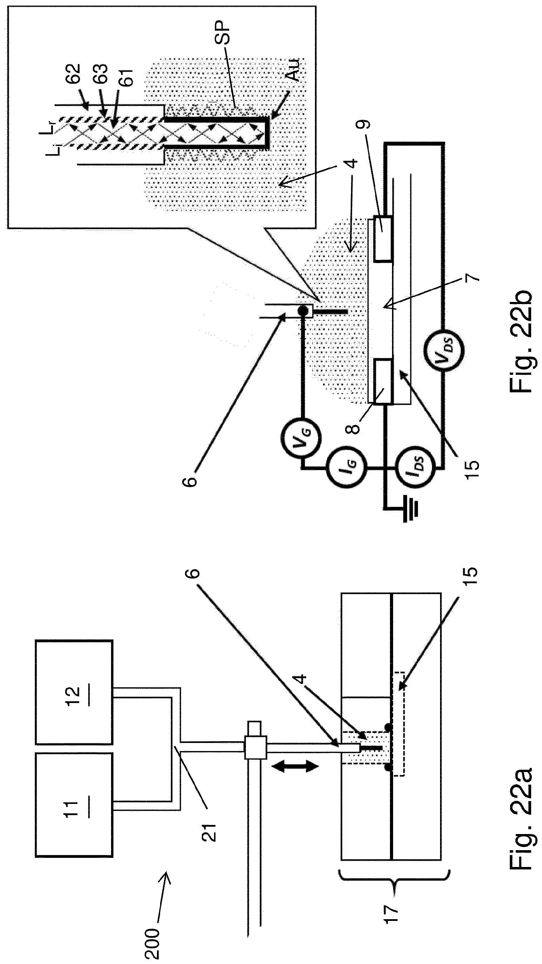

Fig. 22a: Schematic representation of the combined FO-SPR/FET setup.

Fig. 22b: Detail of reaction chamber with Au-coated FO tip dipped into the electrolyte, acting as SPR probe and gate electrode,

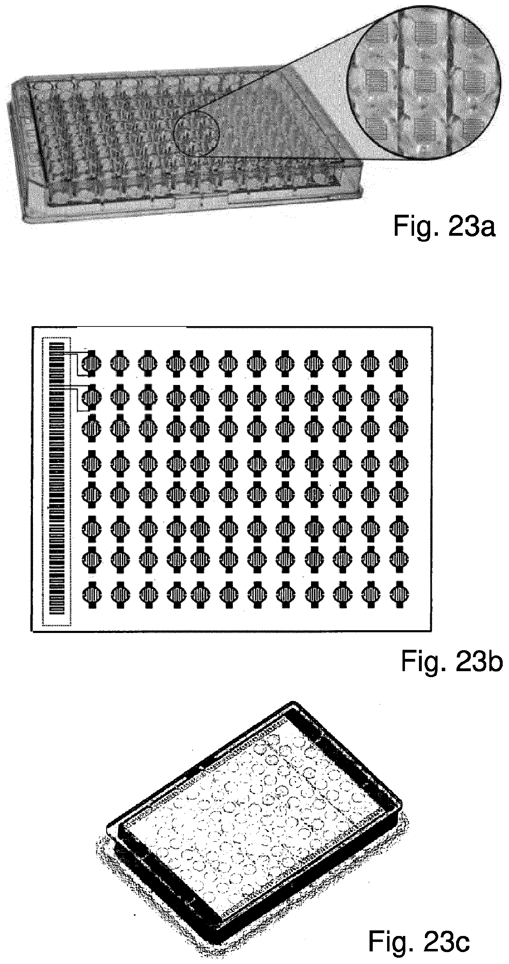

Fig. 23a-Fig. 23c: Representative image of a 96-well plate containing numerous sensing areas with interdigitated electrodes (see [14] second embodiment) where the channel material can be deposited. High-throughput optical and electronic screening can be achieved by moving one (or several) FO-SPR tip(s) through the wells containing the analyte solution.

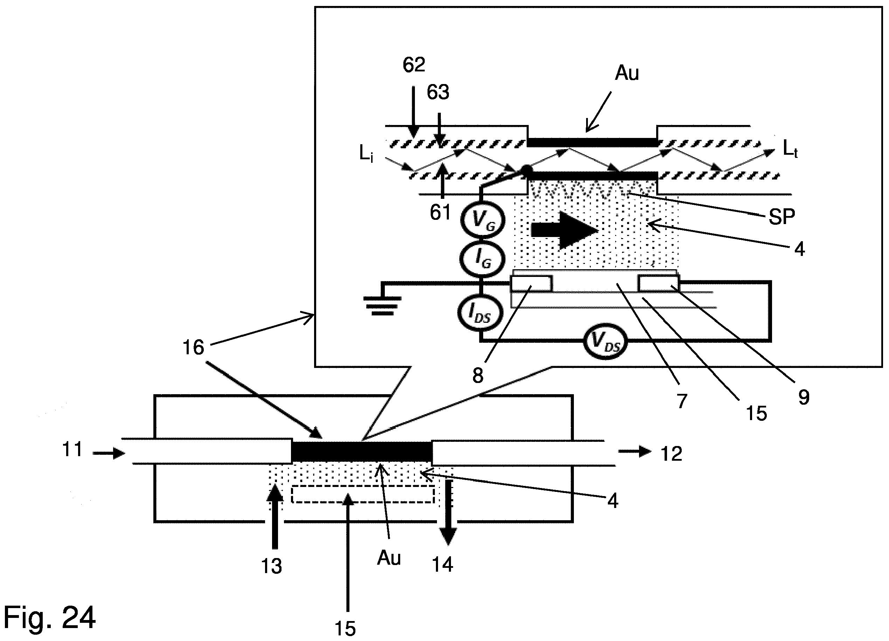

Fig. 24: Schematic representation of FO-SPR / FET combinations in a flow cell arrangement by using a FO with intermediate SPR sensitive zone, used in forward scattering detection mode.

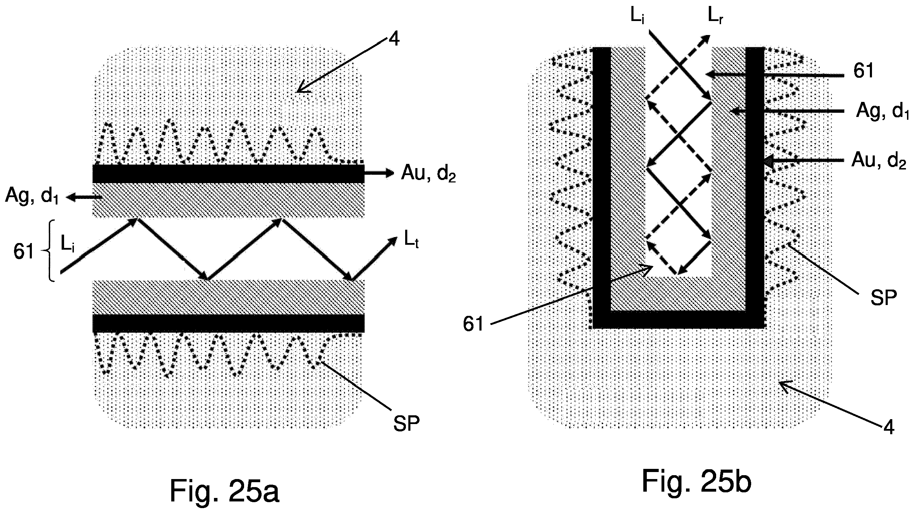

Fig. 25: Schematic representation of double-metal-layer FO-SPR sensors, in this case with an inner layer of silver and an outer layer of gold ($d_1 > d_2$), in forward scattering detection mode (*left*) and backscattering detection mode (*right*).

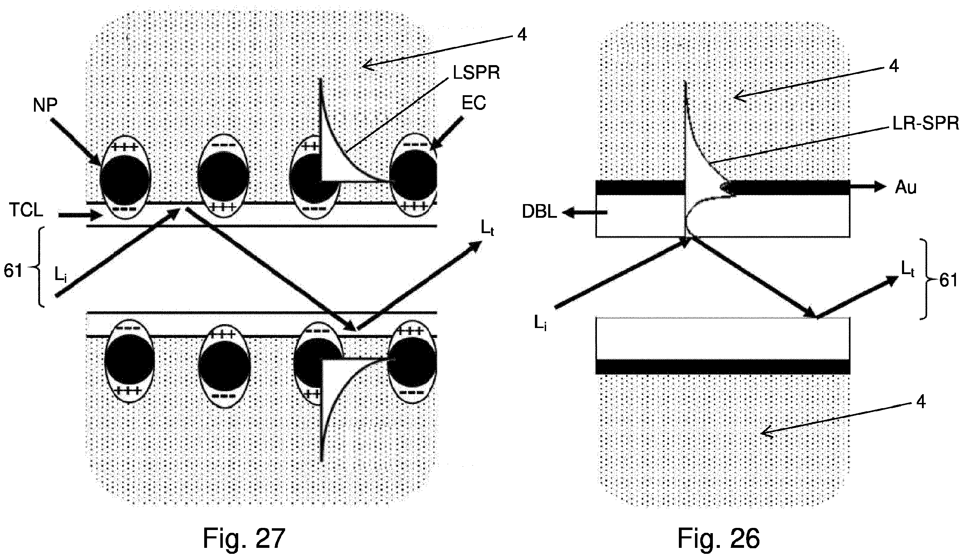

Fig. 26: Schematic representation of a FO-LRSPR sensor using a dielectric buffer layer between the FO silica core and the metal layer (in forward scattering detection mode).

Fig. 27: Schematic representation of metallic NPs attached to a transparent conductive layer on the FO core enabling LSPR (in forward scattering detection mode).

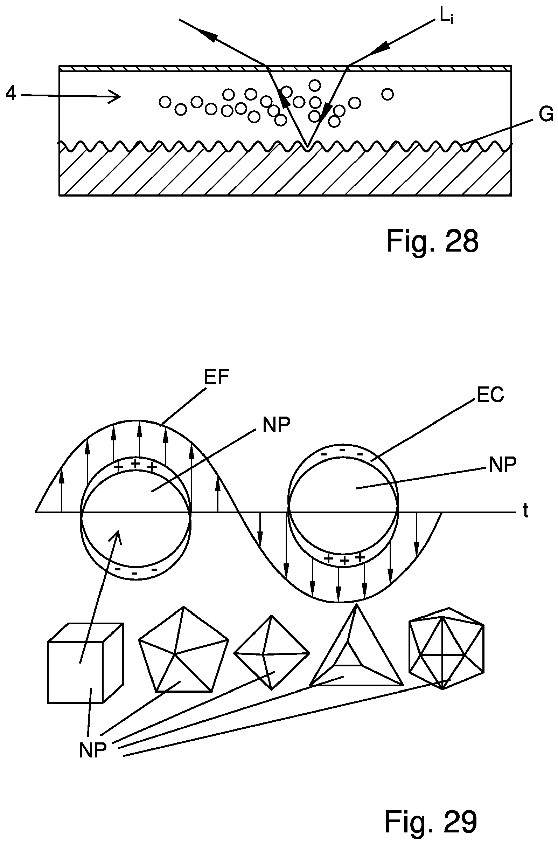

Fig. 28: Grating,

Fig. 29: Nanoparticle,

Fig. 30a: Electrolyte gated-FET (top gate),

Fig. 30b: Electrolyte gated-FET (side gate),

Fig. 30c: Floating gate FET,

Fig. 30d: Extended gate FET.

In the following, the invention is described with reference to a first preferred embodiment of the invention.

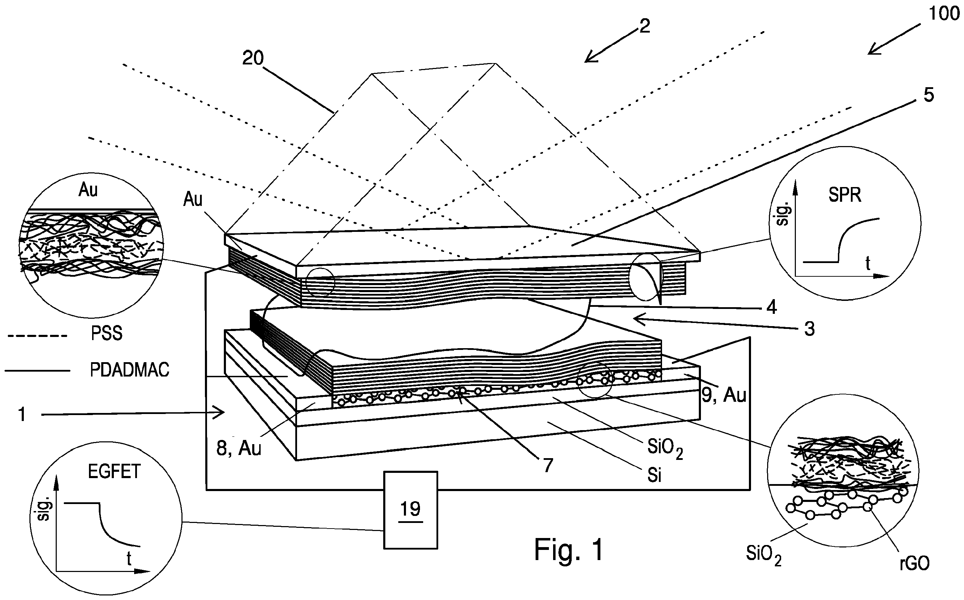

In the following an approach to combine surface plasmon resonance 2 (SPR, optical) and electrolyte gated field-effect transistor 1 (EG-FET, electronic) readouts for simultaneous and real-time observation of optical and electronic aspects of molecular interactions is reported. It is realized using a gold sensor surface that simultaneously serves as gate electrode of the EG-FET and as SPR-active interface (Fig. 1). The capabilities of the developed SPR/EG-FET platform are demonstrated through the real-time observation of layer-by-layer (LbL) assembly of charged polyelectrolytes. Surface effects including intra-layer ion diffusion processes from complementary techniques are elucidated.

This surface architecture represents a well-established system that offers a simple bottom-up modification strategy on different substrates (see [31]-[35]) LbL multilayers are sequentially assembled by using the attractive forces between oppositely charged polyelectrolytes and typically characterized after each layer deposition step. Moreover, this technology shows great potential in multiple, diverse fields such as fuel cells (see [36]) batteries (see [37]) drug delivery (see [38]) and water desalination (see [39]) but a better understanding of the intrinsic processes and the resulting film properties are essential for guiding the development of new films and specific applications (see [40], [41]).

Real-time measurement using the SPR/EG-FET approach offer a means to observe typically inaccessible effects associated with the kinetics of binding and redistribution of mass and charge density during the growth of individual layers. In addition, the reported approach of the bifunctional sensor can be extended in a straightforward manner for the measurement of other (bio-)molecular interactions and serve to further develop these platforms and to elucidate surface effects neither SPR nor EG-FET can address individually. Due to their relatively large mass and high charge density, LbL architectures are well suited model systems to demonstrate the capability of the novel platform for monitoring mass deposition and charge distribution.

A first embodiment of a sensor arrangement 100 according to the invention is shown in Fig. 1. In the first embodiment the sensor arrangement 100 comprises a field-effect transistor 1, a surface plasmon resonance sensor 2, and a sample chamber 3 for receiving the dielectric medium, e.g. an electrolyte 4. The gate electrode 5 of the field-effect transistor 1 forms the active surface of the surface plasmon resonance sensor 2, and supports collective oscillations of charge carriers and respective electromagnetic field. Preferably, one or more metal layers, in particular having a thickness of from 10 nm to 200 nm, consisting of gold Au, silver, aluminium, copper, or alloys thereof, are arranged on the gate electrode 5 to form the active surface of the SPR sensor 2. In the first embodiment in Fig. 1 the gate electrode 5 is made of gold.

The dielectric medium to be investigated may contain analytes such as anorganic or organic substances, ions, salts, or molecules, in particular proteins, antibodies, enzymes, peptides, viruses, cells, DNA or natural or synthetic polymers.

SPR chemo-optical signal transduction relies on the detuning of the resonant optical excitation of surface plasmons on a metallic surface. It occurs due to the increase of refractive index upon the growth of a (bio-)molecular assembly on the sensor surface (see [11]). The observed detuning of SPR can be converted into changes in the surface mass density $\Gamma$ of the (bio-)molecular layer using effective medium theory (see [42],[43]). In contrast, the chemo-electrical signal transduction in EG-FETs is based on the locally induced electric field variations induced by surface charge density changes on the sensor modulating the Fermi level (see [44]) observed as a shift of the Dirac point $V_i$, the voltage of lowest conductance (Fig. 2a-2d). LbL-assembly of polyelectrolyte multilayers (PEM) using SPR with Kretschmann configuration of the attenuated total internal reflection method was observed.

The resonant excitation of surface plasmons manifests itself as a dip in the angular reflectivity $R(\theta)$ (Fig. 2a). At the resonant angle, the excited surface plasmons probe the gold sensor surface with a PEM that was sequentially grown from positively charged poly(diallyldimethylammonium chloride) (PDADMAC; average molecular weight <100 kDa) and negatively charged poly(sodium 4-styrenesulfonate) (PSS; average molecular weight approx. 70 kDa) during continuous flow (100 $\mu$l/min,). Polymer solutions (1 mg/ml in 0.1 M KCl aqueous solution) with refractive index $n_s$ = 1.333 were sequentially pumped over the UV/ozone activated gold sensor surface with intermediate rinsing steps (see supporting information for details). After the growth of each layer, angular reflectivity scans $R(\theta)$ were recorded and the thickness $d_p$ and refractive index $n_p$ of the assembled PEM was obtained by fitting the spectra using the Fresnel reflectivity model. The analysis was described in detail in previous work (see [35]) and the refractive index of PDADMAC/PSS layers were measured as $n_p$ = 1.577 when dried in contact with air. After swelling of the PEM in 0.1 M aqueous KCl solution, its refractive decreases to $n_p$ = 1.476. Fitting $R(\theta)$ for swollen PEMs allows determining the dependence of layer thickness $d_p$ on the number of growth steps, which can be seen in Fig. 2b (corresponding kinetic measurements as well as angular scans are shown in Fig. 6a-6c). In accordance with previous reports (see [45]), this dependence exhibits a parabolic trend and the average increase of $\Delta d_b$ = 0.95 nm was determined for the first eight layers. The average surface mass density increase $\Delta\Gamma$ per layer associated with LbL deposition of the PEM was determined by (see [46]-[47]):

$$\Delta\Gamma = \Delta d_p \cdot \left(n_p - n_s\right) \cdot \left(\frac{\partial n}{\partial c}\right)^{-1} \qquad (Eq.\,1)$$

resulting in $\Delta\Gamma$ = 69 ng/cm$^2$. In this equation the coefficient $\partial n/\partial c$ = 0.2 mm$^3$ mg$^{-1}$ relates the changes in refractive index with the concentration of (bio-)polymers bound to the surface (see [48]).

The PEM assembly was investigated using reduced-graphene oxide based field-effect transistors (rGO-FET) by monitoring the resulting Dirac point shifts $\Delta V_i$ (Fig. 2c, 2d) (see [34], [35]). rGO-FETs were fabricated by previously reported procedures (see supporting information) (see [35]). All measurements were performed in a dedicated flow cell (Fig. 21a-21d).

Fig. 21a-21d show the experimental setup: Fig. 21a shows the combined EG-FET/SPR setup, Fig. 21a shows an exploded view of a microfluidic cell consisting of a PDMS-gasket 31, 3D-printed holder 21, inlet 13 and outlet 14, a commercial Micrux chip (IDE1) 17 and a gate pin 18. One or more gate pins 18 are one possibility how the SPR-active substrate (planar gold slide) can be contacted such that it can be used as well as gate electrode for the FET. Of course, only one gate pin 18 is sufficient. The optical SPR part comprises the SPR prism 20, a 50 nm gold Au slide which also acts as the gate electrode 5 for the electronic - EG-FET part. The FET part comprises an inlet 13 and an outlet 14, a PDMS flow cell 17, an interdigitated electrode chip, contact pins 18 for gate electrode 5, a 3D-printed holder 21, and a source meter unit 19.

Fig. 21b, Fig. 21c show the assembled microfluidic cell consisting of a PDMS-gasket 31, the 3D-printed holder 21, inlet 13 and outlet 14, a commercial Micrux chip (IDE1) 17 and one or more gate pins 18.

Electrical measurements were performed by applying a 50 mV source-drain bias and sweeping the gate potential $V_{GS}$ while monitoring the current between the drain and the source IDS using a Keysight U2722A instrument with custom-made LabVIEW™ software. An Ag/AgCl reference electrode was used as a gate electrode. As shown in Fig. 2c, positively charged PDADMAC layers shift the transfer curve ($I_{DS}V_{GS}$) to more negative voltage values compared to a positive

Dirac shift $\Delta V_i$ introduced by negatively charged PSS layers, which is in agreement with previous publications (see [49]). The observed $\Delta V_i$ between alternating layers are on the order of 25-40 mV. Furthermore, the dependence on the ionic strength of the KCl solutions was also evaluated (Fig. 14a, 14b).

Interestingly, these shifts obtained from dynamic LbL-processes are smaller than values obtained from static assembly processes, as recently shown by the inventors (see [35]) and can be explained by the absent drying step after each layer deposition. The drying step causes a collapse of the polymer layer and thus increases the surface charge density $\sigma$.

After determining the viability of in situ monitoring LbL assembly using individual SPR 2 and EG-FET measurements, each in a separate flow cell configuration, the concept of the dual electro/plasmonic signal transduction was demonstrated with the combined SPR/EG-FET tool. A 50 nm thin gold layer used in SPR measurements with Kretschmann configuration was simultaneously employed as the gate-electrode of the EG-FET. A custom-made polydimethylsiloxane gasket defining the flow cell volume (5 $\mu$L, 400 $\mu$m flow channel thickness) attached the EG-FET to the SPR substrate. The flow cell was sealed using a 3D-printed holder with a commercially available interdigitated electrode chip (Micrux IDE1) using rGO as channel material (Fig. 1, Fig. 21a-Fig. 21d).

Sequential LbL growth of PEM, composed of PDADMAC and PSS, was monitored in parallel using the optical (SPR) and electronic (EG-FET) readout channels. The acquired sensor response kinetics are presented in Fig. 3 for the growth of layer 3 to 8, revealing a stepwise increase in the SPR response and an alternating, more complex, electrical EG-FET signal.

The first two layers (see Fig. 6a-6c for raw data) act as precursor and ensure sufficient PEM coverage for the subsequent layers (see [50]). The SPR sensor response was measured in refractive index unit (RIU) by calibrating the sensor to bulk refractive index changes $n_s$ (Fig. 6a-6c). Prior to the growth of the second pair of PDADMAC/PSS layers (layer 3 and 4), a baseline was established (KCl, 100 mM, 0-15 min). Then, the solution with positively charged PDADMAC was injected (15 min) and a rapid increase in SPR response was observed as a result of surface mass deposition. The system was rinsed with KCl for 15 min and a rapid small decrease in the SPR signal was observed due to the bulk refractive index change ns and the desorption of loosely bound polymer chains (see [51]). Next, the solution with negatively charged PSS was injected for 15 min followed again by a 15 min rinsing step leading to a similar increase in SPR signal. The growth of the first 8 layers was linearly approximated (Fig. 15a, Fig. 15b) and shows a gate-voltage dependency.

The equilibrium $\Delta$SPR signal of 10 - 16 mRIU (and respective surface mass density $\Delta\Gamma$ and PEM thickness dp) are in accordance with those measured in static mode and presented in Fig. 2. Interestingly, the overall surface mass density $\Gamma$ of the grown PEM was about 60 % higher for the negative $V_{GS}$ applied to the gold surface compared to the positive one due to the respective changes in the surface mass density of the initial positively charged PDADMAC layer. Due to the polarizability of charged polymers, the polymer chains exhibit instantaneous response to the electrostatic attraction by $V_{GS}$ (see [52]). Hence, electrophoretic deposition occurs and the electrostatic compensation process between cationic and anionic polyelectrolytes is stronger, resulting in thicker films as seen by the SPR signals (Fig. 15a, Fig. 15b). This corresponds to a mean layer growth of dp = 2.82 $\pm$0.06 nm with $\Delta\Gamma$ = 202 $\pm$4 ng/cm2 for VGS = -400 mV and dp = 1.69 $\pm$0,06 nm with $\Delta\Gamma$ = 121 $\pm$4 ng/cm2 for $V_{GS}$ = +400 mV, as extracted from the coupled SPR/EG-FET system according to Eq.1. As the same PEM is formed on both interfaces of the flow-cell, we further assume that both SPR and EG-FET channels respond to the same supra-molecular architecture. While the SPR is sensitive to the binding of higher molecular weight PDADMAC and PSS polymers, it will not respond to the presence of low molecular weight $K^+$ and $Cl^-$ ions. In contrast, the EG-FET responds to charge density variations independent of the molecular weight.

In comparison to the SPR, the response observed with the EG-FET channel ($\Delta$IDS), shown in Figure 3b, shows different behavior. In this experiment changes in $\Delta I_{DS}$ were measured in time for a fixed applied gate-potential ($V_{GS}$), which defines the working point of the EG-FET system. The measured current changes are proportional to the slope of the $I_{DS}V_{GS}$ curve, which is opposite for the set $V_{GS}$ = $\pm$400 mV (Fig. 17a, Fig. 17b). The binding of positively charged PDADMAC polymer and negatively charged PSS polymer is accompanied by opposite changes in $I_{DS}$ current as the binding of these polymers shifts the Dirac point $V_i$ to more negative or positive voltages, respectively (Fig. 2c). Only the ambipolar properties of certain semiconducting materials (such as rGO) allow for using both positive and negative gate voltages ($V_{GS}$) and thus investigating the electric field dependence of the LbL adsorption. Strikingly, trends in the EG-FET signal due to the growth of PEMs are inherently different to those observed with SPR, both in terms of magnitude and kinetics. For example, the deposition of positively charged PDADMAC gradually increases the $I_{DS}$ current (in the case of $V_{GS}$ = +400 mV) until equilibrium is reached in about 15 mins, thus taking 30-times longer than the SPR signal. At the beginning of PSS injection, a rapid increase in $I_{DS}$ (in the case of $V_{GS}$ = +400 mV) occurs in about 1 min and overlays with a slow competing decrease that reaches equilibrium in about 15 mins. As expected, the current output sign is reversed when applying a negative gate potential ($V_{GS}$ = -400 mV).

A detailed investigation of the EG-FET signal reveals two contributions, both exhibiting exponential behavior with different time constants (Fig. 7). The two processes can be attributed to the accumulated charge density $\sigma$ (EG-FET), which is composed of i) $\sigma_a$, originating from adsorbed charged mass density (SPR), and ii) $\sigma_i$, induced by capacitive effects, according to $\sigma = \sigma_a + \sigma_i$.

Changes of the surface charge density correspond to variations of the surface potential $\Psi$ (Debye-Hückel, Eq.2) thus modifying $I_{DS}$,

$$\psi = \frac{\sigma}{\varepsilon\,\varepsilon_0\,\kappa} \qquad (\text{Eq.2}),$$

where $\kappa = \frac{1}{\lambda_D} = [(2\,z^2 e^2\,n_0)/(\varepsilon\,k_B\,T)]^{-1/2}$, with Debye length $\lambda_D$, ion valency z, electron charge e, ion concentration of the bulk n0, Boltzmann constant $k_B$, temperature T, permittivity constant $\varepsilon_0$, and relative permittivity $\varepsilon$ of the solution.

Experimental confirmation was obtained by eliminating any capacitive contributions ($\sigma_i = 0$), which was realized by replacing the gate-electrode with a non-conductive substrate (Fig. 8), thus leading to $\sigma = \sigma_a$. Such two-terminal devices have been demonstrated for sensing applications (see [53]). As shown in Fig. 4a-4c, the time constants for non-capacitive experiments (orange dashed line) are nearly identical to the SPR response (black solid line), which is attributed to the adsorbed surface charge density $\sigma_a$. Hence, we demonstrated that the SPR mass uptake is proportional to $\sigma_a$ which is deduced from the adsorbed mass using the molar weight and valency of the monomers (Fig. 15a, 15b). Calculating the surface charge density for the formation of the PDADMAC/PSS multilayers, we obtain $\sigma_a = 120.2 \pm 2.5\ \mu C/cm^2$ for PDADMAC for $V_{GS} = 400$ mV and $\sigma_a = 72.0 \pm 2.6\ \mu C/cm^2$ for $V_{GS} = +400$ mV, and for PSS $\sigma_a = 104.9 \pm 2.5\ \mu C/cm^2$ for $V_{GS} = -400$ mV and $\sigma_a = 62.9 \pm 2.6\ \mu C/cm^2$ for $V_{GS} = +400$ mV. Subtracting the zero-capacitance data from the EG-FET response (dotted line ($\sigma$)), reveals the contribution of the induced surface charge density $\sigma_i$ (dashed line ($\sigma_i$)).

The different nature of the SPR and EG-FET originates from the capacitive contributions ($\sigma_i$), yielding additional information about charge distribution processes in PEMs. The SPR signal corresponds to mass uptake, attesting to the adsorption of long polymer chains in a fast process. Counterions surrounding the charged polymer backbone in the bulk solution are introduced into the PEM structure during surface adsorption. Oppositely charged PEMs achieve their electroneutrality by intrinsic charge compensation, resulting in expulsion of previously trapped counter-ions. This Donnan exclusion originates from the electroosmotic pressure of trapped counter ions (see [54]) and from screening between charge-like polymers due to layer to layer charge neutralization (see [55], [56]). The resulting intra-layer K+ or Cl-flux can be described as slow non-Fickian diffusion (see [50], [57]) to the solid-liquid interface, modifying the surface charge density $\sigma_i$ (see [54]). Hence, the potential in the PEM layer changes over time and a corresponding electrical double layer forms at the polyelectrolyte interface, extending approximately 100 nm into the ion solution (Fig. 19a-19c) (see [35],[58]) leading to a modulation in the local electric field. The changes in charge distribution and ion concentration can also be described by the chemical potential by a thermodynamic approach (Eq.24, see below). Since our setup allows a direct measurement of mass and charge, we describe the equivalent by the more direct approach using a theoretical model for the determination of the surface charge density utilizing a diffusion model (see [58]):

$$\sigma_i(t) = \sigma_{EDL}\left(1 - e^{\left(\frac{-t}{t_0}\right)}\right) + I_f\,t \qquad \text{Eq.3}$$

where If is the Faraday current density at the gate. We measured a constant gate current $I_{GS}$ (leakage current, 21 nA) during all experiments and deposition steps thus indicating a negligible redox potential at the electrode (Fig. 16a, 16b). Therefore, we assume If to be close to zero. The standard FET equation for $I_{DS}$ is:

$$I_{DS} = \frac{W}{L}\ C_i\ \mu\,(V_{GS} - V_T\,)V_{DS} \qquad \text{Eq.4}$$

where W is the channel width, L the channel length, Ci the insulating layer capacitance, $\mu$ the charge mobility in the rGO, and VT the threshold voltage. Rewriting Eq.4 as a function of the surface charge density (see [59]) and expressing the surface potential $\psi$ via the Debye-Hückel model (see Eq.2) we obtain Eq.5, which describes the modulation of the observed $I_{DS}$ as a consequence of $\psi$ from $\sigma_i$ due to ion diffusion and the depletion layer in the EDL:

$$I_{DS} = I_{DS,0} - WdL \int_{V_{GS}}^{V_{GS}-V_{DS}} \frac{\psi_i(V)}{\varepsilon\,\varepsilon_0\,\kappa}\,dV \cdot \left(1 - e^{\left(\frac{-t}{t_0}\right)}\right) \qquad \text{Eq.5}$$

where d is the polyelectrolyte layer thickness. Eq.5 describes the modulation of the observed IDS resulting from changes in the Fermi level of the rGO from the surface potential $\psi$(VGS), which is determined by the voltage drop in the PEMs and the potential drop at the solid-electrolyte interface in proximity of the depletion layer (Fig. 5a-5d). From Eq.2 and Eq.5 it becomes clear that the corresponding potential drop $\psi_i$, results in a change of the observed EG-FET signal.

The EG-FET signal after PDADMAC deposition gradually decreased throughout rinsing with KCl solution and equilibrated over about 15 minutes, while $\Delta$SPR stabilized rapidly. This observation hints at the loss of approximately 5% of the loosely bound surface layer (see [60]) into which the majority of the ions previously diffused. The desorption results in a surface charge density alteration and triggers the corresponding EDL formation, leading to a minute SPR response, but a distinct EG-FET response. Our observations originate from inherent material properties and corresponding ion interactions, leading to different charge densities at the surface. Therefore, rinsing with KCl after PSS deposition exhibits a less prominent but faster change to a stable current.

The applied electric field (from $V_{GS}$) effects the diffusion, depending on the charge polarity of ions by either slowing or accelerating the diffusion flux. To evaluate the characteristics of the observed behavior, kinetics obtained from the EG-FET regarding $\sigma_i$ were used for assessment of an arbitrary time ratio $\xi$, which is obtained from the time constant ratio of layer deposition and rinsing ($\xi$ = ton/toff). Therefore, we assume that the obtained time ratio $\xi$ reflects a measure for ion affinity during diffusion, similar to diffusion-influenced transport in transmembrane channels.(see [61]) $\xi$ = 1.7 $\pm$ 0.2 for PDADMAC at $V_{GS}$ = -400 mV and 1.3 $\pm$ 0.1 for +400 mV, while obtained $\xi$ values for PSS are 0.22 $\pm$ 0.02 at -400 mV and 0.32 $\pm$ 0.04 at +400 mV. This is intuitive because negatively charged PEMs layers have stronger affinities towards positively charged ions in the Helmholtz layer at positive applied $V_{GS}$. The values of $\xi$ for PDADMAC and PSS PEMs are different as measured with the EG-FET. Most likely the differences of $\xi$ are related to the polarity of $V_{GS}$, the corresponding Helmholtz double layer ion type, and the intrinsic charge of the PEMs. Furthermore, we speculate that the trapping of counterions is more pronounced in PSS layers due to ionic $\pi$-interactions (see [62]) leading to slower ion diffusion in comparison to PDADMAC. Additionally, the $\pi$-$\pi$ interactions of the PSS layer itself could lead to a difference in interlayer ion diffusion flux.

In summary, herein a powerful novel combinatorial sensing platform is presented which provides new insights into real-time surface processes and enables the direct measurement of surface charge density and mass obtained from electro/plasmonic signal transductions. This platform is applied to investigate PEM formation using a PDADMAC/PSS system in the first embodiment. Due to the complementary sensing principles, the solid-liquid interface can be investigated from different perspectives, which is crucial as certain processes are beyond the scope of each individual tool. For instance, sole observation of the layer formation via SPR would suggest a completed material deposition within 60 s whereas, the subsequent slower charge diffusion takes more than 15 min as observed by EG-FET. This is the first report of a SPR/EG-FET platform for simultaneous real-time monitoring under dynamic flow conditions, deconvoluting mass and charge contributions. Based on experimental observations, a theoretical model to account for the evolution of surface charge density due to PEM adsorption and intralayer ion diffusion is derived. The theory describes the time dependence of both mass uptake and charge distribution, elucidated from changes of the refractive index and surface potential at the solid-liquid interface. To this end, the Debye-Hückel model and non-Fickian diffusion theory were combined to unravel intrinsic material processes. Correlation of optical and electronic read-outs allows for the discrimination of superimposed signals which originate from charged mass uptake and subsequent surface charge redistribution. Each contribution was attributed to adsorbed and induced components by deconvoluting the superimposed, yet time-correlated, EG-FET signal from the SPR data. By doing so, it is possible to interpret an optical signal such that a direct comparison to an electronic signal. Thus, the bifunctional sensor platform is a new tool to monitor surface events by simultaneously analyzing both the adsorbed mass and the intrinsic molecular charges at the same surface and under dynamic conditions. These new insights can lead to a better understanding of intrinsic processes, aid in predicting material properties, and thus guide material and application development.

Details about the theoretical framework, further experiments, the experimental procedure and materials and chemicals regarding the first embodiment of the invention are given in the following section:

**I. Theoretical Framework**

**1) Development of the theoretical framework**

This chapter aims at a comprehensive evaluation of the electronic gFET read-out for LBL assembly. Fig. 6b shows the measurement of the layer-by-layer assembly from the manuscript. Fig. 6a shows the corresponding raw data. The baseline correction was performed by linear assumption of a baseline drift and subtraction, resulting in $\Delta I_{DS}$. The resulting $\Delta I_{DS}$ after the rinsing steps for each polyelectrolyte layer are shown in Fig. 6c to illustrate the stability of the system over 8 layers in a duration of more than 3 hours under continuous flow.

A detailed gFET and SPR response to the PDADMAC and PSS layer formations are shown in Fig. 7. For the fast reactions in Fig. 7 it is important to comment that the rapid responses cannot originate from flow variation due to the peristaltic pump used, as the pump needs about 3-5 min to flush the PEM into the flow cell, thus changing of the pump solution was performed significantly before these observed kinetics.

The discussion of the signal obtained from SPR/EG-FET measurements is based on three observations and considerations of sensing mechanisms regarding the sources of the convoluted signal output, which are described in the next section based on the theoretical framework depicted in this section, ascribing the effects to a) bulk changes b) surface charge accumulation; and c) capacitive effects.

For understanding the underlying effects, a few basic formulations and definitions have to be established.

The observed current $I_{DS}$ for the linear region of gFET devices can be formulated as:

$$I_{DS} = \frac{W}{L} \; C_i \; \mu \, (V_{GS} - V_T)V_{DS} \qquad V_{DS} \ll (V_{GS} - V_T) \quad \text{Eq. 6}$$

Where W is the FET's channel width, L the channel length, $C_i$ the insulating layer capacitance (from Gate to channel), $\mu$ is the charge carrier mobility, $V_{GS}$ the applied Gate voltage, $V_T$ the threshold voltage and VD the applied voltage from Source to Drain electrodes.

Emerging from the basic FET equation (Eq.6), the time dependency (Eq.7) of the separate variables is studied in regard to their dependencies to sensing mechanisms.

$$\frac{\partial I_{DS}}{\partial t} = \frac{W}{L} \; \frac{\partial C_i}{\partial t} \; \frac{\partial \mu}{\partial t} \left( V_{GS} - \frac{\partial V_T}{\partial t} \right) V_{DS} \quad \text{Eq. 7}$$

**Time dependence of charge carrier mobility** $\frac{\partial \mu}{\partial t}$ is the change of charge carrier mobility over time, depends on several factors, a significant one of those is the effective electric Field, which is described by the Poisson's equation for the effective Voltage of the FET channel in the x-coordinate from Gate to channel (see [63]):

$$F_x = \sqrt{\frac{2}{\varepsilon \varepsilon_r} \int_0^V e\rho(V)\partial V;} \quad \text{Eq. 8}$$

where $\varepsilon_r$ is the relative permittivity, $\varepsilon$ the absolute permittivity, e is unit charge and p(V) is the charge density.

Here the surface charge density $\sigma$ also needs to be introduced, which will be forth on divided in two components:

$$\sigma = \sigma_i + \sigma_a \quad \text{Eq. 9}$$

where $\sigma_i$ is the charge density induced to the surface by electric forces and $\sigma_a$ is the charge density, originating from adsorption of molecules to the surface. Therefor changes of the surface charge density originating from the electrolyte, namely Bulk- and capacitive -effects are ascribed to $\sigma_i$, while changes of the surface charge potential by direct adsorption of mass are ascribed to $\sigma_a$. The Poisson equation clearly shows that the change of surface charge density influences the electric field. On the other hand, it can be understood that similarly also for changes in the electric field, the surface charge density will be modified (the induced part $\sigma_i$).

The effective potential at the EG-FET surface by propagation of the electric field is lower than the applied voltage at the gate $V_{GS}$ due to a voltage drop depending on the distance from the electrode and the distribution of dielectric media on the propagation path and can be described by (see [63], [64]):

$$V_{GS,eff} = \frac{Q_{ind}}{C_i} + V_{fb} = \frac{\varepsilon \varepsilon_r F_x(0)}{C_i} + V_{fb} \quad \text{Eq. 10}$$

depending on the $V_{fb}$...flat band voltage which is the difference of the work function of the materials at the interface ($\Phi_{rGO}$ - $\Phi_{KCl}$) that can be obtained by electrochemical means, leading to the evaluation of $V_{GS,eff}$ at the surface. The described Ci is the insulator capacitance. For measurements without a gate-electrode (see Fig. 8), this part of the equation is 0, therefor $V_{GS,eff} = V_{fb}$. A change of the potential drop at the liquid/solid interface will change $V_{GS,eff}$ and hence the measured signal.

The interface of the electrolyte to the semiconductor with an applied capacitance is described by the Mott-Schottky equation (see [65]):

$$\frac{1}{C^2} = \frac{2}{\varepsilon\, \varepsilon_0 A^2\, q\, N_d}\, \left(V - V_{fb} - \frac{k_B T}{q}\right) \quad \text{Eq. 11}$$

$N_d$, the doping density, leads to a change of the FET-mobility due to surface binding of $\sigma$ and can be obtained from capacitive as well as resistance-based measurements. Doping generally refers to the introduction of impurities into a semiconductor, but in the Mott-Schottky concept it also describes the addition of electrons or holes (by the removal of electrons) into the rGO film.

The indirect way to explain $N_d$ is by describing the surface charge density, which does not take the following parameters into account; e.g. the signum of the charge, their polarity, binding affinity etc. but rather offers a very general description of charge distribution and its effect on the EG-FET. Although not all of these parameters regarding the interaction of the polymers with the rGO are known, the relation between doping density and surface charge distribution can still be obtained from Eq.10, using $C_{obs}$ for determination via the differential capacitance $C = d\sigma/d\psi$, using the surface potential $\psi$. The surface potential is described by linearization of the Poisson-Boltzmann equation and after rearrangement yields the Debye-Hückel model for the surface charge to surface potential relationship (see [66], [67]):

$$\psi = \frac{\sigma}{\varepsilon\, \varepsilon_0\, \kappa} \quad \text{Eq. 12}$$

which is valid for ionic liquids at interfaces taking into account the Grahame equation for the surface potential distribution, with the reciprocal of $\kappa$ being the Debye length $\lambda_D$:

$$\kappa = \frac{1}{\lambda_D} = \sqrt{\frac{2\, z^2 e^2\, n_0}{\varepsilon\, k_B\, T}}, \quad \text{Eq. 13}$$

where z is the valency of the ions, n0 is the concentration of ions in an infinite distance from the surface. Also, here the surface charge density is used to describe the surface potential.

The contribution by adsorption which corresponds to $\sigma_a$ is determined by the introduction of holes n or electrons e- in the rGO-channel. Without $V_{GS}$ the graphene channel current is determined by (see [68]):

$$I_{DS} = V_{DS} \cdot \frac{W}{L} \cdot n \cdot e^- \cdot \mu_{eff} \quad \text{Eq. 14}$$

where the mobility is governed by Matthiessen's rule: $\mu_{eff} = (\mu_{lattice}^{-1} + \mu_{impurity}^{-1} + \mu_{adsorption}^{-1})$ showing that the response signal is defined by lattice and doping parameters as well as the introduction of charge carriers.

In summary, the mobility, defined by these variables ($\psi$, $\rho$, $\sigma$, $V_{GS,eff}$, $\mu_{adsorption}$), is related to the charge density by Eq.15.

The time-dependence of the mobility can be described as (see [63]):

$$\frac{\partial \mu}{\partial t} = \frac{\partial \alpha_\rho / \partial t}{e\, \rho} \quad \text{Eq. 15}$$

with $\rho$ being the charge density and $\alpha_\rho$ the conductivity for a certain $\rho$.

Relating these observations to the approach to describe the surface charge density via $\sigma = \sigma_i + \sigma_a$, it can be

concluded that the mobility is determined by both the induced and the adsorbed surface charge. The charge carrier mobility in the EG-FET channel is determined by the change of conductivity (measured by $I_{DS}$) in the transistor and is directly given by the dependency of surface charge densities to the applied electric field:

$$\mu = \frac{1}{\rho_i e}\frac{d\sigma}{dV_{GS}}$$ Eq. 16

where $\rho_i$ is the induced charge carrier density at $V_{GS}$ = 1V.

**Time dependence of threshold voltage** $\frac{\partial V_T}{\partial t}$

For the threshold voltage the time dependence originates from changes in the semiconductor material and from the applied potential. $V_T$ is usually obtained by linear fits of the $I_{DS}V_{GS}$ transfer characteristics; for p- or n-type FETs it is the voltage at which the semiconductor is responding to $V_{GS}$. This comes from the intrinsic semiconductor and dielectric properties modulated by $\mu$ and $C_i$ and are therefore included in the parts above and below. For reduced graphene oxide, which is exerts ambipolar behavior of the transfer characteristics, $V_T$ is not considered as a separate physical quantity, rather than a measured factor used for qualitative determination of $I_{DS}$ from the transfer characteristics and will not be considered independently in this discussion.

**Time dependence of capacitance** $\frac{\partial C_i}{\partial t}$

Changes of capacitance over time will be evaluated in this section. The capacitance is defined by:

$$Q = C \cdot U$$ Eq. 17

giving the general dependency of charges Q to the applied voltage U (for the FET this is $V_{GS}$). For a certain geometry of a parallel plated capacitor with the use of a classical dielectrics, the capacitance can be calculated by the distance d between the plates (here the rGO and gate-electrodes), the area A and the dielectric permittivity $\varepsilon$:

$$C = \varepsilon_0 \varepsilon_r \frac{A}{d}$$ Eq. 18

Since the Applied $V_{GS}$, the thickness and area of the system are constant during measurements, capacitive changes of the system can originate only from variations in permittivity $\varepsilon_r$ or the surface charge $\sigma$. In our theoretical framework we assume $\varepsilon_r$ of the system constant at any given time during layer deposition. The adsorbed surface charge $\sigma_a$ leads to a minute change of the capacitance, which is then constant after mass adsorption (as seen from SPR). For the induced surface charge density $\sigma_i$, the time-dependent capacitance is given by the differential capacitance as described in electrochemistry by:

$$C = \frac{\partial \sigma}{\partial \psi}$$ Eq. 19

where C, $\sigma$ and $\Psi$ are capacitance, surface charge and electric surface potential.

As shown in Eq.12, the capacitance only has a time-dependence if the permittivity $\varepsilon_r$ and/or the Debye length $\lambda_D$ vary. Capacitive effects play a crucial role in EG-FET configured biosensors and in literature are often used as the primary source of the signal, the so called capacitive sensing (Torsi et al) (see [69]). It has been demonstrated that capacitive sensing does not suffer from Debye-screening limitations (see [70]) and coupled with advanced surface modification principles can lead to the enhancement of the biosensor signal, even down to the single molecule detection level (see [71]).

A good description for the capacitive effects was given by the Torsi group and concludes a strong dependency of the EG-FET signal to the ionic strength of the buffer solution and the charges originating from the donation layer (see [72], [73]) which in their case is a biomolecule-functionalized architecture, while for a LbL approach with polyelectrolytes it is also the polymeric layer and the thereby induced screening charge ions. The dependencies are shown in [73]). The effects originating from capacitive sensing can, for simplification, also be described by their influence on the channel material solely, deriving an expression from Ohm's law:

$$j_{DS} = \sigma F \qquad \text{Eq. 20}$$

where $j_{DS}$ is the drain current density and F the field from source to drain. Furthermore, we ascribe the capacitive effects to modulations of the channel via the integral of induced surface charge density (see [74]):

$$I_{DS} = -WdL \int_{V_{GS}}^{V_{GS}-V_{DS}} \sigma(V)\, dV \qquad \text{Eq. 21}$$

With d being the thickness of the polymer film. As shown in the chapter for charge carrier mobility, $C_i$ influences the mobility of the rGO layer and can therefore be used as the measuring quantity in the proper system configuration.

Relating these observations to the approach for the surface charge density $\sigma = \sigma_i + \sigma_a$, it can be concluded that the capacitance, in contrast to the mobility, varies by the induced surface charge and does not change after each layer deposition, once adsorbed surface charge $\sigma_a$ is established on the layer.

**2) Implementation of the theory for explanation of the experimental results**

Using the insights from the previous section the following section focuses on the outcome from the EG-FET/SPR system for LbL deposition as shown above in the description of the first embodiment and Fig. 6a-Fig. 6c. This section will focus on the effects of a) bulk changes, b) adhered surface charge density $\sigma_a$ and c) capacitive effects influencing the induced surface charge density $\sigma_i$.

**a) Bulk changes**

One Monomer of each polyelectrolyte has one charge (1eV). For PDADMAC, a monomer has 160 g/mol of molecular weight, the polymer has an average weight of 100 kDA. Therefore, 1 mg/ml of PDADMAC in 100 mM KCl as used in the experiment has a monomer concentration of 625 $\mu$M, which equals 60.2 Coulomb for a liter of solution. The sensing area of the cell has a volume of 5 $\mu$L, so 300 $\mu$C of charge should be introduced into the system at any given time. The ionic strength of the KCl buffer with PDADMAC is 100.625 mM in comparison to 100 mM for the washing steps, a difference of less than one percent.

For PSS, a monomer has 206 g/mol of molecular weight, whereas the polymer has an average weight less or equal than 70 kDA. Therefore, 1 mg/ml of PSS in 100 mM KCl has a monomer concentration of 475$\mu$M, which equals 47.75 Coulomb for a liter of the solution. The sensing area of the cell hast a volume of 5 $\mu$L, so 238 $\mu$C of charge should be introduced into the system at any given time. The ionic strength of the KCl buffer with PSS is 100.475 mM in comparison to 100 mM for the washing steps, a difference of less than one percent.

This yields changes in ionic strength of about 0.5%, which has a minute effect on the capacitive behavior of the system and the gating effect of the transistor. In relation to the signals obtained during sensing, bulk effects can therefore be neglected.

**b) Surface charge accumulation ($\sigma_a$)**

The current $I_{DS}$ is determined by the resistance of the channel which is inversely connected to the mobility of the transistor material (here rGO) by Ohm's law (see [75]):

$$R = \frac{1}{\mu \; C_i \frac{W}{L} (V_{GS} - V_T)} \qquad \text{Eq. 22}$$

This holds true because $I_{DS}$ is generated by flow through the transistor layer and not through the applied polymeric layers (R > 1 M$\Omega$ for both polyelectrolytes), a resistance several order of magnitude higher than the conducting material. Therefore, polyelectrolyte conductivity can be neglected.

The basic sensing principle for reduced graphene oxide (rGO) biosensors is based on binding or adsorption of analytes to the rGO surface or to the biorecognition units functionalized on the rGO. The principle of such direct sensors is in use, e.g. in graphene based chemiresistors (see [76]) or EG-FETs.

To conduct zero-capacitance measurements our simultaneous SPR/EG-FET setup could not be used, as a gold substrate, which again would introduce capacitive effects, is required for SPR measurements.

Thus, the zero-capacitance measurement setup consists of a two terminal configuration in which the gate-material was changed from an Au-coated glass slide to a non-coated glass-slide. As the gate was left floating the capacitance is also 0. The results from the measurement are shown in Fig. 8. For PDADMAC adsorption and the corresponding washing step the EG-FET signal from the zero-capacitance experiment is in good agreement with the signal from SPR in the standard configuration (see Fig. 9a, Fig. 9b). In contrast, while PSS adsorption can hardly be observed from the EG-FET signal in the zero-capacitance experiment the post-PSS rinsing steps can again be readily measured. We speculate that this effect for PSS is ascribed to repulsion of PSS from the surface, because the intrinsic negative charge of rGO (like PSS) (see [77]).

Exponential fits for the adsorption time constants ($t_{on}$) of SPR and EG-FET responses for polyelectrolytes, have been evaluated. Obtained time constants are shown in Fig. 10

The difference in the time constants for SPR and zero-capacitance EG-FET (two terminal configuration) signals are due to non-existing applied gate voltage (floating gate) and are shown in Fig. 10. The lack of applied voltage changes the surface potential and, as shown in Eq. 10 and Eq. 11, also the affinity to the surface and mobility of the rGO. Furthermore, the time kinetics for additional layers of the applied polyelectrolytes converge towards the signals obtained by SPR with increasing number of layers.

The discrepancy between initial layers and later deposited layers can be attributed due to incomplete layer formation for seed layers.

Strikingly, a much better agreement for the time constants obtained from zero-capacitance measurements to SPR (Fig. 10) is observed than for time constants from the combined SPR/EG-FET system (Fig. 6a-Fig. 6b and Fig. 7). As a result, it can be concluded that responses obtained from zero-capacitive measurement are attributed to the adsorbed surface charge density $\sigma_a$ (Eq. 9).

**Influence of gate-surface distance**

To further support these claims, the flow-cell gasket thickness was increased by a factor of 10, thereby decreasing the overall capacitance of the system (Eq. 18) by the same factor.

It was shown that the capacitive effects are diminished, the measurement is similar to the results obtained by using a non-conductive Gate-electrode (Fig. 11a). Albeit the capacitive effect still plays a minute roll in this measurement, the advantage of simultaneous SPR measurement, yields a direct comparison of the binding constants shown in Fig. 11b. The flow channel thickness is defined by the height of the gasket between the gold slide (gate electrode) and the drain-source electrodes.

Fig. 11b demonstrates that the time constants of this architecture are in good agreement to the time constants obtained from SPR measurements. Therefore, according to Eq. 9, decreasing the capacitance enables the observation of the adsorbed surface charge density, as the term $\sigma_i$, induced surface charge density, converges to 0, and results in comparable time constants between EG-FET and SPR readouts.

**c) Capacitive ($\sigma_i$)**

The induced surface charge density $\sigma_i$ can be obtained by the subtraction of the adsorbed surface charge density $\sigma_a$ from the total surface charge density $\sigma$, as proposed in Eq.9. Therefore, the measurement in Fig. 8 was subtracted from the submitted measurement in Fig. 6awith equivalence factors for normalization of 1,4 for PDADMAC (L5) and 2,9 for PSS (L4), to compensate the differences in sensor fabrication, shown in Fig. 12a, Fig. 12b.

Slow responses are directly related to ion diffusion in PEM, as discussed in Fig. 8: $\sigma_i$, As argumentized with regard to the first embodiment above the slow responses, for which their origin by the zero-capacitance experiment in the previous section to $\sigma_i$ was demonstrated, are directly connected to ion diffusion in the PEM layers. To evaluate the tendency for ion diffusion of the separate layers at different $V_G$ an arbitrary kinetic ratio $\xi$ was introduced which is obtained by exponential fitting of the response signals obtained by the subtracted data shown in Fig. 12a, Fig. 12b, eliminating the influence of $\sigma_a$ with the corresponding wah-off kinetics.

We defined this ratio by: $\xi = t_{on}/t_{off}$, where $t_{on}$ is the time constant in the fit from Fig. 12a, 12b and toff is the time constant from the corresponding wash-off step. The full fitting data is found in Table 1.

Table 1. $t_{on}$ and $t_{off}$ values for PDADMAC and PSS for positive and negative gate voltage $V_{GS}$

|  | PSS 400mV | PSS - 400mV | PDADMAC 400mV | PDADMAC -400mV |
|---|---|---|---|---|
| L3 $t_{on}$ |  |  | 0,0044 | 0,0049 |
| L3 $t_{off}$ |  |  | 0,0035 | 0,0031 |
| L4 $t_{on}$ | 0,0055 | 0,0040 |  |  |
| L4 $t_{off}$ | 0,015 | 0,016 |  |  |
| L5 $t_{on}$ |  |  | 0,0051 | 0,0058 |
| L5 $t_{off}$ |  |  | 0,0035 | 0,0032 |
| L6 $t_{on}$ | 0,0047 | 0,0039 |  |  |
| L6 $t_{off}$ | 0,016 | 0,020 |  |  |
| L7 $t_{on}$ |  |  | 0,0052 | 0,0051 |
| L7 $t_{off}$ |  |  | 0,0037 | 0,0038 |
| L8 $t_{on}$ | 0,0037 | 0,0039 |  |  |
| L8 $t_{off}$ | 0,017 | 0,013 |  |  |

Furthermore, the charge carrier density at the channel-electrolyte interface Q(V) in the accumulation regime of the semiconductor ($V < V_{fb}$). Can then be calculated by:

$$Q(V) = -\int_{-V_{fb}}^{V} C(V)\, \partial V \quad \text{Eq. 23,}$$

as demonstrated by the Berggren group (see [78]).

Such evaluations for charge distribution and similar studies also for diffusion processes not obtained by EG-FET platforms where until now, but always by means of electrochemistry (CV or EIS). However, the suitability of EG-FET systems as complementary tools for electrochemistry has been proposed before (see [79]). The discussed quantities can also be described by the chemical potential, which in turn is related to the surface potential at a solid/electrolyte interface. For single ion species this thermodynamic approach leads to (see [80]):

$$\overline{\mu}_i = \mu_i^0 + \left[\frac{R\, z_i q}{k_B}\, (\psi_2 - \psi_1)\right] + z_i q\, \psi \quad \text{Eq. 24,}$$

where $\mu_i^0$ is the chemical standard potential, R the molar gas constant, $\psi_1$, the potential at the solid interface, $\psi_2$ the potential at the liquid interface. This demonstrates that the applied theoretical framework could also be reformulated using the chemical potentials throughout the system rather than the surface potentials and charge density, which could be a useful mean for the description of more complex chemical experiments performed by the EG-FET/SPR setup where the charge of the analytes is not sufficient for a comprehensive explanation and the chemical activity has to be considered thoroughly.

## II. Complementary Experiments

This chapter describes additional experiments an illustrates different data representations to justify the developed theoretical framework on the EG-FET/SPR system.

The experiments were performed using a constant flow rate of 100 $\mu$l/min and 1 mg/ml PDADMAC and PSS concentrations in 0.1 M KCl electrolyte solutions. All EG-FET experiments were performed at $V_{DS}$ = 0.05 V using the same PDADMAC/PSS solutions as for SPR measurements.

Results for measurements with 20 mM KCl are shown in Fig. 13a, Fig. 13b. To promote LbL assembly the gold surface was activated by UV/ozone treatment beforehand. The initial separated EG-FET experiments were carried out in a flowcell with an Ag/AgCl wire as gating electrode. For the EG-FET/SPR approach, the gating electrode was replaced by the SPR Au-slide with 2 nm Cr adhesion layer and 50 nm Au layer. All kinetic SPR sensor measurements were calibrated with standard glucose solutions to relate the observed changes in SPR reflectivity to refractive index variations.

Dirac points are the minimum of the drain source current $I_{DS}$ at and are represented as an average of several $I_{DS}V_{GS}$ scans after each layer deposition. The resulting Dirac shift is a result of the effective electrostatic gating caused by differently charged polyelectrolytes and also depends on the ionic strength of the electrolyte solution, shown in Fig. 14a, Fig. 14b. The effect of ionic strength on SPR data, which influences the layer thickness, is shown in Fig. 15a, Fig. 15b.

**Different deposition rates at positive and negative applied potentials:**

Fig. 15a, Fig. 15b show the different PEM growths rates for positive and negative applied gate potentials. It has been previously shown in literature that the rate of deposition of the PEM can be controlled via the application of an external electric field. This effect is observed below voltages which would lead to electrolysis of water, for higher voltages the contribution of electrolysis is dominant.

For $V_{GS}$ = +/- 400 mV electrolysis of water only plays a minute role. The polarizability of charged polymers is much higher than water at such low potentials, the polymer chains exhibit instantaneous response to the electrostatic attraction by $V_{GS}$ (see [81]). Hence, electrophoretic deposition occurs and the electrostatic compensation process between cationic and anionic polyelectrolytes is stronger, resulting in thicker films as seen by the SPR signals which can be seen in Fig. 15a, Fig. 15b. Since the same potential strength with different signum was applied for our experiment, the difference of both measurements can therefore be explained by the different polarizability of PDADMAC and PSS at positive and negative potentials. The mean layer growth for the applied gate voltage $V_{GS}$ = -400 mV is 2,82 $\pm$ 0,06 nm and for $V_{GS}$ = +400 mV is 1,69 $\pm$ 0,06 nm according to Eq.1 and the accumulating layers are plotted in Fig. 15b.

Fig. 16a, Fig. 16b show the raw data including leakage current of the combined EG-FET/SPR measurement in one measurement chamber at simultaneous data acquisition. As can be seen, the leakage current is several orders of magnitude smaller than the electric response signal. We deem it therefore to be neglectable.

The $I_{DS}$ shifts at a fixed gate voltage $V_{GS}$ according to a change in the $I_{DS}V_{GS}$-curves due to the adsorption of PEM layers, which is visualized in Fig. 17a, Fig. 17b. The deposition of a PSS layer leads to a right shift of the Dirac point $V_i$, causing a decrease of the current $I_{DS}$, if the working point is adjusted via the gate voltage $V_{GS}$ to a negative slope along the transfer characteristic.

The $I_{DS}V_{GS}$ scan cannot be observed at the same time as the $I_D(t)$ measurements, because the gate voltage needs to be modulated to record transfer characteristics, while the time-resolved measurement requires a constant gate current. Therefore, the Dirac point shift $V_i$ is just a momentary snapshot, while $I_D(t)$ allows kinetic analysis.

**Voltage Drop across the PEM**

The voltage drop across the PEM was calculated with the measured drain source current $I_{GS}$ across the KCl ion solution which can be seen in Fig. 18a-Fig. 18c. With the initial state of the configuration, where RPEM = 0, the voltage drop is entirely across the electrolyte. The voltage drop after each polyelectrolyte double layer is calculated with Eq.25.

$$V_{PEM} = V_{GS}\frac{R_{PEM}}{R_{Total}} = V_{GS}\frac{R_{PEM}}{R_{el}+2\,R_{PEM}} \quad \text{Eq. 25}$$

**III. Experimental procedure**

**Preparation of the rGO-FETs**

First, Micrux chips (schematically are sonicated in a 1 % HELMANEX(III) Milli-Q® cleaning solution for 15 minutes, then rinsed with Milli-Q®, sonicated again and finally rinsed with pure EtOH and sonicated again. The chips are then thoroughly rinsed with Milli-Q® water and put into an absolute ethanol solution with 2%v/v APTES for 1 hour. Subsequently, the chips are cleaned with absolute ethanol, gently blow dried put in an oven at 120°C for 1 hour. After cooling down to room temperature, a 12.5 $\mu$g/ml solution of graphene oxide in Milli-Q® water is drop-casted on the chips and incubated for 2 hours at room temperature. The chips are then thoroughly rinsed again with Milli-Q® water.

For the thermo-chemical reduction of the graphene oxide to reduced graphene oxide (rGO), the chips are placed into a glass petri dish with 1 ml of hydrazine monohydrate and sealed with chemically and thermally resistant Kapton tape. After 4 hours at 80°C the chips are removed from the oven, cooled to room temperature and subsequently washed with Milli-Q® water. Next the chips are put into a vacuum oven at 200°C for an additional thermal reduction step. After 2 hours, the rGO-FETs are controlled once again by checking the resistance before being used.

SEM images of reduced graphene oxide deposited on interdigitated electrodes to obtain a drain-source channel for FET sensors, 90 interdigitated electrode pairs with a distance of 10 $\mu$m, corresponding to a total channel width of 490 mm.

The electrical characterization of the rGO EG-FET is given by the transfer characteristic of the finalized device, shown in Fig. 20. The influence on the scanning direction is shown in a slight shift of the Dirac point $V_i$, representing the hysteresis of the reduced graphene oxide upon field-effect probing direction.

**Preparation of the SPR Au-slides**

Standard microscope glass slides are placed into a 1% HELMANEX (III) aqueous solution and sonicated for 15 minutes. Then, the slides are cleaned with Milli-Q® water, put into pure ethanol and sonicated for an additional 15 minutes. Subsequently, the slides are placed on a slide holder which is mounted into a physical-vapor-deposition chamber. 2 nm Cr and then 50 nm Au (99.999%) are evaporated at roughly $1 \times 10^{-6}$ mbar at evaporation rates of about 0.1 Å/s. After the evaporation, the glass slides are stored in an Argon atmosphere until being used. The slides are cut to appropriate size before measuring.

**Preparation of the polyelectrolyte solutions**

PDADMAC and PSS solutions are prepared in concentrations of 1 mg/ml in KCl solutions with different ionic strengths (20 mM, 100 mM, 500 mM). This step is done one day before the measurement in order to give the polyelectrolytes enough time to unfold.

KCl solutions are prepared at different ionic strengths by dissolving the proper amount of KCl in Milli-Q® water.

**Experimental setup and details**

For the simultaneous measurement of SPR and EG-FET the experimental setup of the first embodiment of the invention is configured as follows:

The SPR 2 system in Kretschmann configuration was described in previous work (see [82]). Briefly, the collimated beam of a He-Ne laser ($\lambda$ = 633 nm, power 10 mW), passes a linear polarizer and a chopper before it is made incident on a prism 20 and the reflected beam is detected using a photodiode and a lock-in amplifier. To allow for angular scans, prism and detector are mounted on a 2-circle goniometer maintaining $\vartheta$ - $2\vartheta$ configuration. A SPR substrate, a glass slide coated with 50 nm of gold Au, is optically matched to the prism with immersion oil. Then, a gasket made of PDMS with flow cell with an embedded microfluidic channel is placed on the SPR 2 surface. To form a microfluidic channel, the glass substrate carrying the EG-FET 1 channel is placed on top and pressed on to seal the flow cell. The flow cell with a channel height of 400 $\mu$m and a channel width in the sensing chamber of 3.5 mm has a volume of 5 $\mu$l. The SPR 2 surface is electrically contacted to form the gate electrode 5 of the EG-FET 1.

The flow cell has the following dimensions: 400 $\mu$m height, 3.5 mm diameter, 5 $\mu$L sensing volume.

**Readout software for electrical and optical measurements**

Beside the development of the novel sensing platform, a software tool including a graphical user interface (GUI) was created to adjust the measurement parameters and log all measured and calculated values.

**IV. Materials and Hardware**

Chrome (99,9%) (MaTecK)
Metal evaporator (HHV Ltd. FL400 AUTO 306)
Gold 99,999% Au Granular 10g (MaTecK)
Multi-meter (Fluke)
U2722A USB Modular Source Measurement Unit (Keysight)
Peristaltic pump (ISMATEC ISM935C)
Molybdenum evaporation boats (HHV Ltd)
Heating oven (Thermo Scientific)
Kapton Tape (Amazon)
Tygon® 3350 tubing (ID = 0,64 mm, L = 300mm) (VWR)
Ultrasonicator ELMA S180H (Elmasonic)
Optical Microscope HR800 des Raman Systems (Horiba)

Ultimaker Cura S5 (Ultimaker)
High-refractive-index oil
Micrux chips IDE-1 (MicruX Technologies)

*Chemicals*

(3-Aminopropyl)triethoxysilane (99 %, Sigma Aldrich)
Helmanex(III) solution (VWR)
Ethanol absolute (99,8 %, VWR)
Graphene Oxide Water Dispersion (0.4 wt% Concentration, Graphenea)
Hydrazine monohydrate (64-65 %, reagent grade 98 %, Sigma Aldrich)
Potassium Chloride ($\geq$ 99 %, Sigma Aldrich)
Poly(diallyldimethylammonium chloride, PDADMAC, low molecular weight, average weight <100.000 Da, Sigma Aldrich)
Sodium 1-pyrenesulfonate (97 %. Sigma Aldrich)
Poly(sodium 4-styrenesulfonate, PSS, low molecular weight, average weight ~ 70.000 Da, Sigma Aldrich)

All chemicals and materials were used as received without further purification.

In the following, the invention is described with reference to a second preferred embodiment of the invention.

In the second embodiment a sensor arrangement 100 according to the invention is described. In the second embodiment the SPR sensor 2 comprises an electrically conductive optical fiber 6 which has an optically and electrically active surface. The optical fiber 6 comprises an electrical contact and forms the gate electrode 5 of the sensor arrangement 100. The reflective surface of the optical fiber 6 is guided into the sample chamber 3, in such a way that the dielectric medium, e.g. an electrolyte 4, can be contacted with the reflective surface. In the following the terms optical fiber and fiber optic(s) are used synonymously.

In the second embodiment simultaneous optical and electric sensing is achieved by using a field-effect transistor (FET) 1 and a gold-coated fiber optic (FO) 6 tip which functions as a gate electrode 5 and surface plasmon resonance (SPR) 2 probe (**FO-SPR/FET**). In this approach a FET chip 17, coated with a semiconducting channel material (e.g. graphene) is inserted in a sample chamber 3, brought in contact with electrolyte 4 (sample solution) and the FO 6 tip is dipped into it at a defined distance (Fig. 22a, Fig. 22b).

Fig. 22a shows a schematic representation of the combined FO-SPR/FET setup in backscattering detection mode as an overview. Fig. 22b shows a detail of the reaction chamber, i.e. the sample chamber 3 with Au-coated FO 6 tip dipped into the electrolyte 4, acting as SPR 2 probe and gate electrode 5. Reference numeral 11 represents the electromagnetic radiation source, 12 a detector, e.g. a spectrometer, for detection of reflected light, 61 is the silica core of an optical fiber 6, 62 the jacket of the optical fiber 6 and 63 the cladding of the optical fiber 6. $L_i$ is the incident light, $L_r$ is the reflected light.

In order to generate an SPR 2 active surface on the optical fiber 6, the FO 6 jacket and cladding are removed from the FO 6 tip and the silica core is coated with a thin gold layer (50 nm). The Au layer is also electrically contacted to enable the usage of the tip as gate electrode for the FET. Light from a white light source is launched to an optical fiber and guided to the FO 6 tip where its interaction with surface plasmons is encoded to its wavelength spectrum and it is reflected, separated from the incident wave by using a Y-fiber optic splitter and delivered to a spectrometer (backscattering detection mode). The coupling of the light to the surface plasmon modes gives rise to a characteristic resonant dip in the wavelength-resolved spectrum of the reflected intensity (see [1], [2] second embodiment). A binding event on the surface of the FO tip leads to a refractive index change and thus to a shift of the resonance excitation. In addition, a biorecognition event on the FO tip, acting as gate electrode, changes the local charge distribution and leads to an electrostatic field-effect (electrostatic gating). This results in a modulation of the drain-source current ($I_{DS}$) in the channel material and an associated change of the transfer characteristics (shift of the $I_{DS}$-$V_{GS}$ curve) of the FET (see [3], [4] second embodiment).

Many of the drawbacks associated with the traditional SPR configuration (e.g. large size, expensive optical equipment, precise mechanical components) can be compensated by replacing the traditionally used prism with an optical fiber 6 (see [2] second embodiment). FO-SPR probes (e.g. multimode fiber, core-ø = 400 $\mu$m, numerical aperture = 0.37, 0.6 cm long SPR active tip coated with 50 nm Au layer) can be fabricated according to reported procedures (see [2], [5] second embodiment) and then functionalized with biorecognition elements (see [6]-[12] second embodiment). The combination with a FET allows the simultaneous detection of surface mass and charge effects and can therefore lead to a better understanding of the electrical readout in comparison with the well-established optical signal (see [13] second embodiment). The use of a sample chamber 3 offers the advantage of using liquid samples in smaller quantities compared to a flow cell device. Furthermore, it can be expanded to a 96-well plate, containing several FET sensing areas and moving one (or several) FO-SPR tip(s) from one to the other, allowing a high-throughput screening (Fig. 23a-Fig.23c).

Such 96-well plates are described in, e.g. US patent application US 2005/0112544 A1, and illustrated in Fig. 3 and Fig. 15(B) which correspond to Fig. 23b and Fig. 23c. Fig. 23a shows a representative image of a 96-well plate (e.g. available from Applied BioPhysics, Inc. https://applied-biophysics-inc.myshopify.com/collections/96-well-arrays/products/96w20idf-pet) containing numerous sensing areas with interdigitated electrodes (see [14] second embodiment) where the channel material can be deposited. High-throughput optical and electronic screening can be achieved by moving one (or several) FO-SPR tip(s) through the wells containing the analyte solution.

Alternatively, FO-SPR segment 16 can be combined with a FET chip 17 in a flow cell configuration. This can be achieved by i) using a FO 6 with intermediate SPR sensitive zone (forward scattering detection mode) with an analyte flow along the fiber (see [2], [15]-[31] second embodiment) (Fig. 24), or ii) by exposing the FO-SPR tip (backscattering detection mode) to the chamber of the flow cell (see [32]-[33] second embodiment).

Fig. 24 shows a schematic representation of FO-SPR / FET combinations in a flow cell arrangement by using a FO 6 with intermediate SPR sensitive zone, used in forward scattering detection mode. Reference numeral 13 represents the inlet, 14 the outlet, 11 the electromagnetic radiation source, 12 a spectrometer for detection of reflected light, 61 is the silica core of an optical fiber 6, 62 the jacket of the optical fiber 6 and 63 the cladding of the optical fiber 6, 8 the source electrode, 9 the drain electrode, 15 the FET chip. $L_i$ is the incident light and $L_t$ is the transmitted light.

However, using FO-SPR compared to classical SPR devices yields a lower sensitivity (see [2] second embodiment). A high sensitivity is needed to make it a competitive biosensor but also to resolve e.g. conformational changes of bound molecules which cause charge redistributions and impact the electrical signal. In order to improve the sensitivity, multiple metal layers, e.g. double-metal layer system based on silver Ag and gold Au, could be used in order to profit from the better sensitivity of silver Ag (inner layer) and the better chemical stability of gold Au (outer layer) (see [34]-[37] second embodiment) (Fig. 25a, 25b).

Fig. 25a and Fig. 25b show schematic representations of double-metal-layer FO-SPR sensors, in this case with an inner layer of silver Ag with thickness $d_1$ and an outer layer of gold Au with thickness $d_2$ (d, > $d_2$), in forward scattering detection mode (Fig. 25a) and backscattering detection mode (Fig. 25b). $L_i$ is the incident light, $L_r$ is the reflected light and $L_t$ is the transmitted light.

Alternatively, instead of multiple metallic layers, a dielectric intermediate layer such as a dielectric buffer layer DBL (e.g. low refractive index fluoropolymers such as Teflon AF or Cytop) could be attached to the FO silica core 61 in combination with a metallic layer, e.g. Au on top (Fig. 26). Therefore, the metal layer would be surrounded by two dielectric layers with similar refractive index, the aqueous electrolyte 4 on one side and the dielectric buffer layer DBL on the other side. If the metal layer is made thin enough, the surface plasmon waves on both sides of the metal surface couple and form new modes such as long-range surface plasmons (LRSP) and short-range surface plasmons (SRSP) (see [38]-[39] second embodiment). The longer propagation length of LRSPs reduces the width of the resonance feature and could yield a higher sensitivity for the FO-LRSPR sensor compared to a FO-SPR configuration (see [34], [39] second embodiment).

Fig. 26 shows a schematic representation of a FO-LRSPR sensor using a dielectric buffer layer DBL between the FO silica core 61 and the metal layer (Au) (in forward scattering detection mode). $L_i$ is the incident light, $L_r$ is the reflected light and $L_t$ is the transmitted light.

Another possibility for boosting the FO-SPR sensitivity is by modifying the FO 6 tip with nanostructures (i.e. metallic nanoparticles (NPs), nanorods, etc. see figure 29) and enabling localized surface plasmon resonance (LSPR) (see [2] [34] second embodiment).

It has been reported that LSPR allows observation of conformational changes of bound species to nanostructures (see [40]-[42] second embodiment). FO tips containing nanostructures functionalized with various bioreceptors can be achieved by i) direct deposition of metallic NPs (e.g. gold or silver, or alloy nanoparticles) onto the FO 6 sensitive area (see [43]-[50] second embodiment) or ii) altering the morphology of thin metal film coated FO 6 tips with special surface treatments (e.g. lithography) (see [51]-[67] second embodiment). In order to use this approach in a combined FO-LSPR/FET platform, the FO 6 tip is coated with a transparent conductive film (e.g. indium tin oxide, ITO) onto which nanostructures (e.g. Au NPs, different shapes and sizes) are deposited (Fig. 27).

Fig. 27 shows a schematic representation of metallic nanoparticles NP attached to a transparent conductive layer TCL on the FO core 61 enabling LSPR (in forward scattering detection mode). The electron cloud EC is located around the metallic nanoparticles NP and the transmitted light $L_t$ is represented as an upward pointing arrow on the right-hand side of Fig. 27.

The NPs are then functionalized with biorecognition units and the remaining ITO surface is passivated with an anti-fouling agent. Different strategies for ITO functionalization have been reported (see [68]-[79] second embodiment). Functionalized FO-LSPR tips are then used the same way as before-mentioned FO-SPR tips, whereas the incident light $L_i$ can couple through the transparent ITO layer to the nanostructures and excite the localized surface plasmons. Furthermore, the ITO coated fiber can be connected as gate electrode to the electronic system enabling a simultaneous electronic and optical readout. This could provide fundamental insights into biorecognition events and new design strategies for the next generation of biosensors.

In the following, further advantageous features which can be combined with any embodiment of the invention are described.

**Organic Semiconductors**

The key to all printed electronics applications is the organic semiconductor (OSC) and its custom-tailored properties. A semiconductor is defined as "a nonmetallic solid that has electrical conductivity between that of a conductor and an insulator" (see [1] further embodiments). All OSCs share the feature of an extended $\pi$-conjugated system, allowing electrons to delocalize over the entire molecular backbone. This $\pi$-system is realized via the $sp^2$ hybridization of carbon in a double bond or aromatic system, leaving a $p_z$ orbital available for $\pi$-bonding, thus giving rise to charge carrier mobility (see [2] further embodiments and

The key feature of OSCs is their solubility in common organic solvents (including water) which allows to print them on various (flexible) substrates, while exhibiting electrical properties that rival with those of amorphous silicon (see [2] further embodiments).

Pentacenes and its derivatives hold a special position amongst OSCs as devices based on these materials were the first to show charge carrier mobilities in the range of amorphous silicon (see [3]-[5] further embodiments). Desirable physico-electronic properties of acenes scale with the degree of annelation due to predicted lower reorganization energy,6 potential higher charge carrier mobility (see [7] further embodiments) and smaller energy band gaps (see [8] further embodiments). By incorporating additional heteroatoms, such as nitrogen (or sulfur, germanium) into the molecular backbone, lower HOMO levels are obtained, thus improving stability and modifying the transducing character of the material (see [9]-[12] further embodiments).

Perovskite materials are defined by a specific crystalline morphology, based on the crystal lattice of CaTiOs. Organolead trihalide perovskites (OTPs), which have emerged as a new generation of photovoltaic material and produced high power conversion efficiencies of around 20% within four years of their development (see [13]-[19] further embodiments), they are currently the fastest-advancing solar technology. The key advantages are the high absorption rates and properties of the lattice combined with the possible fabrication methods like printing techniques to obtain semiconducting, direct-detection based transducing materials for optical or ionizing radiation wavelengths.

**Organic Field-Effect Transistor Sensors**

An organic field-effect transistor (OFET) is the heart of such novel electronic devices and basically an electrical switch. The standard OFET configuration, consists of three parts: an insulator, an organic semiconductor (OSC) and three electrodes. The "source" electrode 8 and the "drain" electrode 9 are in direct contact with the semiconductor 7, while the third electrode, the "gate" electrode 5, is isolated from the OSC by the "insulator" (see [1] further embodiments).

By applying a voltage between the gate electrode 5 and the source/drain electrodes 8,9 , charges of opposite sign are induced at the semiconductor-dielectric interface. Because the charges in the semiconductor 7 are mobile, a current is established in the channel when applying voltage between source and drain (see [13] further embodiments).

In contrast to traditional silicon FETs, OFETs operate in accumulation mode rather than in inversion (see [14] further embodiments). However, many equations that describe silicon FETs are applicable to OFETs such as equation 1 below, which describes the drain-source current $I_{DS}$ in the saturation regime. See Eq. 4 and 6.

Where $C_i$ is the capacitance per unit area of the dielectric, W and L are OFET channel width and length, $V_{GS}$ is the gate voltage, $\mu$ is the OSC field-effect mobility, and $V_T$ is the threshold voltage. Fundamentally, mobility describes the relationships between the carrier velocity and the applied electric field in a given material and is widely regarded as the most significant figure of merit to evaluate the performance of field effect transistors (see [14] further embodiments).

When such a device (OFET) is exposed to different stimuli or environmental conditions (e.g. gases, light, radiation, etc.) one can use the resulting current modulation and correlate to the stimuli to obtain a (bio-)sensor.

As also mentioned above, in a sensor arrangement 100 according to the invention, a number, preferably a plurality, of metal layers, can be arranged on the gate electrode 5. Such metal layers may preferably have a thickness of from 10 nm to 200 nm and may consist of gold Au or silver Ag, as described above, but also of aluminium, copper, or alloys containing these metals.

Apart from that, a dielectric intermediate layer may be arranged on the gate electrode 5, e.g. under the one or more metal layers which are placed on the gate electrode 5. Such a dielectric intermediate layer may preferably be 1 nm to 300 nm thick. The dielectric intermediate layer may preferably have a refraction index similar to the refraction index of the dielectric medium 7.

In the preferred embodiment in Fig. 26 the dielectric intermediate layer is arranged on the core of the optical fiber 6 which is used as the gate electrode 5, but such a dielectric layer can be combined with any gate electrode suitable for a sensor arrangement 100 according to the invention. Such a dielectric intermediate layer may consist of, e.g. Teflon AF, Cytop, a self-assembled monolayer of organic molecules, a polymer layer, or a metal oxide layer.

As also mentioned above, in a sensor arrangement 100 according to the invention, the one or more metal layers can be attached to the gate electrode 5 in

- a planar manner, e.g. in the manner of a Kretschmann configuration, or
- the form of periodic nanostructures such as nanoparticles NP which can form a grating G (see Fig. 28). Such a grating G may have a periodicity of between 1 to 1000 nm.

Such nanostructures may be combined with any gate electrode 5 which is suitable for a sensor arrangement 100 according to the invention.

Of course, the periodic nanostructures, e.g., nanoparticles NP, may have various shapes such as a spherical, ellipsoid, tetrahedral, pyramid, cuboidal, cylindrical, tetrapod, or stellate shape, or combinations thereof (see Fig. 29). The size of the nanostructures may preferably range from 1 nm to 1000 nm. Fig. 29 also shows the electric field EF and the electron cloud EC around the nanoparticles NP.

Fig. 30a, Fig. 30b and Fig. 30c show examples of the arrangement of the sample chamber 3 in a sensor arrangement 100 according to the invention. For instance, the sample chamber 3 may be arranged

- between the gate electrode 5 and the semiconducting material 7 of the field-effect transistor 1 (electrolyte gated with top or side gate; Fig. 30a, Fig. 30b), or
- on top of the gate electrode 5 and connected to the semiconducting material 7 of the field-effect transistor 1 via the gate electrode 5, (floating gate, Fig. 30c).

Of course, the sample chamber 3 may be arranged spatially separate from the field-effect transistor 1, wherein the gate electrode 5 of the field-effect transistor 1 is connected to the active surface of the surface plasmon resonance sensor 2 contacting the dielectric medium in the sample chamber 3 (see Fig. 30d, which shows a schematic representation of an extended gate FET, which is described in more detail in reference numeral [15].

In Fig. 30d a reference electrode 30 is used to apply a potential and an active substrate such as a planar gold slide, optically connected via prism or grating-coupled or an optical fiber is electrically connected to the gate electrode 5 of the field effect-transistor via an electrical connection 40. Fig. 30d also mentions some materials for individual components which are only exemplary.

Of course, a sensor arrangement 100 according to the invention can be used in a measuring arrangement 200 for simultaneous measurement of optical and electrical properties of a dielectric medium to be investigated, as well as the analytes contained therein.

In the following, an embodiment of such a measuring arrangement 200 is described briefly. In such a measuring arrangement 200 the source electrode 8 and the drain electrode 9 are connected to the semiconducting material 7 of the field-effect transistor 1 and the gate electrode 5 of the field-effect transistor 1 is configured to vary the conductivity of the semiconducting material depending on an electric field EF between the gate electrode 5 and the semiconducting material 7.

The measuring arrangement 200 further includes an electromagnetic radiation source 11 which is arranged and designed such that a portion of the energy of the electromagnetic radiation incident on the surface of the gate electrode 5 is absorbed by the gate electrode 5. The wavelength of the radiation source may range from 270 nm to 1000 nm. If the sensor arrangement 100 comprises an optical fiber 6 as gate electrode 5, light source couples light into the optical fiber 6.

A detector 12 of the measurement arrangement 200 measures the intensity of the electromagnetic radiation reflected from the surface of the gate electrode 5.

A control and processing unit is connected to the source electrode 7, the drain electrode 8, and the gate electrode 5 of the field-effect transistor 1. Such a control and processing unit may comprise a voltmeter 19 as shown in Fig. 1 which is designed to specify the voltage at the gate electrode 5 and to determine, and in particular chart, the conductivity of the semiconducting material 7. The control and processing unit or another control and processing unit may be connected to the detector 12 and is designed to chart, in particular display, the intensity of the reflected electromagnetic radiation.

If the measuring arrangement 200 comprises an optical fiber 6 as gate electrode 5, it may also comprise a Y fiber optic splitter 21 as shown in Fig. 22a. The Y fiber optic splitter 21 guides light from the electromagnetic radiation source 11 to the reflecting surface of the optical fiber 6 and light which is reflected by the reflecting surface of the optical fiber 6 to the detector 12.

Of course, a measurement arrangement 200 according to the invention may also comprise a plurality of sample chambers 3 for a dielectric medium 4 and a plurality of gate electrodes 5, wherein each sample chamber 3 has its own gate electrode 5. Each gate electrode 5 forms the active surface of the surface plasmon resonance sensor 2 of each sample chamber 3. Such an arrangement is especially favorable in combination with optical fibers 6 acting as gate electrodes 5 and a multi-well plate as shown in Fig. 23a-23c.

**References first embodiment**

[1] Das, A.; Pisana, S.; Chakraborty, B.; Piscanec, S.; Saha, S. K.; Waghmare, U. V.; Novoselov, K. S.; Krishnamurthy, H. R.; Geim, A. K.; Ferrari, A. C.; Sood, A. K. Monitoring Dopants by Raman Scattering in an Electrochemically Top-Gated Graphene Transistor. Nature Nanotech 2008, 3 (4), 210-215. https://doi.org/10.1038/nnano.2008.67.

[2] Kergoat, L.; Herlogsson, L.; Braga, D.; Piro, B.; Pham, M.-C.; Crispin, X.; Berggren, M.; Horowitz, G. A Water-Gate Organic Field-Effect Transistor. Advanced Materials 2010, 22 (23), 2565-2569. https://doi.org/10.1002/adma.200904163.

[3] Palazzo, G.; De Tullio, D.; Magliulo, M.; Mallardi, A.; Intranuovo, F.; Mulla, M. Y.; Favia, P.; Vikholm-Lundin, I.; Torsi, L. Detection Beyond Debye's Length with an Electrolyte-Gated Organic Field-Effect Transistor. Adv. Mater. 2015, 27 (5), 911-916. https://doi.org/10.1002/adma.201403541.

[4] Casalini, S.; Leonardi, F.; Cramer, T.; Biscarini, F. Organic Field-Effect Transistor for Label-Free Dopamine Sensing. Organic Electronics 2013, 14 (1), 156-163. https://doi.org/10.1016/j.orgel.2012.10.027.

[5] Ang, P. K.; Chen, W.; Wee, A. T. S.; Loh, K. P. Solution-Gated Epitaxial Graphene as PH Sensor. J. Am. Chem. Soc. 2008, 130 (44), 14392-14393. https://doi.org/10.1021/ja805090z.

[6] Sailapu, S. K.; Macchia, E.; Merino-Jimenez, I.; Esquivel, J. P.; Sarcina, L.; Scamarcio, G.; Minteer, S. D.; Torsi, L.; Sabaté, N. Standalone Operation of an EGOFET for Ultra-Sensitive Detection of HIV. Biosensors and Bioelectronics 2020, 112103. https://doi.org/10.1016/j.bios.2020.112103.

[7] Berto, M.; Diacci, C.; D'Agata, R.; Pinti, M.; Bianchini, E.; Lauro, M. D.; Casalini, S.; Cossarizza, A.; Berggren, M.; Simon, D.; Spoto, G.; Biscarini, F.; Bortolotti, C. A. EGOFET Peptide Aptasensor for Label-Free Detection of Inflammatory Cytokines in Complex Fluids. Advanced Biosystems 2018, 2 (2), 1700072. https://doi.org/10.1002/adbi.201700072.

[8] Macchia, E.; Manoli, K.; Holzer, B.; Franco, C. D.; Ghittorelli, M.; Torricelli, F.; Alberga, D.; Mangiatordi, G. F.; Palazzo, G.; Scamarcio, G.; Torsi, L. Single-Molecule Detection with a Millimetre-Sized Transistor. Nature Communications 2018, 9 (1), 3223. https://doi.org/10.1038/s41467-018-05235-z.

[9] Pappa, A.-M.; Parlak, O.; Scheiblin, G.; Mailley, P.; Salleo, A.; Owens, R. M. Organic Electronics for Point-of-Care Metabolite Monitoring. Trends in Biotechnology 2018, 36 (1), 45-59. https://doi.org/10.1016/j.tibtech.2017.10.022.

[10] Homola, J. Surface Plasmon Resonance Sensors for Detection of Chemical and Biological Species. Chem. Rev. 2008, 108 (2), 462-493. https://doi.org/10.1021/cr068107d.

[11] Liedberg, B.; Nylander, C.; Lunström, I. Surface Plasmon Resonance for Gas Detection and Biosensing. Sensors and Actuators 1983, 4, 299-304. https://doi.org/10.1016/0250-6874(83)85036-7.

[12] Olaru, A.; Bala, C.; Jaffrezic-Renault, N.; Aboul-Enein, H. Y. Surface Plasmon Resonance (SPR) Biosensors in Pharmaceutical Analysis. Critical Reviews in Analytical Chemistry 2015, 45 (2), 97-105. https://doi.org/10.1080/10408347.2014.881250.

[13] Homola, J. Present and Future of Surface Plasmon Resonance Biosensors. Anal Bioanal Chem 2003, 377 (3), 528-539. https://doi.org/10.1007/s00216-003-2101-0.

[14] Englebienne, P.; Hoonacker, A. V.; Verhas, M. Surface Plasmon Resonance: Principles, Methods and Applications in Biomedical Sciences. Spectroscopy 2003, 17 (2-3), 255-273. https://doi.org/10.1155/2003/372913.

[15] Piliarik, M.; Vaisocherová, H.; Homola, J. Surface Plasmon Resonance Biosensing. In Biosensors and Biodetection; Rasooly, A., Herold, K. E., Eds.; Methods in Molecular BiologyTM; Humana Press: Totowa, NJ, 2009; pp 65-88. https://doi.org/10.1007/978-1-60327-567-5_5.

[16] Bouffartigues, E.; Leh, H.; Anger-Leroy, M.; Rimsky, S.; Buckle, M. Rapid Coupling of Surface Plasmon Resonance (SPR and SPRi) and ProteinChipTM Based Mass Spectrometry for the Identification of Proteins in Nucleoprotein Interactions. Nucleic Acids Res 2007, 35 (6), e39-e39. https://doi.org/10.1093/nar/gkm030.

[17] Zhang, X.; Young, M. A.; Lyandres, O.; Van Duyne, R. P. Rapid Detection of an Anthrax Biomarker by Surface-Enhanced Raman Spectroscopy. J. Am. Chem. Soc. 2005, 127 (12), 4484-4489. https://doi.org/10.1021/ja043623b.

[18] Sergelen, K.; Fossati, S.; Turupcu, A.; Oostenbrink, C.; Liedberg, B.; Knoll, W.; Dostálek, J. Plasmon Field-Enhanced Fluorescence Energy Transfer for Hairpin Aptamer Assay Readout. ACS Sens. 2017, 2 (7), 916-923. https://doi.org/10.1021/acssensors.7b00131.

[19] Rodrigo, D.; Tittl, A.; Ait-Bouziad, N.; John-Herpin, A.; Limaj, O.; Kelly, C.; Yoo, D.; Wittenberg, N. J.; Oh, S.-H.;

Lashuel, H. A.; Altug, H. Resolving Molecule-Specific Information in Dynamic Lipid Membrane Processes with Multi-Resonant Infrared Metasurfaces. Nat Commun 2018, 9 (1), 1-9. https://doi.org/10.1038/s41467-018-04594-x.

[20] Mulla, M. Y.; Tuccori, E.; Magliulo, M.; Lattanzi, G.; Palazzo, G.; Persaud, K.; Torsi, L. Capacitance-Modulated Transistor Detects Odorant Binding Protein Chiral Interactions. Nature Communications 2015, 6, 6010. https://doi.org/10.1038/ncomms7010.

[21] Panzer, M. J.; Frisbie, C. D. Exploiting Ionic Coupling in Electronic Devices: Electrolyte-Gated Organic Field-Effect Transistors. Adv. Mater. 2008, 20 (16), 3177-3180. https://doi.org/10.1002/adma.200800617.

[22] Barbara, M.; Bonfiglio, A.; Raffo, L. A Charge-Modulated FET for Detection of Biomolecular Processes: Conception, Modeling, and Simulation. IEEE Transactions on Electron Devices 2006, 53 (1), 158-166. https://doi.org/10.1109/TED.2005.860659.

[23] Cramer, T.; Kyndiah, A.; Murgia, M.; Leonardi, F.; Casalini, S.; Biscarini, F. Double Layer Capacitance Measured by Organic Field Effect Transistor Operated in Water. Appl. Phys. Lett. 2012, 100 (14), 143302. https://doi.org/10.1063/1.3699218.

[24] Ohno, Y.; Maehashi, K.; Yamashiro, Y.; Matsumoto, K. Electrolyte-Gated Graphene Field-Effect Transistors for Detecting PH and Protein Adsorption. Nano Lett. 2009, 9 (9), 3318-3322. https://doi.org/10.1021/nl901596m.

[25] Torsi, L.; Magliulo, M.; Manoli, K.; Palazzo, G. Organic Field-Effect Transistor Sensors: A Tutorial Review. Chem. Soc. Rev. 2013, 42 (22), 8612-8628. https://doi.org/10.1039/C3CS60127G.

[26] Tibaldi, A.; Fillaud, L.; Anquetin, G.; Woytasik, M.; Zrig, S.; Piro, B.; Mattana, G.; Noël, V. Electrolyte-Gated Organic Field-Effect Transistors (EGOFETs) as Complementary Tools to Electrochemistry for the Study of Surface Processes. Electrochemistry Communications 2019, 98, 43-46. https://doi.org/10.1016/j.elecom.2018.10.022.

[27] Nakatsuka, N.; Yang, K.-A.; Abendroth, J. M.; Cheung, K. M.; Xu, X.; Yang, H.; Zhao, C.; Zhu, B.; Rim, Y. S.; Yang, Y.; Weiss, P. S.; Stojanovic, M. N.; Andrews, A. M. Aptamer-Field-Effect Transistors Overcome Debye Length Limitations for Small-Molecule Sensing. Science 2018, 362 (6412), 319-324. https://doi.org/10.1126/science.aao6750.

[28] Goda, T.; Maeda, Y.; Miyahara, Y. Simultaneous Monitoring of Protein Adsorption Kinetics Using a Quartz Crystal Microbalance and Field-Effect Transistor Integrated Device. Anal. Chem. 2012, 84 (17), 7308-7314. https://doi.org/10.1021/ac3015092.

[29] Okuda, S.; Ono, T.; Kanai, Y.; Ikuta, T.; Shimatani, M.; Ogawa, S.; Maehashi, K.; Inoue, K.; Matsumoto, K. Graphene Surface Acoustic Wave Sensor for Simultaneous Detection of Charge and Mass. ACS Sens. 2018, 3 (1), 200-204. https://doi.org/10.1021/acssensors.7b00851.

[30] Kojori, H. S.; Ji, Y.; Paik, Y.; Braunschweig, A. B.; Kim, S. J. Monitoring Interfacial Lectin Binding with Nanomolar Sensitivity Using a Plasmon Field Effect Transistor. Nanoscale 2016, 8 (39), 17357-17364. https://doi.org/10.1039/C6NR05544C.

[31] Decher, G.; Eckle, M.; Schmitt, J.; Struth, B. Layer-by-Layer Assembled Multicomposite Films. Current Opinion in Colloid & Interface Science 1998, 3 (1), 32-39. https://doi.org/10.1016/S1359-0294(98)80039-3.

[32] Dubas, S. T.; Schlenoff, J. B. Factors Controlling the Growth of Polyelectrolyte Multilayers. Macromolecules 1999, 32 (24), 8153-8160. https://doi.org/10.1021/ma981927a.

[33] Ai, H.; Jones, S. A.; Lvov, Y. M. Biomedical Applications of Electrostatic Layer-by-Layer Nano-Assembly of Polymers, Enzymes, and Nanoparticles. Cell Biochem Biophys 2003, 39 (1), 23. https://doi.org/10.1385/CBB:39:1:23.

[34] Piccinini, E.; Bliem, C.; Reiner-Rozman, C.; Battaglini, F.; Azzaroni, O.; Knoll, W. Enzyme-Polyelectrolyte Multilayer Assemblies on Reduced Graphene Oxide Field-Effect Transistors for Biosensing Applications. Biosensors and Bioelectronics 2017, 92, 661-667. https://doi.org/10.1016/j.bios.2016.10.035.

[35] Piccinini, E.; Alberti, S.; Longo, G. S.; Berninger, T.; Breu, J.; Dostalek, J.; Azzaroni, O.; Knoll, W. Pushing the Boundaries of Interfacial Sensitivity in Graphene FET Sensors: Polyelectrolyte Multilayers Strongly Increase the Debye Screening Length. J. Phys. Chem. C 2018, 122 (18), 10181-10188. https://doi.org/10.1021/acs.jpcc.7b11128.

[36] Michel, M.; Taylor, A.; Sekol, R.; Podsiadlo, P.; Ho, P.; Kotov, N.; Thompson, L. High-Performance Nanostructured Membrane Electrode Assemblies for Fuel Cells Made by Layer-By-Layer Assembly of Carbon Nanocolloids. Advanced Materials 2007, 19 (22), 3859-3864. https://doi.org/10.1002/adma.200701219.

[37] Wu, F.; Li, J.; Su, Y.; Wang, J.; Yang, W.; Li, N.; Chen, L.; Chen, S.; Chen, R.; Bao, L. Layer-by-Layer Assembled Architecture of Polyelectrolyte Multilayers and Graphene Sheets on Hollow Carbon Spheres/Sulfur Composite for High-Performance Lithium-Sulfur Batteries. Nano Lett. 2016, 16 (9), 5488-5494. https://doi.org/10.1021 /acs.nanolett.6b01981.

[38] Ariga, K.; Lvov, Y. M.; Kawakami, K.; Ji, Q.; Hill, J. P. Layer-by-Layer Self-Assembled Shells for Drug Delivery. Advanced Drug Delivery Reviews 2011, 63 (9), 762-771. https://doi.org/10.1016/j.addr.2011.03.016.

[39] Gu, J.-E.; Lee, S.; Stafford, C. M.; Lee, J. S.; Choi, W.; Kim, B.-Y.; Baek, K.-Y.; Chan, E. P.; Chung, J. Y.; Bang, J.; Lee, J.-H. Molecular Layer-by-Layer Assembled Thin-Film Composite Membranes for Water Desalination. Advanced Materials 2013, 25 (34), 4778-4782. https://doi.org/10.1002/adma.201302030.

[40] Richardson, J. J.; Cui, J.; Björnmalm, M.; Braunger, J. A.; Ejima, H.; Caruso, F. Innovation in Layer-by-Layer Assembly. Chem. Rev. 2016, 116 (23), 14828-14867. https://doi.org/10.1021/acs.chemrev.6b00627.

[41] Richardson, J. J.; Bjornmalm, M.; Caruso, F. Technology-Driven Layer-by-Layer Assembly of Nanofilms. Science 2015, 348 (6233), aaa2491-aaa2491. https://doi.org/10.1126/science.aaa2491.

[42] Aspnes, D. E. Local-field Effects and Effective-medium Theory: A Microscopic Perspective. American Journal of Physics 1982, 50 (8), 704-709. https://doi.org/10.1119/1.12734.

[43] Ogieglo, W.; Wormeester, H.; Eichhorn, K.-J.; Wessling, M.; Benes, N. E. In Situ Ellipsometry Studies on Swelling of Thin Polymer Films: A Review. Progress in Polymer Science 2015, 42, 42-78. https://doi.org/10.1016/j.progpolymsci.2014.09.004.

[44] Piccinini, E.; Bliem, C.; Giussi, J. M.; Knoll, W.; Azzaroni, O. Reversible Switching of the Dirac Point in Graphene Field-Effect Transistors Functionalized with Responsive Polymer Brushes. Langmuir 2019. https://doi.org/10.1021/acs.langmuir.9b00910.

[45] Tang, K.; Besseling, N. A. M. Formation of Polyelectrolyte Multilayers: Ionic Strengths and Growth Regimes. Soft Matter 2016, 12 (4), 1032-1040. https://doi.org/10.1039/C5SM02118A.

[46] Feijter, J. A. D.; Benjamins, J.; Veer, F. A. Ellipsometry as a Tool to Study the Adsorption Behavior of Synthetic and Biopolymers at the Air-Water Interface. Biopolymers 1978, 17 (7), 1759-1772. https://doi.org/10.1002/bip.1978.360170711.

[47] Stenberg, E.; Persson, B.; Roos, H.; Urbaniczky, C. Quantitative Determination of Surface Concentration of Protein with Surface Plasmon Resonance Using Radiolabeled Proteins. Journal of Colloid and Interface Science 1991, 143 (2), 513-526. https://doi.org/10.1016/0021-9797(91)90284-F.

[48] Perlmann, G. E.; Longsworth, L. G. The Specific Refractive Increment of Some Purified Proteins. J. Am. Chem. Soc. 1948, 70 (8), 2719-2724. https://doi.org/10.1021/ja01188a027.

[49] Wang, Y. Y.; Burke, P. J. Polyelectrolyte Multilayer Electrostatic Gating of Graphene Field-Effect Transistors. Nano research 2014, 7 (11), 1650-1658.

[50] Donath, E.; Vardanyan, I.; Meyer, S.; Murray, R. A.; Moya, S. E.; Navoyan, Z.; Arakelyan, V. A Typical Diffusion Monitored by Flow Cytometry: Slow Diffusion of Small Molecules in Polyelectrolyte Multilayers. Nanoscale 2018, 10 (2), 765-772. https://doi.org/10.1039/C7NR08405F.

[51] Wong, J. E.; Zastrow, H.; Jaeger, W.; von Klitzing, R. Specific Ion versus Electrostatic Effects on the Construction of Polyelectrolyte Multilayers †. Langmuir 2009, 25 (24), 14061-14070. https://doi.org/10.1021/la901673u.

[52] Ko, Y. H.; Kim, Y. H.; Park, J.; Nam, K. T.; Park, J. H.; Yoo, P. J. Electric-Field-Assisted Layer-by-Layer Assembly of Weakly Charged Polyelectrolyte Multilayers. Macromolecules 2011, 44 (8), 2866-2872.

[53] Kim, Y.-T.; Lee, S.; Park, S.; Lee, C. Y. Graphene Chemiresistors Modified with Functionalized Triphenylene for Highly Sensitive and Selective Detection of Dimethyl Methylphosphonate. RSC Advances 2019, 9 (58), 33976-33980.

[54] Sui, Z.; Schlenoff, J. B. Phase Separations in PH-Responsive Polyelectrolyte Multilayers: Charge Extrusion versus Charge Expulsion. Langmuir 2004, 20 (14), 6026-6031. https://doi.org/10.1021/la0495985.

[55] Kfos, J. S. Dendritic Polyelectrolytes Revisited through the Poisson-Boltzmann-Flory Theory and the Debye-Hückel Approximation. Phys. Chem. Chem. Phys. 2018, 20 (4), 2693-2703. https://doi.org/10.1039/C7CP07138H.

[56] Dai, J.; Balachandra, A. M.; Lee, J. I.; Bruening, M. L. Controlling Ion Transport through Multilayer Polyelectrolyte Membranes by Derivatization with Photolabile Functional Groups. Macromolecules 2002, 35 (8), 3164-3170. https://doi.org/10.1021/ma011633g.

[57] Song, L.; Sun, W.; Gao, J. Time Dependent Chloride Diffusion Coefficient in Concrete. J. Wuhan Univ. Technol.-Mat. Sci. Edit. 2013, 28 (2), 314-319. https://doi.org/10.1007/s11595-013-0685-6.

[58] Tybrandt, K.; Zozoulenko, I. V.; Berggren, M. Chemical Potential-Electric Double Layer Coupling in Conjugated Polymer-Polyelectrolyte Blends. Sci. Adv. 2017, 3 (12), eaao3659. https://doi.org/10.1126/sciadv.aao3659.

[59] Shirinskaya, A.; Horowitz, G.; Rivnay, J.; Malliaras, G.; Bonnassieux, Y. Numerical Modeling of an Organic Electrochemical Transistor. Biosensors 2018, 8 (4), 103. https://doi.org/10.3390/bios8040103.

[60] Iturri Ramos, J. J.; Stahl, S.; Richter, R. P.; Moya, S. E. Water Content and Buildup of Poly(Diallyldimethylammonium Chloride)/Poly(Sodium 4-Styrenesulfonate) and Poly(Allylamine Hydrochloride)/Poly(Sodium 4-Styrenesulfonate) Polyelectrolyte Multilayers Studied by an in Situ Combination of a Quartz Crystal Microbalance with Dissipation Monitoring and Spectroscopic Ellipsometry. Macromolecules 2010, 43 (21), 9063-9070. https://doi.org/10.1021/ma1015984.

[61] Zhou, H.-X. Diffusion-Influenced Transport of Ions across a Transmembrane Channel with an Internal Binding Site. J. Phys. Chem. Lett. 2010, 1 (13), 1973-1976. https://doi.org/10.1021/jz100683t.

[62] Schottel, B. L.; Chifotides, H. T.; Dunbar, K. R. Anion-$\pi$ Interactions. Chem. Soc. Rev. 2008, 37 (1), 68-83. https://doi.org/10.1039/B614208G.

[63] Tanase, C.; Meijer, E.; Blom, P.; De Leeuw, D. Local Charge Carrier Mobility in Disordered Organic Field-Effect Transistors. Organic electronics 2003, 4 [1], 33-37.

[64] Casalini, S.; Bortolotti, C. A.; Leonardi, F.; Biscarini, F. Self-Assembled Monolayers in Organic Electronics. Chemical Society Reviews 2017, 46 (1), 40-71.

[65] Cardon, F.; Gomes, W. On the Determination of the Flat-Band Potential of a Semiconductor in Contact with a Metal or an Electrolyte from the Mott-Schottky Plot. Journal of Physics D: Applied Physics 1978, 11 (4), L63.

[66] Lowe, B. M.; Skylaris, C.-K.; Green, N. G.; Shibuta, Y.; Sakata, T. Molecular Dynamics Simulation of Potentiometric Sensor Response: The Effect of Biomolecules, Surface Morphology and Surface Charge. Nanoscale 2018, 10 (18), 8650-8666.

[67] Scherer, P.; Fischer, S. Theoretical Molecular Biophysics; Biological and Medical Physics, Biomedical Engineering; 2010.

[68] Chen, Y.; Zhang, H.; Feng, Z.; Zhang, H.; Zhang, R.; Yu, Y.; Tao, J.; Zhao, H.; Guo, W.; Pang, W.; others. Chemiresistive and Gravimetric Dual-Mode Gas Sensor toward Target Recognition and Differentiation. ACS applied materials & interfaces 2016, 8 (33), 21742-21749.

[69] Macchia, E.; Picca, R. A.; Manoli, K.; Di Franco, C.; Blasi, D.; Sarcina, L.; Ditaranto, N.; Cioffi, N.; Österbacka, R.; Scamarcio, G.; others. About the Amplification Factors in Organic Bioelectronic Sensors. Materials Horizons 2020.

[70] Palazzo, G.; De Tullio, D.; Magliulo, M.; Mallardi, A.; Intranuovo, F.; Mulla, M. Y.; Favia, P.; Vikholm-Lundin, I.; Torsi, L. Detection Beyond Debye's Length with an Electrolyte-Gated Organic Field-Effect Transistor. Advanced Materials 2015, 27 (5), 911-916.

[71] Macchia, E.; Manoli, K.; Holzer, B.; Di Franco, C.; Ghittorelli, M.; Torricelli, F.; Alberga, D.; Mangiatordi, G. F.; Palazzo, G.; Scamarcio, G.; others. Single-Molecule Detection with a Millimetre-Sized Transistor. Nature communications 2018, 9 (1), 1-10.

[72] Macchia, E.; Giordano, F.; Magliulo, M.; Palazzo, G.; Torsi, L. An Analytical Model for Bio-Electronic Organic Field-Effect Transistor Sensors. Applied Physics Letters 2013, 103 (10), 166_1.

[73] Manoli, K.; Magliulo, M.; Mulla, M. Y.; Singh, M.; Sabbatini, L.; Palazzo, G.; Torsi, L. Printable Bioelectronics to Investigate Functional Biological Interfaces. Angewandte Chemie International Edition 2015, 54 (43), 12562-12576.

[74] Shirinskaya, A.; Horowitz, G.; Rivnay, J.; Malliaras, G. G.; Bonnassieux, Y. Numerical Modeling of an Organic Electrochemical Transistor. Biosensors 2018, 8 (4), 103.

[75] Fundamentals of On-Resistance in Load Switches http://www.ti.com/lit/an/slva771/slva771.pdf.

[76] Kim, Y.-T.; Lee, S.; Park, S.; Lee, C. Y. Graphene Chemiresistors Modified with Functionalized Triphenylene for Highly Sensitive and Selective Detection of Dimethyl Methylphosphonate. RSC Advances 2019, 9 (58), 33976-33980.

[77] Li, M.; Liu, C.; Xie, Y.; Cao, H.; Zhao, H.; Zhang, Y. The Evolution of Surface Charge on Graphene Oxide during the Reduction and Its Application in Electroanalysis. Carbon 2014, 66, 302-311. https://doi.org/10.1016/j.carbon.2013.09.004.

[78] Kergoat, L.; Herlogsson, L.; Piro, B.; Pham, M. C.; Horowitz, G.; Crispin, X.; Berggren, M. Tuning the Threshold Voltage in Electrolyte-Gated Organic Field-Effect Transistors. Proceedings of the National Academy of Sciences 2012, 109 (22), 8394-8399.

[79] Tibaldi, A.; Fillaud, L.; Anquetin, G.; Woytasik, M.; Zrig, S.; Piro, B.; Mattana, G.; Noël, V. Electrolyte-Gated Organic Field-Effect Transistors (EGOFETs) as Complementary Tools to Electrochemistry for the Study of Surface Processes. Electrochemistry Communications 2019, 98, 43-46.

[80] Eijkel, J. C.; van den Berg, A. Nanofluidics and the Chemical Potential Applied to Solvent and Solute Transport. Chemical Society Reviews 2010, 39 (3), 957-973.

[81] Ko, Y. H.; Kim, Y. H.; Park, J.; Nam, K. T.; Park, J. H.; Yoo, P. J. Electric-Field-Assisted Layer-by-Layer Assembly of Weakly Charged Polyelectrolyte Multilayers. Macromolecules 2011, 44 (8), 2866-2872.

[82] Hageneder, S.; Bauch, M.; Dostalek, J. Plasmonically Amplified Bioassay - Total Internal Reflection Fluorescence vs. Epifluorescence Geometry. Talanta 2016, 156-157, 225-231. https://doi.org/10.1016/j.talanta.2016.05.023.

**References Second Embodiment**

[1] Liedberg, B.; Nylander, C.; Lunström, I. Sensors and Actuators, 1983, 4, 299-304.

[2] Arghir, I.; Delport, F.; Spasic, D.; Lammertyn, J. New Biotechnol., 2015, 32, 473-484.

[3] Cramer, T.; Kyndiah, A.; Murgia, M.; Leonardi, F.; Casalini, S.; Biscarini, F. Appl. Phys. Lett., 2012, 100, 143302.

[4] Mulla, M. Y.; Tuccori, E., Magliulo, M.; Lattanzi, G.; Palazzo, G.; Persaud, K.; Torsi, L. Nat. Commun, 2015, 6, 6010.

[5] Arghir, I.; Spasic, D.; Verlinden, B. E.; Delport, F.; Lammertyn, J. Sensors and Actuators B, 2015, 216, 518-526.

[6] Daems, D.; Pfeifer, W.; Rutten, I.; Saccà, B.; Spasic, D.; Lammertyn, J. ACS Appl. Mater. Interfaces 2018, 10, 23539-23547.

[7] Pollet, J.; Delport, F.; Janssen, K. P. F.; Jans, K.; Maes, G.; Pfeiffer, H.; Wevers, M.; Lammertyn, J. Biosensors and Bioelectronics, 2009, 25, 864-869.

[8] Lu, J.; Van Stappen, T.; Spasic, D.; Delport, F.; Vermeire, S.; Gils, A.; Lammertyn, J. Biosensors and Bioelectronics, 2016, 79, 173-179.

[9] Peeters, P.; Daems, D.; Van der Donck, T.; Delport, F.; Lammertyn, J. ACS Appl. Mater. Interfaces, 2019, 11, 6759-6768.

[10] Shankaran, D. R.; Miura, N. J. Phys. D: Appl. Phys., 2007, 40, 7187.

[11] Jorgenson, R. C.; Yee, S. S. Sensors and Actuators B: Chemical, 1993, 12, 213-220.

[12] Slavik, R.; Homola, J.; Čtyroký, J.; Brynda, E. *Sensors and Actuators B: Chemical,* **2001,** *74,* 106-111.

[13] Aspermair, P.; Ramach, U.; Lechner, B.; Fossati, S.; Azzaroni, O.; Dostalek, J.; Szunerits, S.; Knoll, W.; Bintinger, J. Dual Monitoring of Surface Reactions in Real-time by Combined Surface-Plasmon Resonance and Field-Effect Transistor Interrogation, submitted.

[14] Applied BioPhysics, Inc. https://applied-biophysics-inc.myshopify.com/collections/96-well-arrays/products/96w20idf-pet

[15] Slavik, R.; Homola, J.; Brynda, E.; Biosensor and Bioelectronics, 2002, 591-595.

[16] Kaushik, S.; Tiwari, U. K.; Deep, A.; Sinha, R. K.; Scientific Reports, 2019, 9, Article number: 6987.

[17] Liu, Q.; Liu, Y.; Chen, S.; Wang, F.; Peng, W.; Sensors, 2017, 17, 2797.

[18] Nguyen, T. T.; Bea, S. O.; Kim, D. M.; Yoon, W. J.; Park, J.-W.; An, S. S. A.; Ju, H.; International Journal of Nanomedicine, 2015, 10, 155-163.

[19] Kant, R.; Tabassum, R.; Gupta, B. D.; IEEE Photonics Technology Letters, 2016, 28.

[20] Verma, R.; Gupta, B. D.; Sensors and Actuators B, 2013, 177, 279-285.

[21] Shrivastav, A. M.; Mishra, S. K.; Gupta, B. D.; Sensors and Actuators B, 2015, 212, 404-410.

[22] Chen, Y.; Yu, Y.; Li, X.; Zhou, H.; Hong, X.; Geng, Y.; Sensors and Actuators B, 2016, 226, 412-418.

[23] Ahn, J. H.; Seong, T. Y.; Kim, W. M.; Lee, T. S.; Kim, I.; Lee, K.-S.; Optics Express, 2012, 20, 21729-21738.

[24] Usha, S. P.; Shrivastav, A. M.; Gupta, B. D.; Biosensors and Bioelectronics, 2016, 85, 986-995.

[25] Hsu, W.-T. et al. Analytica Chimica Acta, 2011, 697, 75-82.

[26] Kaushik, S.; Tiwari, U. K.; Pal, S. S.; Sinha, R. K.; Biosensors and Bioelectronics, 2019, 126, 501-509.

[27] Singh, S.; Mishra, S. K.; Gupta, B. D.; Sensors and Actuators A: Physical, 2013, 193, 136-140.

[28] Srivastava, S. K. et al. Biosens J, 2015, 4.

[29] Kant, R.; Microchimica Acta, 2020, 187.

[30] Liu, Y.; Chen, S.; Cheng, F.; Wang, H.; Peng, W.; Scientific Reports, 2015, 5, Article nb.: 12864.

[31] Kant, R.; Tabassum, R.; Gupta, B. D.; Biosensors and Bioelectronics, 2018, 99, 637-645.

[32] Kim, H.-M.; Park, J.-H.; Jeong, D. H.; Lee, H.-Y.; Lee, S.-K.; Sensors & Actuators: B. Chemical, 2018, 273, 891-898.

[33] Yanase, Y.; Araki, A.; Suzuki, H.; Tsutsui, T.; Kimura, T.; Okamoto, K.; Nakatani, T.; Hiragun, T.; Hide, M.; Biosensors and Bioelectronics, 2010, 25, 1244-1247.

[34] Ahn, H.; Song, H.; Choi, J.-R.; Kim, K.; Sensors, 2018, 18, 98.

[35] Ong, B. H.; Yuan, X.; Tjin, S. C.; Zhang, J.; Ng, H. M.; Sensors and Actuators B, 2006, 114, 1028-1034.

[36] Chen, Y.; Yu, Y.; Li, X.; Tan, Z.; Geng, Y.; Plasmonics, 2015, 10, 1801-1808.

[37] Wang, Y.; Meng, S.; Liang, Y.; Li, L.; Peng, W.; Photonic Sensors, 2013, 3, 202-207.

[38] Sarid, D.; Phys. Rev. Lett., 1982, 48, 446.

[39] Nenninger, G. G.; Tobiska, P.; Homola, J.; Yee, S. S.; Sensors and Actuators B, 2001, 74, 145-151.

[40] Hall, W. P.; Modica, J.; Anker, J.; Lin, Y.; Mrksich, M.; Van Duyne, R. P. Nano Lett., 2011, 11, 1098-1105.

[41] Kim, S.; Cheng, N.; Jeong, J.-R.; Jang, S.-G.; Yang, S.-M., Huck, W. T. S. Chem. Commun., 2008, 31, 3666-3668.

[42] Sepúlveda, B.; Angelomé, P. C.; Lechuga, L. M.; Liz-Marzán, L. Nanotoday, 2009, 4, 244-251.

[43] Mullen, K. I.; Carron, K. T. Anal Chem, 1991, 63, 2196-2199.

[44] Meriaudeau, F.; Wig, A.; Passian, A.; Downey, T.; Buncick, M.; Ferrell, T. L. Sens Actuators, B: Chem, 2000, 69, 51-57.

[45] Mitsui, K.; Handa, Y.; Kajikawa, K. Appl Phys Lett, 2004, 85, 4231-4233.

[46] Jeong, H-H.; Erdene, N.; Lee, S-K.; Jeong, D-H.; Park, J-H. Optice, 2011, 50, 124405-124408.

[47] Lin, T-J.; Lou, C-T. J Supercrit Fluids, 2007, 41, 317-325.

[48] Sciacca, B.; Monro, T. M. Langmuir, 2014, 30, 946-954.

[49] Tu, H.; Sun, T.; Grattan, K. T. IEEE Sens J, 2013, 13, 2192-2199.

[50] Stewart, M. E.; Anderton, C. R.; Thompson, L. B.; Maria, J.; Gray, S. K.; Rogers, J. A. et al. Chem Rev, 2008, 108, 494-521.

[51] Henry, A.-I.; Bingham, J. M.; Ringe, E.; Marks, L. D.; Schatz, G. C.; Van Duyne, R. P. J Phys Chem C, 2011, 115, 9291-9305.

[52] Valsecchi, C.; Brolo, A. G. Langmuir, 2013, 29, 5638-5649.

[53] Hua, F.; Sun, Y.; Gaur, A.; Meitl, M. A.; Bilhaut, L.; Rotkina, L. et al. Nano Lett, 2004, 4, 2467-2471.

[54] Kim, B. J.; Flamma, J. W.; Ten Have, E. S.; Garcia-Parajo, M. F.; Van Hulst, N. F.; Brugger, J. J Microsc, 2001, 202, 16-21.

[55] D.J. Lipomi, R.V. Martinez, M.A. Kats, S.H. Kang, P. Kim, J. Aizenberg, et al. Nano Lett, 2010, 11, 632-636.

[56] P. Jia, J. Yang Nanoscale, 2014, 6, 8836-8843.

[57] P. Jia, J. Yang Appl Phys Lett, 2013, 102, 243107.

[58] J. Henzie, M.H. Lee, T.W. Odom Nat Nanotechnol, 2007, 2, 549-554.

[59] S. Scheerlinck, P. Dubruel, P. Bienstman, E. Schacht, D. Van Thourhout, R. Baets J Lightwave Technol, 2009, 27, 1415-1420.

[60] S. Scheerlinck, D. Taillaert, D. Van Thourhout, R. Baets Appl Phys Lett, 2008, 92, 031104.

[61] G. Kostovski, U. Chinnasamy, S. Jayawardhana, P.R. Stoddart, A. Mitchell Adv Mater, 2011, 23, 531-535.

[62] S. Chen, L. Han, A. Schülzgen, H. Li, L. Li, J.V. Moloney, et al. Opt Express, 2008, 16, 13016-13023.

[63] Y. Lin, Y. Zou, Y. Mo, J. Guo, R.G. Lindquist Sensors (Basel), 2010, 10, 9397-9406.

[64] A. Dhawan, M. Gerhold, A. Madison, J. Fowlkes, P.E. Russell, T. Vo-Dinh, et al. Scanning, 2009, 31, 139-146.

[65] A. Dhawan, M.D. Gerhold, J.F. Muth IEEE Sens J, 2008, 8, 942-950.

[66] A. Dhawan, J.F. Muth Mater Sci Eng B, 2008, 149, 237-241.

[67] A. Dhawan, J.F. Muth, D.N. Leonard, M.D. Gerhold, J. Gleeson, T. Vo-Dinh, et al. J Vac Sci Technol B, 2008, 26, 2168-2173.

[68] Bermudez, V. M.: Berry, A. D.; Kim, H.; Piqué, A. Langmuir, 2006, 22, 11113-11125.

[69] Aziz, M. A.; Patra, S.; Yang, H. Chem. Commun., 2008, 38, 4607-4609.

[70] Koh, S. E.; McDonald, K. D.; Holt, D. H.; Dulcey, C. S.; Chaney, J. A.; Pehrsson, P. E. Langmuir, 2006, 22, 6249-6255.

[71] Li, Y.; Giesbers, M.; Gerth, M.; Zuilhof, H. Langmuir, 2012, 28, 12509-12517.

[72] Gao, N.; Xu, Z.; Wang, F.; Dong, S. Electroanalysis, 2007, 19, 1655-1660.

[73] Kang, M.-S.; Ma, H.; Yip, H.-L.; Jen, A. K.-Y. J. Mater. Chem., 2007, 17, 3489-3492.

[74] Grochowska, K.; Siuzdak, K.; Karczewski, J.; Sliwinski, G. Appl. Surf. Sci. B, 2015, 357, 1684-1691.

[75] Grochowska, K.; Suizdak, K.; Sliwinski, J. Eur. J. Inorg. Chem., 2015, 7, 1275-1281.

[76] Wang, J.; Cao, X.; Wang, X.; Yang, S.; Wang, R. Electrochimica Acta, 2014, 138, 174-186.

[77] Chang, G.; Zhang, J.; Oyama, M.; Hirao, K. J. Phys. Chem. B, 2005, 109, 1204-1209.

[78] Pruna, R.; Palacio, F.; Martinez, M.; Blázquez, O.; Hernández, S.; Garrido, B.; López, M. Interface Focus, 2016, 6, 20160056.

[79] Zheng, Y. et al. Journal of Physical Chemistry C, 2016, 120, 20040-20048.

**References further embodiments**

[1] Klauk, H. Organic Electronics: Materials, Manufacturing, and Applications; Wiley, 2006.

[2] Klauk, H. Organic Electronics II: More Materials and Applications; John Wiley & Sons, 2012; Vol. 2.

[3] Mei, J.; Diao, Y.; Appleton, A. L.; Fang, L.; Bao, Z. Integrated Materials Design of Organic Semiconductors for Field-Effect Transistors. Journal of the American Chemical Society 2013, 135 (18), 6724-6746.

[4] Adachi Laboratory, Center for Future Chemistry, Kyushu University. Basic structure of OFET http://www.cstf.kyushu-u.ac.jp/~adachilab/research_b_e.html.

[5] Anthony, J. E. The Larger Acenes: Versatile Organic Semiconductors. Angew. Chem. Int. Ed. 2008, 47 (3), 452-483. https://doi.org/10.1002/anie.200604045.

[6] Deng, W.-Q.; Goddard, W. A. Predictions of Hole Mobilities in Oligoacene Organic Semiconductors from Quantum Mechanical Calculations †. J. Phys. Chem. B 2004, 108 (25), 8614-8621. https://doi.org/10.1021/jp0495848.

[7] Cheng, Y. C.; Silbey, R. J.; da Silva Filho, D. A.; Calbert, J. P.; Cornil, J.; Brédas, J. L. Three - Dimensional Band Structure and Bandlike Mobility in Oligoacene Single Crystals: A Theoretical Investigation. The Journal of Chemical Physics 2003, 118 (8), 3764-3774. https://doi.org/10.1063/1.1539090.

[8] Brocks, G.; van den Brink, J.; Morpurgo, A. F. Electronic Correlations in Oligo-Acene and - Thiopene Organic Molecular Crystals. Phys. Rev. Lett. 2004, 93 (14), 146405. https://doi.org/10.1103/PhysRevLett.93.146405.

[9] Boudreault, P.-L. T.; Wakim, S.; Tang, M. L.; Tao, Y.; Bao, Z.; Leclerc, M. New Indolo[3,2- b]Carbazole Derivatives for Field-Effect Transistor Applications. J. Mater. Chem. 2009, 19(19), 2921. https://doi.org/10.1039/b900271e.

[10] Park, K. S.; Salunkhe, S. M.; Lim, I.; Cho, C.-G.; Han, S.-H.; Sung, M. M. High-Performance Air-Stable Single-Crystal Organic Nanowires Based on a New Indolocarbazole Derivative for Field-Effect Transistors. Adv. Mater. 2013, 25 (24), 3351-3356. https://doi.org/10.1002/adma.201300740.

[11] Bunz, U. H. F. The Larger N-Heteroacenes. Pure and Applied Chemistry 2010, 82 (4), 953-968. https://doi.org/10.1351/PAC-CON-09-09-17.

[12] Wu, Y.; Li, Y.; Gardner, S.; Ong, B. S. Indolo[3,2- b ]Carbazole-Based Thin-Film Transistors with High Mobility and Stability. J. Am. Chem. Soc. 2005, 127 (2), 614-618. https://doi.org/10.1021/ja0456149.

[13] Donald, K. J. Alan J. Heeger, N. Serdar Sariciftci, Ebinazar B. Namdas: Semiconducting and Metallic Polymers [Oxford Graduate Texts; Hardcover]; Springer, 2011.

[14] Kymissis, I. Organic Field Effect Transistors: Theory, Fabrication and Characterization; Springer Science & Business Media, 2008.

[15] Guan W., Reed M.A. (2017) Extended Gate Field-Effect Transistor Biosensors for Point-Of-Care Testing of Uric Acid. In: Prickril B., Rasooly A. (eds) Biosensors and Biodetection. Methods in Molecular Biology, vol 1572. Humana Press, New York, NY.https://doi.org/10.1007/978-1-4939-6911-1 13, https://link.springer.com/proto-col/10.1007/978-1-4939-6911-1 13).

## Claims

1. Sensor arrangement (100) for simultaneous measurement of optical and electrical properties of a dielectric medium to be investigated, as well as the analytes contained therein, comprising a field-effect transistor (1) and a surface plasmon resonance sensor (2),

   - wherein the sensor arrangement comprises a sample chamber (3) for receiving the dielectric medium, which sample chamber (3) is arranged such that the optical and electrical properties of the dielectric medium (4) can be recorded simultaneously, and
   - wherein the gate electrode (5) of the field-effect transistor (1) forms the active surface and/or is connected to the active surface of the surface plasmon resonance sensor (2), and comprises charge carriers which can be caused to oscillate by means of electromagnetic radiation.

2. Sensor arrangement (100) according to claim 1, **characterized in that** the sample chamber (3) is arranged

   - between the gate electrode (5) and the semiconducting material (7) of the field-effect transistor (1), or
   - between the source and drain electrode (8, 9) and the gate electrode (5) of the field-effect transistor (1), or
   - between the semiconducting material (7), the gate electrode (5) and the substrate of the field-effect transistor (1), or
   - on top of the floating gate electrode (5b), which electrostatically couples the gate electrode (5) and the semiconducting material (7) of the field-effect transistor (1), or
   - the sample chamber (3) is arranged spatially separate from the field-effect transistor (1), wherein the gate electrode (5) of the field-effect transistor (1) is connected (40) to the active surface of the surface plasmon resonance sensor (2) contacting the dielectric medium in the sample chamber (3) where a Ag/AgCl reference electrode (30) is used to set a stable reference potential.

3. Sensor arrangement (100) according to any of the preceding claims, **characterized in that** the surface plasmon resonance sensor (2) comprises an optical fiber (6) having an optically reflective and electrically conductive surface,

   wherein the optical fiber (6) comprises an electrical contact and forms the gate electrode (5) of the sensor arrangement (100), and
   wherein the reflective surface of the optical fiber (6) is guided into the sample chamber (3), such that the dielectric medium (4) can be contacted with the reflective surface.

4. Sensor arrangement (100) according to any of the preceding claims, **characterized in that** a number, preferably a plurality, of metal layers, in particular having a thickness of from 10 nm to 200 nm, consisting of gold, silver, aluminium, copper, or alloys thereof, are arranged on the gate electrode (5).

5. Sensor arrangement (100) according to any of the preceding claims, **characterized in that** selected, preferably all, metal layers are attached to the gate electrode

   - in a planar manner, in particular in the manner of a prism-coupled configuration, or
   - in the form of nanostructures, in particular in the form of a periodic grating (G), preferably having a periodicity of between 1 to 1000 nm.

6. Sensor arrangement (100) according to claim 5, **characterized in that** the nanostructures have a spherical, ellipsoid, tetrahedral, pyramid, cuboidal, cylindrical, tetrapod, or stellate shape, or combinations thereof, in particular the size of the nanostructures ranging from 1 nm to 1000 nm.

7. Sensor arrangement (100) according to claims 4 to 6, **characterized in that** the core of the optical fiber (6) used as the gate electrode (5) is coated with the number, preferably the plurality, of metal layers.

8. Sensor arrangement (100) according to any of the preceding claims, **characterized in that** a, preferably 1 nm - 300 nm thick, dielectric intermediate layer, in particular arranged below the metal layer, is arranged on the gate electrode (5), in particular on the core of the optical fiber (6) used as the gate electrode (5).

9. Sensor arrangement (100) according to claim 8, **characterized in that** the dielectric intermediate layer consists of Teflon AF, Cytop, a self-assembled monolayer of organic molecules, a polymer layer, or a metal oxide layer.

10. Sensor arrangement (100) according to any of the preceding claims, **characterized in that** a, in particular transparent, conductive layer is arranged on the gate electrode (5), in particular on the core of the optical fiber (6) used as the gate electrode (5),
in particular wherein periodic nanostructures are arranged on the conductive layer.

11. Sensor arrangement according to claim 10, **characterized in that** the conductive layer consists of indium tin oxide, fluorine-doped tin oxide, aluminium zinc oxide, antimony tin oxide, molybdenum(IV) sulfide, or graphene.

12. Measuring arrangement (200) for simultaneous measurement of optical and electrical properties of a dielectric medium (4) to be investigated, as well as the analytes contained therein, comprising a sensor arrangement (100) according to any of claims 1 to 11,

- wherein the source electrode (8) and the drain electrode (9) are connected to the semiconducting material (7) of the field-effect transistor (1),
- wherein the gate electrode (5) of the field-effect transistor (1) is designed to vary the conductivity and/or electronic properties, in particular charge carrier mobility or threshold voltage, of the semiconducting material depending on an electric field (EF) between the gate electrode (5), and the semiconducting material (7), and
- an electromagnetic radiation source (11) which is arranged and designed such that a portion of the energy of the electromagnetic radiation incident on the surface of the gate electrode (5) is absorbed by the gate electrode (5).

13. Measuring arrangement (200) according to claim 12, **characterized in that** the electromagnetic radiation source (11) is designed to output light having a wavelength of from 270 nm to 1000 nm, in particular the radiation source (11) being designed to couple light into an optical fiber (6).

14. Measuring arrangement (200) according to either claim 12 or claim 13, **characterized in that** the measuring arrangement (200) comprises a detector (12) for measuring the intensity of the electromagnetic radiation reflected from the surface of the gate electrode (5).

15. Measuring arrangement (200) according to any of claims 12 to 14, **characterized in that** the measuring arrangement (200) comprises a control and processing unit which

- is connected to the source electrode (8), the drain electrode (9), and the gate electrode (5) of the field-effect transistor (1), and is designed to specify the voltage at the gate electrode (5) and to determine, and in particular chart, the conductivity of the semiconducting material (7), and/or
- is connected to the detector (12) and is designed to chart, in particular display, the intensity of the reflected electromagnetic radiation.

16. Measuring arrangement (200) according to any of claims 12 to 15, **characterized in that** the measuring arrangement comprises

- a plurality of sample chambers (3) for receiving a dielectric medium, and
- a plurality of gate electrodes (5), wherein each of the gate electrodes (5) is allocated to one of the sample chambers (3) and forms the active surface and/or is connected to the active surface of the surface plasmon resonance sensor (2) of the respective sample chamber (3).

17. Measuring arrangement (200) according to claims 16, **characterized in that** the measuring arrangement comprises a plurality of electrically conductive optical fibers (6) each having an optically reflective surface,

wherein the reflective surface of each optical fiber (6) is guided into the respective sample chamber (3), such that the dielectric medium (4) can be contacted with the reflective surface and
wherein each optical fiber (6) comprises an electrical contact and forms the gate electrode (5) of the respective sample chamber (3).

Fig. 1

EP 4 220 145 A1

Fig. 2a

Fig. 2b

Fig. 2c

Fig. 2d

Fig. 3a

Fig. 3b

EP 4 220 145 A1

Fig. 4a  Fig. 4b  Fig. 4c

Fig. 5a    Fig. 5b    Fig. 5c    Fig. 5d

Fig. 6a

Fig. 6b

Fig. 6c

Fig. 6d

Fig. 7a
Fig. 7b
Fig. 7c
Fig. 7d

Fig. 8

Fig. 10

Fig. 9a

Fig. 9b

EP 4 220 145 A1

Fig. 11a

Fig. 11b

Fig. 12b

Fig. 12a

Fig. 13a

Fig. 13b

Fig. 14a

Fig. 14b

EP 4 220 145 A1

Fig. 15a

Fig. 15b

Fig. 16a

Fig. 16b

Fig. 17b

Fig. 17a

Fig. 18a

Fig. 18b

Fig. 18c

EP 4 220 145 A1

Fig. 19a

Fig. 19b

Fig. 19c

Fig. 20

EP 4 220 145 A1

Fig. 21b

Fig. 21c

Fig. 21a

Fig. 22b

Fig. 22a

Fig. 23a

Fig. 23b

Fig. 23c

Fig. 24

Fig. 25a

Fig. 25b

EP 4 220 145 A1

Fig. 27

Fig. 26

EP 4 220 145 A1

$L_i$

4

G

# Fig. 28

EF

NP

EC

NP

t

NP

# Fig. 29

Fig. 30a

Fig. 30b

Fig. 30c

Fig. 30d

| | | European Patent Office | | |
| --- | --- | --- | --- | --- |

Europäisches Patentamt
European Patent Office
Office européen des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 2016/011216 A1 (FELLER BOBBY E [US] ET AL) 14 January 2016 (2016-01-14) | 1,2,4-6, 8-17 | INV. G01N27/414 |
| A | * figures 1-10 * <br> * paragraph [0029] - paragraph [0069] * <br> ----- | 3,7 | G01N21/552 |
| A | US 2010/053624 A1 (YOO KYUNG-HWA [KR] ET AL) 4 March 2010 (2010-03-04) <br> * figures 1-7 * <br> * paragraph [0012] - paragraph [0041] * <br> ----- | 4 | |
| A | EP 2 434 278 A1 (MAX PLANCK GESELLSCHAFT [DE]) 28 March 2012 (2012-03-28) <br> * figures 1-11 * <br> * paragraph [0034] - paragraph [0116] * <br> ----- | 16,17 | |
| A | YUAN YONG ET AL: "Electrochemical Surface Plasmon Resonance Fiber-Optic Sensor: In Situ Detection of Electroactive Biofilms", ANALYTICAL CHEMISTRY , vol. 88, no. 15 2 August 2016 (2016-08-02), pages 7609-7616, XP055820619, US ISSN: 0003-2700, DOI: 10.1021/acs.analchem.6b01314 Retrieved from the Internet: URL:https://pubs.acs.org/doi/pdf/10.1021/a cs.analchem.6b01314 * the whole document * <br> ----- <br> -/-- | 3,4 | |

| | |
| --- | --- |
| | TECHNICAL FIELDS SEARCHED (IPC) |
| | G01N |

The present search report has been drawn up for all claims

| Place of search | Date of completion of the search | Examiner |
| --- | --- | --- |
| Munich | 21 June 2023 | Colasanti, Katharina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 23 16 2235

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUALANDI ISACCO ET AL: "Organic Electrochemical Transistors as Versatile Analytical Potentiometric Sensors", FRONTIERS IN BIOENGINEERING AND BIOTECHNOLOGY, vol. 7, 22 November 2019 (2019-11-22), XP055820683, DOI: 10.3389/fbioe.2019.00354 * the whole document * | 3 | |
| A | DORFMAN KEVIN D. ET AL: "Microfluidic opportunities in printed electrolyte-gated transistor biosensors", BIOMICROFLUIDICS , vol. 14, no. 1 27 January 2020 (2020-01-27), page 011301, XP055820685, DOI: 10.1063/1.5131365 Retrieved from the Internet: URL:https://europepmc.org/backend/ptpmcrender.fcgi?accid=PMC6984978&blobtype=pdf * the whole document * | 2 | |
| A | YI XU ET AL: "Two-dimensional transition metal dichalcogenides mediated long range surface plasmon resonance biosensors", JOURNAL OF PHYSICS D: APPLIED PHYSICS, INSTITUTE OF PHYSICS PUBLISHING LTD, GB, vol. 52, no. 6, 30 November 2018 (2018-11-30), page 65101, XP020334048, ISSN: 0022-3727, DOI: 10.1088/1361-6463/AAF0F7 [retrieved on 2018-11-30] * the whole document * | 8-11 | TECHNICAL FIELDS SEARCHED (IPC) |

-/--

The present search report has been drawn up for all claims

| Place of search | Date of completion of the search | Examiner |
|---|---|---|
| Munich | 21 June 2023 | Colasanti, Katharina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Europäisches Patentamt
European Patent Office
Office européen des brevets

**Application Number**

EP 23 16 2235

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARIE POSPÍSILOVÁ ET AL: "Fiber-Optic Chemical Sensors and Fiber-Optic Bio-Sensors", SENSORS, vol. 15, no. 10, 30 September 2015 (2015-09-30), pages 25208-25259, XP055693585, DOI: 10.3390/s151025208 * the whole document * | 16,17 | |
| A | GANDHI M. ET AL: "Recent Advances in Plasmonic Sensor-Based Fiber Optic Probes for Biological Applications", APPLIED SCIENCES, vol. 9, no. 5, 6 March 2019 (2019-03-06), page 949, XP055820933, DOI: 10.3390/app9050949 * the whole document * | 7-11 | |

| | TECHNICAL FIELDS SEARCHED (IPC) |
|---|---|

The present search report has been drawn up for all claims

| Place of search | Date of completion of the search | Examiner |
|---|---|---|
| Munich | 21 June 2023 | Colasanti, Katharina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 3 of 3**

## ANNEX TO THE EUROPEAN SEARCH REPORT
## ON EUROPEAN PATENT APPLICATION NO.

EP 23 16 2235

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2023

| Patent document cited in search report | | Publication date | Patent family member(s) | | Publication date |
|---|---|---|---|---|---|
| US 2016011216 | A1 | 14-01-2016 | US 2016011216 | A1 | 14-01-2016 |
| | | | US 2017227556 | A1 | 10-08-2017 |
| | | | US 2019257843 | A1 | 22-08-2019 |
| | | | US 2019257844 | A1 | 22-08-2019 |
| US 2010053624 | A1 | 04-03-2010 | KR 20100028994 | A | 15-03-2010 |
| | | | US 2010053624 | A1 | 04-03-2010 |
| EP 2434278 | A1 | 28-03-2012 | EP 2434278 | A1 | 28-03-2012 |
| | | | US 2012134880 | A1 | 31-05-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050112544 A1

**Non-patent literature cited in the description**

- **DAS, A. ; PISANA, S. ; CHAKRABORTY, B. ; PISCANEC, S. ; SAHA, S. K. ; WAGHMARE, U. V. ; NOVOSELOV, K. S. ; KRISHNAMURTHY, H. R. ; GEIM, A. K. ; FERRARI, A. C.** Monitoring Dopants by Raman Scattering in an Electrochemically Top-Gated Graphene Transistor. *Nature Nanotech,* 2008, vol. 3 (4), 210-215
- **KERGOAT, L. ; HERLOGSSON, L. ; BRAGA, D. ; PIRO, B. ; PHAM, M.-C. ; CRISPIN, X. ; BERGGREN, M. ; HOROWITZ, G.** A Water-Gate Organic Field-Effect Transistor. *Advanced Materials,* 2010, vol. 22 (23), 2565-2569
- **PALAZZO, G. ; DE TULLIO, D. ; MAGLIULO, M. ; MALLARDI, A. ; INTRANUOVO, F. ; MULLA, M. Y. ; FAVIA, P. ; VIKHOLM-LUNDIN, I. ; TORSI, L.** Detection Beyond Debye's Length with an Electrolyte-Gated Organic Field-Effect Transistor. *Adv. Mater.,* 2015, vol. 27 (5), 911-916
- **CASALINI, S. ; LEONARDI, F. ; CRAMER, T. ; BISCARINI, F.** Organic Field-Effect Transistor for Label-Free Dopamine Sensing. *Organic Electronics,* 2013, vol. 14 (1), 156-163
- **ANG, P. K. ; CHEN, W. ; WEE, A. T. S. ; LOH, K. P.** Solution-Gated Epitaxial Graphene as PH Sensor. *J. Am. Chem. Soc.,* 2008, vol. 130 (44), 14392-14393, https://doi.org/10.1021/ja805090z
- **SAILAPU, S. K. ; MACCHIA, E. ; MERINO-JIMENEZ, I. ; ESQUIVEL, J. P ; SARCINA, L. ; SCAMARCIO, G. ; MINTEER, S. D. ; TORSI, L. ; SABATÉ, N.** Standalone Operation of an EGOFET for Ultra-Sensitive Detection of HIV. *Biosensors and Bioelectronics,* 2020, 112103, https://doi.org/10.1016/j.bios.2020.112103
- **BERTO, M. ; DIACCI, C. ; D'AGATA, R. ; PINTI, M. ; BIANCHINI, E. ; LAURO, M. D. ; CASALINI, S. ; COSSARIZZA, A. ; BERGGREN, M. ; SIMON, D.** EGOFET Peptide Aptasensor for Label-Free Detection of Inflammatory Cytokines in Complex Fluids. *Advanced Biosystems,* 2018, vol. 2 (2), 1700072, https://doi.org/10.1002/adbi.201700072
- **MACCHIA, E. ; MANOLI, K. ; HOLZER, B. ; FRANCO, C. D. ; GHITTORELLI, M. ; TORRICELLI, F. ; ALBERGA, D. ; MANGIATORDI, G. F. ; PALAZZO, G. ; SCAMARCIO, G.** Single-Molecule Detection with a Millimetre-Sized Transistor. *Nature Communications,* 2018, vol. 9 (1), 3223, https://doi.org/10.1038/s41467-018-05235-z
- **PAPPA, A.-M. ; PARLAK, O. ; SCHEIBLIN, G. ; MAILLEY, P. ; SALLEO, A. ; OWENS, R. M.** Organic Electronics for Point-of-Care Metabolite Monitoring. *Trends in Biotechnology,* 2018, vol. 36 (1), 45-59, https://doi.org/10.1016/j.tibtech.2017.10.022
- **HOMOLA, J.** Surface Plasmon Resonance Sensors for Detection of Chemical and Biological Species. *Chem. Rev.,* 2008, vol. 108 (2), 462-493, https://doi.org/10.1021/cr068107d
- **LIEDBERG, B. ; NYLANDER, C. ; LUNSTRÖM, I.** Surface Plasmon Resonance for Gas Detection and Biosensing. *Sensors and Actuators,* 1983, vol. 4, 299-304, https://doi.org/10.1016/0250-6874(83)85036-7
- **OLARU, A. ; BALA, C. ; JAFFREZIC-RENAULT, N. ; ABOUL-ENEIN, H. Y.** Surface Plasmon Resonance (SPR) Biosensors in Pharmaceutical Analysis. *Critical Reviews in Analytical Chemistry,* 2015, vol. 45 (2), 97-105, https://doi.org/10.1080/10408347.2014.881250
- **HOMOLA, J.** Present and Future of Surface Plasmon Resonance Biosensors. *Anal Bioanal Chem,* 2003, vol. 377 (3), 528-539, https://doi.org/10.1007/s00216-003-2101-0
- **ENGLEBIENNE, P. ; HOONACKER, A. V. ; VERHAS, M.** Surface Plasmon Resonance: Principles, Methods and Applications in Biomedical Sciences. *Spectroscopy,* 2003, vol. 17 (2-3), 255-273, https://doi.org/10.1155/2003/372913
- Surface Plasmon Resonance Biosensing. In Biosensors and Biodetection. **PILIARIK, M. ; VAISOCHEROVÁ, H. ; HOMOLA, J.** Methods in Molecular BiologyTM. Humana Press, 2009, 65-88

- **BOUFFARTIGUES, E. ; LEH, H. ; ANGER-LEROY, M. ; RIMSKY, S. ; BUCKLE, M.** Rapid Coupling of Surface Plasmon Resonance (SPR and SPRi) and ProteinChipTM Based Mass Spectrometry for the Identification of Proteins in Nucleoprotein Interactions. *Nucleic Acids Res,* 2007, vol. 35 (6), e39-e39, https://doi.org/10.1093/nar/gkm030
- **ZHANG, X. ; YOUNG, M. A. ; LYANDRES, O. ; VAN DUYNE, R. P.** Rapid Detection of an Anthrax Biomarker by Surface-Enhanced Raman Spectroscopy. *J. Am. Chem. Soc.,* 2005, vol. 127 (12), 4484-4489, https://doi.org/10.1021/ja043623b
- **SERGELEN, K. ; FOSSATI, S. ; TURUPCU, A. ; OOSTENBRINK, C. ; LIEDBERG, B. ; KNOLL, W. ; DOSTÁLEK, J.** Plasmon Field-Enhanced Fluorescence Energy Transfer for Hairpin Aptamer Assay Readout. *ACS Sens.,* 2017, vol. 2 (7), 916-923, https://doi.org/10.1021/acssensors.7b00131
- **RODRIGO, D. ; TITTL, A. ; AIT-BOUZIAD, N. ; JOHN-HERPIN, A. ; LIMAJ, O. ; KELLY, C. ; YOO, D. ; WITTENBERG, N. J. ; OH, S.-H. ; LASHUEL, H. A.** Resolving Molecule-Specific Information in Dynamic Lipid Membrane Processes with Multi-Resonant Infrared Metasurfaces. *Nat Commun,* 2018, vol. 9 (1), 1-9, https://doi.org/10.1038/s41467-018-04594-x
- **MULLA, M. Y. ; TUCCORI, E. ; MAGLIULO, M. ; LATTANZI, G. ; PALAZZO, G. ; PERSAUD, K. ; TORSI, L.** Capacitance-Modulated Transistor Detects Odorant Binding Protein Chiral Interactions. *Nature Communications,* 2015, vol. 6, 6010, https://doi.org/10.1038/ncomms7010
- **PANZER, M. J. ; FRISBIE, C. D.** Exploiting Ionic Coupling in Electronic Devices: Electrolyte-Gated Organic Field-Effect Transistors. *Adv. Mater.,* 2008, vol. 20 (16), 3177-3180, https://doi.org/10.1002/adma.200800617
- **BARBARA, M. ; BONFIGLIO, A. ; RAFFO, L. A.** Charge-Modulated FET for Detection of Biomolecular Processes: Conception, Modeling, and Simulation. *IEEE Transactions on Electron Devices,* 2006, vol. 53 (1), 158-166, https://doi.org/10.1109/TED.2005.860659
- **CRAMER, T. ; KYNDIAH, A. ; MURGIA, M. ; LEONARDI, F. ; CASALINI, S. ; BISCARINI, F.** Double Layer Capacitance Measured by Organic Field Effect Transistor Operated in Water. *Appl. Phys. Lett.,* 2012, vol. 100 (14), 143302, https://doi.org/10.1063/1.3699218
- **OHNO, Y. ; MAEHASHI, K. ; YAMASHIRO, Y. ; MATSUMOTO, K.** Electrolyte-Gated Graphene Field-Effect Transistors for Detecting PH and Protein Adsorption. *Nano Lett.,* 2009, vol. 9 (9), 3318-3322, https://doi.org/10.1021/nl901596m
- **TORSI, L. ; MAGLIULO, M. ; MANOLI, K. ; PALAZZO, G.** Organic Field-Effect Transistor Sensors: A Tutorial Review. *Chem. Soc. Rev.,* 2013, vol. 42 (22), 8612-8628, https://doi.org/10.1039/C3CS60127G
- **TIBALDI, A. ; FILLAUD, L. ; ANQUETIN, G. ; WOYTASIK, M. ; ZRIG, S. ; PIRO, B. ; MATTANA, G. ; NOËL, V.** Electrolyte-Gated Organic Field-Effect Transistors (EGOFETs) as Complementary Tools to Electrochemistry for the Study of Surface Processes. *Electrochemistry Communications,* 2019, vol. 98, 43-46, https://doi.org/10.1016/j.elecom.2018.10.022
- **GODA, T. ; MAEDA, Y. ; MIYAHARA, Y.** Simultaneous Monitoring of Protein Adsorption Kinetics Using a Quartz Crystal Microbalance and Field-Effect Transistor Integrated Device. *Anal. Chem.,* 2012, vol. 84 (17), 7308-7314, https://doi.org/10.1021/ac3015092
- **OKUDA, S. ; ONO, T. ; KANAI, Y. ; IKUTA, T. ; SHIMATANI, M. ; OGAWA, S. ; MAEHASHI, K. ; INOUE, K. ; MATSUMOTO, K.** Graphene Surface Acoustic Wave Sensor for Simultaneous Detection of Charge and Mass. *ACS Sens.,* 2018, vol. 3 (1), 200-204, https://doi.org/10.1021/acssensors.7b00851
- **KOJORI, H. S. ; JI, Y. ; PAIK, Y. ; BRAUNSCHWEIG, A. B. ; KIM, S. J.** Monitoring Interfacial Lectin Binding with Nanomolar Sensitivity Using a Plasmon Field Effect Transistor. *Nanoscale,* 2016, vol. 8 (39), 17357-17364, https://doi.org/10.1039/C6NR05544C
- **DECHER, G. ; ECKLE, M. ; SCHMITT, J. ; STRUTH, B.** Layer-by-Layer Assembled Multicomposite Films. *Current Opinion in Colloid & Interface Science,* 1998, vol. 3 (1), 32-39, https://doi.org/10.1016/S1359-0294(98)80039-3
- **DUBAS, S. T. ; SCHLENOFF, J. B.** Factors Controlling the Growth of Polyelectrolyte Multilayers. *Macromolecules,* 1999, vol. 32 (24), 8153-8160, https://doi.org/10.1021/ma981927a
- **AI, H. ; JONES, S. A. ; LVOV, Y. M.** Biomedical Applications of Electrostatic Layer-by-Layer Nano-Assembly of Polymers, Enzymes, and Nanoparticles. *Cell Biochem Biophys,* 2003, vol. 39 (1), 23, https://doi.org/10.1385/CBB:39:1:23
- **PICCININI, E. ; BLIEM, C. ; REINER-ROZMAN, C. ; BATTAGLINI, F. ; AZZARONI, O. ; KNOLL, W.** Enzyme-Polyelectrolyte Multilayer Assemblies on Reduced Graphene Oxide Field-Effect Transistors for Biosensing Applications. *Biosensors and Bioelectronics,* 2017, vol. 92, 661-667, https://doi.org/10.1016/j.bios.2016.10.035

- **PICCININI, E. ; ALBERTI, S. ; LONGO, G. S. ; BERNINGER, T. ; BREU, J. ; DOSTALEK, J. ; AZZARONI, O. ; KNOLL, W.** Pushing the Boundaries of Interfacial Sensitivity in Graphene FET Sensors: Polyelectrolyte Multilayers Strongly Increase the Debye Screening Length. *J. Phys. Chem. C,* 2018, vol. 122 (18), 10181-10188, https://doi.org/10.1021/acs.jpcc.7b11128
- **MICHEL, M. ; TAYLOR, A. ; SEKOL, R. ; PODSIADLO, P. ; HO, P. ; KOTOV, N. ; THOMPSON, L.** High-Performance Nanostructured Membrane Electrode Assemblies for Fuel Cells Made by Layer-By-Layer Assembly of Carbon Nanocolloids. *Advanced Materials,* 2007, vol. 19 (22), 3859-3864, https://doi.org/10.1002/adma.200701219
- **WU, F. ; LI, J. ; SU, Y. ; WANG, J. ; YANG, W. ; LI, N. ; CHEN, L. ; CHEN, S. ; CHEN, R. ; BAO, L.** Layer-by-Layer Assembled Architecture of Polyelectrolyte Multilayers and Graphene Sheets on Hollow Carbon Spheres/Sulfur Composite for High-Performance Lithium-Sulfur Batteries. *Nano Lett.,* 2016, vol. 16 (9), 5488-5494, https://doi.org/10.1021 /acs.nanolett.6b01981
- **ARIGA, K. ; LVOV, Y. M. ; KAWAKAMI, K ; JI, Q. ; HILL, J. P.** Layer-by-Layer Self-Assembled Shells for Drug Delivery. *Advanced Drug Delivery Reviews,* 2011, vol. 63 (9), 762-771, https://doi.org/10.1016/j.addr.2011.03.016
- **GU, J.-E. ; LEE, S. ; STAFFORD, C. M. ; LEE, J. S. ; CHOI, W. ; KIM, B.-Y. ; BAEK, K.-Y. ; CHAN, E. P. ; CHUNG, J. Y. ; BANG, J.** Molecular Layer-by-Layer Assembled Thin-Film Composite Membranes for Water Desalination. *Advanced Materials,* 2013, vol. 25 (34), 4778-4782, https://doi.org/10.1002/adma.201302030
- **RICHARDSON, J. J. ; CUI, J. ; BJÖRNMALM, M. ; BRAUNGER, J. A. ; EJIMA, H. ; CARUSO, F.** Innovation in Layer-by-Layer Assembly. *Chem. Rev.,* 2016, vol. 116 (23), 14828-14867, https://doi.org/10.1021/acs.chemrev.6b00627
- **RICHARDSON, J. J. ; BJORNMALM, M. ; CARUSO, F.** Technology-Driven Layer-by-Layer Assembly of Nanofilms. *Science,* 2015, vol. 348 (6233), aaa2491-aaa2491, https://doi.org/10.1126/science.aaa2491
- **ASPNES, D. E.** Local-field Effects and Effective-medium Theory: A Microscopic Perspective. *American Journal of Physics,* 1982, vol. 50 (8), 704-709, https://doi.org/10.1119/1.12734
- **OGIEGLO, W. ; WORMEESTER, H. ; EICHHORN, K.-J. ; WESSLING, M. ; BENES, N. E.** In Situ Ellipsometry Studies on Swelling of Thin Polymer Films: A Review. *Progress in Polymer Science,* 2015, vol. 42, 42-78, https://doi.org/10.1016/j.progpolymsci.2014.09.004
- **PICCININI, E. ; BLIEM, C. ; GIUSSI, J. M. ; KNOLL, W. ; AZZARONI, O.** Reversible Switching of the Dirac Point in Graphene Field-Effect Transistors Functionalized with Responsive Polymer Brushes. *Langmuir,* 2019, https://doi.org/10.1021/acs.langmuir.9b00910
- **TANG, K. ; BESSELING, N. A. M.** Formation of Polyelectrolyte Multilayers: Ionic Strengths and Growth Regimes. *Soft Matter,* 2016, vol. 12 (4), 1032-1040, https://doi.org/10.1039/C5SM02118A
- **FEIJTER, J. A. D. ; BENJAMINS, J. ; VEER, F. A.** Ellipsometry as a Tool to Study the Adsorption Behavior of Synthetic and Biopolymers at the Air-Water Interface. *Biopolymers,* 1978, vol. 17 (7), 1759-1772, https://doi.org/10.1002/bip.1978.360170711
- **STENBERG, E. ; PERSSON, B. ; ROOS, H. ; URBANICZKY, C.** Quantitative Determination of Surface Concentration of Protein with Surface Plasmon Resonance Using Radiolabeled Proteins. *Journal of Colloid and Interface Science,* 1991, vol. 143 (2), 513-526, https://doi.org/10.1016/0021-9797(91)90284-F
- **PERLMANN, G. E. ; LONGSWORTH, L. G.** The Specific Refractive Increment of Some Purified Proteins. *J. Am. Chem. Soc.,* 1948, vol. 70 (8), 2719-2724, https://doi.org/10.1021/ja01188a027
- **WANG, Y. Y. ; BURKE, P. J.** Polyelectrolyte Multilayer Electrostatic Gating of Graphene Field-Effect Transistors. *Nano research,* 2014, vol. 7 (11), 1650-1658
- **DONATH, E. ; VARDANYAN, I ; MEYER, S ; MURRAY, R. A. ; MOYA, S. E. ; NAVOYAN, Z. ; ARAKELYAN, V. A.** Typical Diffusion Monitored by Flow Cytometry: Slow Diffusion of Small Molecules in Polyelectrolyte Multilayers. *Nanoscale,* 2018, vol. 10 (2), 765-772, https://doi.org/10.1039/C7NR08405F
- **WONG, J. E. ; ZASTROW, H. ; JAEGER, W. ; VON KLITZING, R.** Specific Ion versus Electrostatic Effects on the Construction of Polyelectrolyte Multilayers †. *Langmuir,* 2009, vol. 25 (24), 14061-14070, https://doi.org/10.1021/la901673u
- **KO, Y. H. ; KIM, Y. H. ; PARK, J. ; NAM, K. T. ; PARK, J. H. ; YOO, P. J.** Electric-Field-Assisted Layer-by-Layer Assembly of Weakly Charged Polyelectrolyte Multilayers. *Macromolecules,* 2011, vol. 44 (8), 2866-2872
- **KIM, Y.-T. ; LEE, S. ; PARK, S. ; LEE, C. Y.** Graphene Chemiresistors Modified with Functionalized Triphenylene for Highly Sensitive and Selective Detection of Dimethyl Methylphosphonate. *RSC Advances,* 2019, vol. 9 (58), 33976-33980
- **SUI, Z. ; SCHLENOFF, J. B.** Phase Separations in PH-Responsive Polyelectrolyte Multilayers: Charge Extrusion versus Charge Expulsion. *Langmuir,* 2004, vol. 20 (14), 6026-6031, https://doi.org/10.1021/la0495985

- **KFOS, J. S.** Dendritic Polyelectrolytes Revisited through the Poisson-Boltzmann-Flory Theory and the Debye-Hückel Approximation. *Phys. Chem. Chem. Phys.,* 2018, vol. 20 (4), 2693-2703, https://doi.org/10.1039/C7CP07138H
- **DAI, J. ; BALACHANDRA, A. M. ; LEE, J. I. ; BRUENING, M. L.** Controlling Ion Transport through Multilayer Polyelectrolyte Membranes by Derivatization with Photolabile Functional Groups. *Macromolecules,* 2002, vol. 35 (8), 3164-3170, https://doi.org/10.1021/ma011633g
- **SONG, L. ; SUN, W. ; GAO, J.** Time Dependent Chloride Diffusion Coefficient in Concrete. *J. Wuhan Univ. Technol.-Mat. Sci. Edit.,* 2013, vol. 28 (2), 314-319, https://doi.org/10.1007/s11595-013-0685-6
- **TYBRANDT, K. ; ZOZOULENKO, I. V ; BERGGREN, M.** Chemical Potential-Electric Double Layer Coupling in Conjugated Polymer-Polyelectrolyte Blends. *Sci. Adv.,* 2017, vol. 3 (12), eaao3659, https://doi.org/10.1126/sciadv.aao3659
- **SHIRINSKAYA, A. ; HOROWITZ, G. ; RIVNAY, J. ; MALLIARAS, G. ; BONNASSIEUX, Y.** Numerical Modeling of an Organic Electrochemical Transistor. *Biosensors,* 2018, vol. 8 (4), 103, https://doi.org/10.3390/bios8040103
- **ITURRI RAMOS, J. J. ; STAHL, S. ; RICHTER, R. P. ; MOYA, S. E.** Water Content and Buildup of Poly(Diallyldimethylammonium Chloride)/Poly(Sodium 4-Styrenesulfonate) and Poly(Allylamine Hydrochloride)/Poly(Sodium 4-Styrenesulfonate) Polyelectrolyte Multilayers Studied by an in Situ Combination of a Quartz Crystal Microbalance with Dissipation Monitoring and Spectroscopic Ellipsometry. *Macromolecules,* 2010, vol. 43 (21), 9063-9070, https://doi.org/10.1021/ma1015984
- **ZHOU, H.-X.** Diffusion-Influenced Transport of Ions across a Transmembrane Channel with an Internal Binding Site. *J. Phys. Chem. Lett.,* 2010, vol. 1 (13), 1973-1976, https://doi.org/10.1021/jz100683t
- **SCHOTTEL, B. L. ; CHIFOTIDES, H. T. ; DUNBAR, K. R.** Anion-$\pi$ Interactions. *Chem. Soc. Rev.,* 2008, vol. 37 (1), 68-83, https://doi.org/10.1039/B614208G
- **TANASE, C. ; MEIJER, E. ; BLOM, P. ; DE LEEUW, D.** Local Charge Carrier Mobility in Disordered Organic Field-Effect Transistors. *Organic electronics,* 2003, vol. 4 (1), 33-37
- **CASALINI, S. ; BORTOLOTTI, C. A. ; LEONARDI, F. ; BISCARINI, F.** Self-Assembled Monolayers in Organic Electronics. *Chemical Society Reviews,* 2017, vol. 46 (1), 40-71
- **CARDON, F. ; GOMES, W.** On the Determination of the Flat-Band Potential of a Semiconductor in Contact with a Metal or an Electrolyte from the Mott-Schottky Plot. *Journal of Physics D: Applied Physics,* 1978, vol. 11 (4), L63
- **LOWE, B. M. ; SKYLARIS, C.-K. ; GREEN, N. G. ; SHIBUTA, Y. ; SAKATA, T.** Molecular Dynamics Simulation of Potentiometric Sensor Response: The Effect of Biomolecules, Surface Morphology and Surface Charge. *Nanoscale,* 2018, vol. 10 (18), 8650-8666
- **SCHERER, P. ; FISCHER, S.** Theoretical Molecular Biophysics. *Biological and Medical Physics, Biomedical Engineering,* 2010
- **CHEN, Y. ; ZHANG, H. ; FENG, Z. ; ZHANG, H. ; ZHANG, R. ; YU, Y. ; TAO, J. ; ZHAO, H. ; GUO, W. ; PANG, W.** Chemiresistive and Gravimetric Dual-Mode Gas Sensor toward Target Recognition and Differentiation. *ACS applied materials & interfaces,* 2016, vol. 8 (33), 21742-21749
- **MACCHIA, E. ; PICCA, R. A. ; MANOLI, K. ; DI FRANCO, C. ; BLASI, D. ; SARCINA, L. ; DITARANTO, N. ; CIOFFI, N. ; ÖSTERBACKA, R. ; SCAMARCIO, G.** About the Amplification Factors in Organic Bioelectronic Sensors. *Materials Horizons,* 2020
- **PALAZZO, G. ; DE TULLIO, D. ; MAGLIULO, M. ; MALLARDI, A. ; INTRANUOVO, F. ; MULLA, M. Y. ; FAVIA, P. ; VIKHOLM-LUNDIN, I. ; TORSI, L.** Detection Beyond Debye's Length with an Electrolyte-Gated Organic Field-Effect Transistor. *Advanced Materials,* 2015, vol. 27 (5), 911-916
- **MACCHIA, E. ; MANOLI, K. ; HOLZER, B. ; DI FRANCO, C. ; GHITTORELLI, M ; TORRICELLI, F. ; ALBERGA, D. ; MANGIATORDI, G. F. ; PALAZZO, G. ; SCAMARCIO, G.** Single-Molecule Detection with a Millimetre-Sized Transistor. *Nature communications,* 2018, vol. 9 (1), 1-10
- **MACCHIA, E. ; GIORDANO, F. ; MAGLIULO, M. ; PALAZZO, G. ; TORSI, L.** An Analytical Model for Bio-Electronic Organic Field-Effect Transistor Sensors. *Applied Physics Letters,* 2013, vol. 103 (10
- **MANOLI, K. ; MAGLIULO, M. ; MULLA, M. Y. ; SINGH, M. ; SABBATINI, L. ; PALAZZO, G. ; TORSI, L.** Printable Bioelectronics to Investigate Functional Biological Interfaces. *Angewandte Chemie International Edition,* 2015, vol. 54 (43), 12562-12576
- **SHIRINSKAYA, A. ; HOROWITZ, G. ; RIVNAY, J. ; MALLIARAS, G. G. ; BONNASSIEUX, Y.** Numerical Modeling of an Organic Electrochemical Transistor. *Biosensors,* 2018, vol. 8 (4), 103
- *Fundamentals of On-Resistance in Load Switches,* http://www.ti.com/lit/an/slva771/slva771.pdf.
- **LI, M. ; LIU, C. ; XIE, Y. ; CAO, H. ; ZHAO, H. ; ZHANG, Y.** The Evolution of Surface Charge on Graphene Oxide during the Reduction and Its Application in Electroanalysis. *Carbon,* 2014, vol. 66, 302-311, https://doi.org/10.1016/j.carbon.2013.09.004

- **KERGOAT, L. ; HERLOGSSON, L. ; PIRO, B. ; PHAM, M. C ; HOROWITZ, G. ; CRISPIN, X. ; BERGGREN, M.** Tuning the Threshold Voltage in Electrolyte-Gated Organic Field-Effect Transistors. *Proceedings of the National Academy of Sciences,* 2012, vol. 109 (22), 8394-8399
- **TIBALDI, A. ; FILLAUD, L. ; ANQUETIN, G. ; WOYTASIK, M. ; ZRIG, S. ; PIRO, B. ; MATTANA, G. ; NOËL, V.** Electrolyte-Gated Organic Field-Effect Transistors (EGOFETs) as Complementary Tools to Electrochemistry for the Study of Surface Processes. *Electrochemistry Communications,* 2019, vol. 98, 43-46
- **EIJKEL, J. C. ; VAN DEN BERG, A.** Nanofluidics and the Chemical Potential Applied to Solvent and Solute Transport. *Chemical Society Reviews,* 2010, vol. 39 (3), 957-973
- **KO, Y. H. ; KIM, Y. H ; PARK, J. ; NAM, K. T. ; PARK, J. H ; YOO, P. J.** Electric-Field-Assisted Layer-by-Layer Assembly of Weakly Charged Polyelectrolyte Multilayers. *Macromolecules,* 2011, vol. 44 (8), 2866-2872
- **HAGENEDER, S. ; BAUCH, M ; DOSTALEK, J.** Plasmonically Amplified Bioassay - Total Internal Reflection Fluorescence vs. Epifluorescence Geometry. *Talanta,* 2016, 156-157, 225-231, https://doi.org/10.1016/j.talanta.2016.05.023
- **LIEDBERG, B. ; NYLANDER, C. ; LUNSTRÖM, I.** *Sensors and Actuators,* 1983, vol. 4, 299-304
- **ARGHIR, I. ; DELPORT, F. ; SPASIC, D. ; LAMMERTYN, J.** *New Biotechnol.,* 2015, vol. 32, 473-484
- **CRAMER, T. ; KYNDIAH, A. ; MURGIA, M. ; LEONARDI, F. ; CASALINI, S. ; BISCARINI, F.** *Appl. Phys. Lett.,* 2012, vol. 100, 143302
- **MULLA, M. Y. ; TUCCORI, E. ; MAGLIULO, M. ; LATTANZI, G. ; PALAZZO, G. ; PERSAUD, K. ; TORSI, L.** *Nat. Commun,* 2015, vol. 6, 6010
- **ARGHIR, I. ; SPASIC, D. ; VERLINDEN, B. E. ; DELPORT, F. ; LAMMERTYN, J.** *Sensors and Actuators B,* 2015, vol. 216, 518-526
- **DAEMS, D. ; PFEIFER, W. ; RUTTEN, I. ; SACCÀ, B. ; SPASIC, D. ; LAMMERTYN, J.** *ACS Appl. Mater. Interfaces,* 2018, vol. 10, 23539-23547
- **POLLET, J. ; DELPORT, F. ; JANSSEN, K. P. F. ; JANS, K. ; MAES, G. ; PFEIFFER, H. ; WEVERS, M. ; LAMMERTYN, J.** *Biosensors and Bioelectronics,* 2009, vol. 25, 864-869
- **LU, J. ; VAN STAPPEN, T. ; SPASIC, D. ; DELPORT, F. ; VERMEIRE, S. ; GILS, A. ; LAMMERTYN, J.** *Biosensors and Bioelectronics,* 2016, vol. 79, 173-179
- **PEETERS, P. ; DAEMS, D. ; VAN DER DONCK, T. ; DELPORT, F. ; LAMMERTYN, J.** *ACS Appl. Mater. Interfaces,* 2019, vol. 11, 6759-6768
- **SHANKARAN, D. R. ; MIURA, N.** *J. Phys. D: Appl. Phys.,* 2007, vol. 40, 7187
- **JORGENSON, R. C. ; YEE, S. S.** *Sensors and Actuators B: Chemical,* 1993, vol. 12, 213-220
- **ASPERMAIR, P. ; RAMACH, U. ; LECHNER, B. ; FOSSATI, S. ; AZZARONI, O. ; DOSTALEK, J. ; SZUNERITS, S. ; KNOLL, W. ; BINTINGER, J.** *Dual Monitoring of Surface Reactions in Real-time by Combined Surface-Plasmon Resonance and Field-Effect Transistor Interrogation*
- *Applied BioPhysics, https://applied-biophysics-inc.mvshopify.com/collections/96-well-arravs/products/96w20idf-pet*
- **SLAVIK, R. ; HOMOLA, J. ; BRYNDA, E.** *Biosensor and Bioelectronics,* 2002, 591-595
- **KAUSHIK, S. ; TIWARI, U. K. ; DEEP, A. ; SINHA, R. K.** *Scientific Reports,* 2019, vol. 9 (6987
- **LIU, Q. ; LIU, Y. ; CHEN, S. ; WANG, F. ; PENG, W.** *Sensors,* 2017, vol. 17, 2797
- **NGUYEN, T. T. ; BEA, S. O. ; KIM, D. M. ; YOON, W. J. ; PARK, J.-W. ; AN, S. S. A. ; JU, H.** *International Journal of Nanomedicine,* 2015, vol. 10, 155-163
- **KANT, R. ; TABASSUM, R. ; GUPTA, B. D.** *IEEE Photonics Technology Letters,* 2016, vol. 28
- **VERMA, R. ; GUPTA, B. D.** *Sensors and Actuators B,* 2013, vol. 177, 279-285
- **SHRIVASTAV, A. M. ; MISHRA, S. K. ; GUPTA, B. D.** *Sensors and Actuators B,* 2015, vol. 212, 404-410
- **CHEN, Y. ; YU, Y. ; LI, X. ; ZHOU, H. ; HONG, X ; GENG, Y.** *Sensors and Actuators B,* 2016, vol. 226, 412-418
- **AHN, J. H. ; SEONG, T. Y. ; KIM, W. M. ; LEE, T. S. ; KIM, I. ; LEE, K.-S.** *Optics Express,* 2012, vol. 20, 21729-21738
- **USHA, S. P. ; SHRIVASTAV, A. M. ; GUPTA, B. D.** *Biosensors and Bioelectronics,* 2016, vol. 85, 986-995
- **HSU, W.-T. et al.** *Analytica Chimica Acta,* 2011, vol. 697, 75-82
- **KAUSHIK, S. ; TIWARI, U. K. ; PAL, S. S. ; SINHA, R. K.** *Biosensors and Bioelectronics,* 2019, vol. 126, 501-509
- **SINGH, S. ; MISHRA, S. K. ; GUPTA, B. D.** *Sensors and Actuators A: Physical,* 2013, vol. 193, 136-140
- **SRIVASTAVA, S. K. et al.** *Biosens J,* 2015, vol. 4
- **KANT, R.** *Microchimica Acta,* 2020, vol. 187
- **LIU, Y. ; CHEN, S. ; CHENG, F. ; WANG, H. ; PENG, W.** *Scientific Reports,* 2015, vol. 5 (12864
- **KANT, R. ; TABASSUM, R. ; GUPTA, B. D.** *Biosensors and Bioelectronics,* 2018, vol. 99, 637-645
- **KIM, H.-M. ; PARK, J.-H. ; JEONG, D. H. ; LEE, H.-Y. ; LEE, S.-K.** *Sensors & Actuators: B. Chemical,* 2018, vol. 273, 891-898

- YANASE, Y. ; ARAKI, A. ; SUZUKI, H ; TSUTSUI, T. ; KIMURA, T. ; OKAMOTO, K. ; NAKATANI, T. ; HIRAGUN, T. ; HIDE, M. *Biosensors and Bioelectronics,* 2010, vol. 25, 1244-1247
- AHN, H. ; SONG, H. ; CHOI, J.-R. ; KIM, K. *Sensors,* 2018, vol. 18, 98
- ONG, B. H. ; YUAN, X. ; TJIN, S. C. ; ZHANG, J. ; NG, H. M. *Sensors and Actuators B,* 2006, vol. 114, 1028-1034
- CHEN, Y. ; YU, Y. ; LI, X. ; TAN, Z. ; GENG, Y. *Plasmonics,* 2015, vol. 10, 1801-1808
- WANG, Y. ; MENG, S. ; LIANG, Y. ; LI, L. ; PENG, W. *Photonic Sensors,* 2013, vol. 3, 202-207
- SARID, D. *Phys. Rev. Lett.,* 1982, vol. 48, 446
- NENNINGER, G. G. ; TOBISKA, P. ; HOMOLA, J. ; YEE, S. S. *Sensors and Actuators B,* 2001, vol. 74, 145-151
- HALL, W. P ; MODICA, J. ; ANKER, J. ; LIN, Y. ; MRKSICH, M. ; VAN DUYNE, R. P. *Nano Lett.,* 2011, vol. 11, 1098-1105
- KIM, S. ; CHENG, N. ; JEONG, J.-R. ; JANG, S.-G. ; YANG, S.-M. ; HUCK, W. T. S. *Chem. Commun.,* 2008, vol. 31, 3666-3668
- SEPÚLVEDA, B. ; ANGELOMÉ, P. C. ; LECHUGA, L. M. ; LIZ-MARZÁN, L. *Nanotoday,* 2009, vol. 4, 244-251
- MULLEN, K. I. ; CARRON, K. T. *Anal Chem,* 1991, vol. 63, 2196-2199
- MERIAUDEAU, F. ; WIG, A. ; PASSIAN, A. ; DOWNEY, T. ; BUNCICK, M. ; FERRELL, T. L. *Sens Actuators, B: Chem,* 2000, vol. 69, 51-57
- MITSUI, K. ; HANDA, Y. ; ; KAJIKAWA, K. *Appl Phys Lett,* 2004, vol. 85, 4231-4233
- JEONG, H-H. ; ERDENE, N. ; LEE, S-K. ; JEONG, D-H. ; PARK, J-H. *Optice,* 2011, vol. 50, 124405-124408
- LIN, T-J. ; LOU, C-T. *J Supercrit Fluids,* 2007, vol. 41, 317-325
- SCIACCA, B. ; MONRO, T. M. *Langmuir,* 2014, vol. 30, 946-954
- TU, H. ; SUN, T. ; GRATTAN, K. T. *IEEE Sens J,* 2013, vol. 13, 2192-2199
- STEWART, M. E. ; ANDERTON, C. R. ; THOMPSON, L. B. ; MARIA, J. ; GRAY, S. K. ; ROGERS, J. A. et al. *Chem Rev,* 2008, vol. 108, 494-521
- HENRY, A.-I. ; BINGHAM, J. M. ; RINGE, E. ; MARKS, L. D. ; SCHATZ, G. C. ; VAN DUYNE, R. P. *J Phys Chem C,* 2011, vol. 115, 9291-9305
- VALSECCHI, C. ; BROLO, A. G. *Langmuir,* 2013, vol. 29, 5638-5649
- HUA, F. ; SUN, Y. ; GAUR, A. ; MEITL, M. A. ; BILHAUT, L. ; ROTKINA, L. et al. *Nano Lett,* 2004, vol. 4, 2467-2471
- KIM, B. J. ; FLAMMA, J. W. ; TEN HAVE, E. S. ; GARCIA-PARAJO, M. F. ; VAN HULST, N. F. ; BRUGGER, J. *J Microsc,* 2001, vol. 202, 16-21
- D.J. LIPOMI ; R.V. MARTINEZ ; M.A. KATS ; S.H. KANG ; P. KIM ; J. AIZENBERG et al. *Nano Lett,* 2010, vol. 11, 632-636
- P. JIA ; J. YANG. *Nanoscale,* 2014, vol. 6, 8836-8843
- P. JIA ; J. YANG. *Appl Phys Lett,* 2013, vol. 102, 243107
- J. HENZIE ; M.H. LEE ; T.W. ODOM. *Nat Nanotechnol,* 2007, vol. 2, 549-554
- S. SCHEERLINCK ; P. DUBRUEL ; P. BIENSTMAN ; E. SCHACHT ; D. VAN THOURHOUT ; R. BAETS. *J Lightwave Technol,* 2009, vol. 27, 1415-1420
- S. SCHEERLINCK ; D. TAILLAERT ; D. VAN THOURHOUT ; R. BAETS. *Appl Phys Lett,* 2008, vol. 92, 031104
- G. KOSTOVSKI ; U. CHINNASAMY ; S. JAYAWARDHANA ; P.R. STODDART ; A. MITCHELL. *Adv Mater,* 2011, vol. 23, 531-535
- S. CHEN ; L. HAN ; A. SCHÜLZGEN ; H. LI ; L. LI ; J.V. MOLONEY et al. *Opt Express,* 2008, vol. 16, 13016-13023
- Y. LIN ; Y. ZOU ; Y. MO ; J. GUO ; R.G. LINDQUIST. *Sensors (Basel),* 2010, vol. 10, 9397-9406
- A. DHAWAN ; M. GERHOLD ; A. MADISON ; J. FOWLKES ; P.E. RUSSELL ; T. VO-DINH et al. *Scanning,* 2009, vol. 31, 139-146
- A. DHAWAN ; M.D. GERHOLD ; J.F. MUTH. *IEEE Sens J,* 2008, vol. 8, 942-950
- A. DHAWAN ; J.F. MUTH. *Mater Sci Eng B,* 2008, vol. 149, 237-241
- A. DHAWAN ; J.F. MUTH ; D.N. LEONARD ; M.D. GERHOLD ; J. GLEESON ; T. VO-DINH et al. *J Vac Sci Technol B,* 2008, vol. 26, 2168-2173
- BERMUDEZ, V. M. ; BERRY, A. D. ; KIM, H. ; PIQUÉ, A. *Langmuir,* 2006, vol. 22, 11113-11125
- AZIZ, M. A. ; PATRA, S. ; YANG, H. *Chem. Commun.,* 2008, vol. 38, 4607-4609
- KOH, S. E. ; MCDONALD, K. D. ; HOLT, D. H. ; DULCEY, C. S. ; CHANEY, J. A. ; PEHRSSON, P. E. *Langmuir,* 2006, vol. 22, 6249-6255
- LI, Y. ; GIESBERS, M. ; GERTH, M. ; ZUILHOF, H. *Langmuir,* 2012, vol. 28, 12509-12517
- GAO, N ; XU, Z. ; WANG, F. ; DONG, S. *Electroanalysis,* 2007, vol. 19, 1655-1660
- KANG, M.-S. ; MA, H. ; YIP, H.-L. ; JEN, A. K.-Y. *J. Mater. Chem.,* 2007, vol. 17, 3489-3492
- GROCHOWSKA, K. ; SIUZDAK, K. ; KARCZEWSKI, J. ; SLIWINSKI, G. *Appl. Surf. Sci. B,* 2015, vol. 357, 1684-1691
- GROCHOWSKA, K. ; SUIZDAK, K. ; SLIWINSKI, J. *Eur. J. Inorg. Chem.,* 2015, vol. 7, 1275-1281
- WANG, J. ; CAO, X. ; WANG, X. ; YANG, S. ; WANG, R. *Electrochimica Acta,* 2014, vol. 138, 174-186
- CHANG, G. ; ZHANG, J. ; OYAMA, M. ; HIRAO, K. *J. Phys. Chem. B,* 2005, vol. 109, 1204-1209

- **PRUNA, R. ; PALACIO, F. ; MARTINEZ, M. ; BLÁZQUEZ, O.; HERNÁNDEZ, S. ; GARRIDO, B. ; LÓPEZ, M.** *Interface Focus,* 2016, vol. 6, 20160056
- **ZHENG, Y. et al.** *Journal of Physical Chemistry C,* 2016, vol. 120, 20040-20048
- **KLAUK, H.** Organic Electronics: Materials, Manufacturing, and Applications. Wiley, 2006
- **KLAUK, H.** Organic Electronics II: More Materials and Applications. John Wiley & Sons, 2012, vol. 2
- **MEI, J. ; DIAO, Y. ; APPLETON, A. L. ; FANG, L. ; BAO, Z.** Integrated Materials Design of Organic Semiconductors for Field-Effect Transistors. *Journal of the American Chemical Society,* 2013, vol. 135 (18), 6724-6746
- *Basic structure of OFET, http://www.cstf.kyushu-u.ac.jp/~adachilab/research_b_e.html*
- **ANTHONY, J. E.** The Larger Acenes: Versatile Organic Semiconductors. *Angew. Chem. Int. Ed.,* 2008, vol. 47 (3), 452-483, https://doi.org/10.1002/anie.200604045
- **DENG, W.-Q. ; GODDARD, W. A.** Predictions of Hole Mobilities in Oligoacene Organic Semiconductors from Quantum Mechanical Calculations †. *J. Phys. Chem. B,* 2004, vol. 108 (25), 8614-8621, https://doi.org/10.1021/jp0495848
- **CHENG, Y. C. ; SILBEY, R. J. ; DA SILVA FILHO, D. A. ; CALBERT, J. P ; CORNIL, J. ; BRÉDAS, J. L.** Three - Dimensional Band Structure and Bandlike Mobility in Oligoacene Single Crystals: A Theoretical Investigation. *The Journal of Chemical Physics,* 2003, vol. 118 (8), 3764-3774, https://doi.org/10.1063/1.1539090
- **BROCKS, G. ; VAN DEN BRINK, J. ; MORPURGO, A. F.** Electronic Correlations in Oligo-Acene and - Thiopene Organic Molecular Crystals. *Phys. Rev. Lett.,* 2004, vol. 93 (14), 146405, https://doi.org/10.1103/PhysRevLett.93.146405
- **BOUDREAULT, P.-L. T. ; WAKIM, S. ; TANG, M. L. ; TAO, Y. ; BAO, Z ; LECLERC, M.** New Indolo[3,2- b]Carbazole Derivatives for Field-Effect Transistor Applications. *J. Mater. Chem.,* 2009, vol. 19 (19), 2921, https://doi.org/10.1039/b900271e
- **PARK, K. S. ; SALUNKHE, S. M. ; LIM, I. ; CHO, C.-G. ; HAN, S.-H. ; SUNG, M. M.** High-Performance Air-Stable Single-Crystal Organic Nanowires Based on a New Indolocarbazole Derivative for Field-Effect Transistors. *Adv. Mater.,* 2013, vol. 25 (24), 3351-3356, https://doi.org/10.1002/adma.201300740
- **BUNZ, U. H. F.** *The Larger N-Heteroacenes. Pure and Applied Chemistry,* 2010, vol. 82 (4), 953-968, https://doi.org/10.1351/PAC-CON-09-09-17
- **WU, Y. ; LI, Y. ; GARDNER, S. ; ONG, B. S.** Indolo[3,2- b ]Carbazole-Based Thin-Film Transistors with High Mobility and Stability. *J. Am. Chem. Soc.,* 2005, vol. 127 (2), 614-618, https://doi.org/10.1021/ja0456149
- **DONALD, K. ; J. ALAN ; J. HEEGER ; N. SERDAR ; SARICIFTCI, EBINAZAR ; B. NAMDAS.** Semiconducting and Metallic Polymers [Oxford Graduate Texts; Hardcover. Springer, 2011
- **KYMISSIS, I.** Organic Field Effect Transistors: Theory, Fabrication and Characterization. Springer Science & Business Media, 2008
- Extended Gate Field-Effect Transistor Biosensors for Point-Of-Care Testing of Uric Acid. **GUAN W. ; REED M.A.** Biosensors and Biodetection. Methods in Molecular Biology. Humana Press, 2017, vol. 1572